(19) Europäisches Patentamt
European Patent Office
Office européen des brevets

(11) EP 1 484 191 A1

(12) # EUROPEAN PATENT APPLICATION
published in accordance with Art. 158(3) EPC

(43) Date of publication:
**08.12.2004 Bulletin 2004/50**

(21) Application number: **03743454.5**

(22) Date of filing: **14.02.2003**

(51) Int Cl.[7]: **B41M 5/26**, G11B 7/24, G11B 7/004, G11B 7/0055

(86) International application number:
**PCT/IB2003/000502**

(87) International publication number:
**WO 2003/074282 (12.09.2003 Gazette 2003/37)**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **15.02.2002 JP 2002039357**

(71) Applicants:
- **Sony Corporation Tokyo 141-0001 (JP)**
- **MITSUI CHEMICALS, INC. Tokyo (JP)**

(72) Inventors:
- **TAMADA, Sakuya, c/o Sony Corporation Shinagawa-ku, Tokyo 141-0001 (JP)**
- **IWAMURA, Takashi, c/o Sony Corporation Shinagawa-ku, Tokyo 141-0001 (JP)**
- **SABI, Yuichi, c/o Sony Corporation Shinagawa-ku, Tokyo 141-0001 (JP)**
- **OYAMADA, Mitsuaki, c/o Sony Corporation Shinagawa-ku, Tokyo 141-0001 (JP)**
- **YAMAMOTO, Masanobu, c/o Sony Corporation Shinagawa-ku, Tokyo 141-0001 (JP)**
- **KOIKE, Tadashi, c/o Mitsui Chemicals, Inc. Sodegaura-shi, Chiba 299-0265 (JP)**
- **MISAWA, Tatsumi, c/o Mitsui Chemicals, Inc. Sodegaura-shi, Chiba 299-0265 (JP)**
- **OGISO, Akira, c/o Mitsui Chemicals, Inc. Sodegaura-shi, Chiba 299-0265 (JP)**
- **MARA, Ryousuke, c/o Mitsui Chemicals, Inc. Sodegaura-shi, Chiba 299-0265 (JP)**
- **TOKUHIRO, Jun, c/o Mitsui Chemicals, Inc. Sodegaura-shi, Chiba 299-0265 (JP)**
- **TSUKAHARA, Hisashi, c/o Mitsui Chemicals, Inc. Sodegaura-shi, Chiba 299-0265 (JP)**

(74) Representative: **Müller, Frithjof E., Dipl.-Ing.
Müller Hoffmann & Partner
Patentanwälte
Innere Wiener Strasse 17
81667 München (DE)**

(54) **REWRITABLE OPTICAL INFORMATION RECORDING MEDIUM AND RECORDING/REPRODUCING METHOD, RECORDING/REPRODUCING DEVICE**

(57) A rewritable optical information recording medium including a recording layer composed of an organic dye film is provided, in which recording and erasing information can be performed reversibly by laser light irradiation.

A rewritable optical information recording medium including at least one organic dye film which is substantially made of only at least one kind of organic dye compounds as a recording film is provided. The recording and erasure of information are performed by a reversible physical change of the organic dye film substance caused by laser light irradiation. Specifically, data recording is performed by a physical change locally caused by the irradiation of recording laser light, data reproduction is performed by detecting change in intensity of returned light of reproducing laser light having less power than the recording laser light, and data erasure is performed by applying at least once continuous light or pulse light having laser power more than the reproducing laser light and less than the recording laser light. The physical change is a change in shape.

EP 1 484 191 A1

FIG. 1

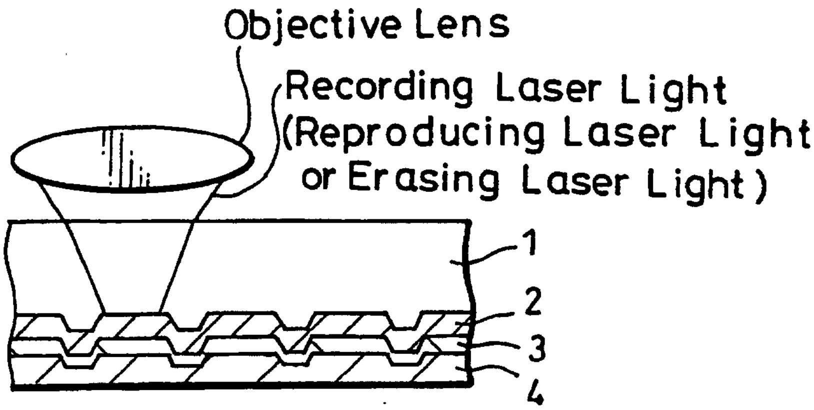
Objective Lens
Recording Laser Light
(Reproducing Laser Light
or Erasing Laser Light)
1
2
3
4

## Description

TECHNICAL FIELD

The present invention relates to a novel rewritable optical information recording medium including a recording layer made of an organic dye film, in which recording and erasing of information can be reversibly performed by irradiating laser light, and further, to a recording and reproducing method as well as a recording and reproducing apparatus in which the medium is used.

BACKGROUND ART

Lately, as optical recording media widely used on the market, there are write-once organic optical discs (so-called CD-R, DVD-R and the like), rewritable phase change optical discs (so-called CD-RW, DVD-RW and the like), and further, magneto optical discs and the like.

As regards the CD-RW and the DVD-RW, the phase change optical recording medium, is made of a chalcogen-containing material such as Te-Ge-Sb alloy or Ag-In-Sb-Te alloy; however, these alloys are toxic. Moreover, a dielectric film made of a sulfide, an oxide, or a nitride such as ZnS, ZnS-$SiO_2$, $SiO_2$, $Si_3N_4$, or AlN is required adjacent to a recording film in order to induce phase change and form and erase a recorded mark stably, and also a reflective film and the like made of Ag, Al, Ag alloy, Al alloy, or the like is required in order to improve the modulation degree (contrast) of a recording signal and thermal characteristics. Since a vacuum deposition method such as a sputtering method or the like is required to form these thin films, and the film structure of a recording medium is complicated and the thickness of each thin film must be controlled precisely, it is difficult to manufacture an inexpensive optical recording medium.

A magneto optical recording medium is conventionally made of an alloy thin film consisting of a rare-earth element such as Gd or Tb and a transition metal such as Fe, Ni, Co, or the like; however, those alloy thin films are easily oxidized by oxygen in moisture and in the air, etc. and therefore must be prevented from being exposed to the air by a protective film such as $SiO_2$ or $Si_3N_4$, which shows the difficulty with respect to the long-time recording stability. Also, since an external magnetic field is required for recording in theory, and further, the optical Kerr effect is used for the reproduction principle of recorded information, there is a disadvantage with a complicated situation in which a polarizing optical system must be used.

On the other hand, a CD-R and DVD-R are optical recording media in which recording films are made of organic dye materials; however, they are write-once type media capable of writing only once and not rewritable.

Being capable of designing and synthesizing molecules, and also superior in nontoxicity, cost performance and so forth as optical functional materials, rewritable optical recording media made of organic materials are being actively studied.

As rewritable optical recording media which use organic-based materials, photon mode type optical recording media and thermal mode (otherwise called heat mode) type optical recording media have so far been reported.

For example, of the photon mode type, there are rewritable optical recording media utilizing the photochromism of fulgide, spiropyrane and diarylethene. These rewritable optical recording media are described in detail in: Yasushi Yokoyama 'Fulgides for Memories and Switches', Chem. Rev. 2000, 100, 1717-1739; Garry Berkovic, ValeriKrongauz and Victor Weiss 'Spiropyrans and Spirooxazines for Memories and Switches', Chem. Rev. 2000, 100, 1741-1753; Masahiro Irie 'Diarylethenes for Memories and Switches', Chem. Rev. 2000, 100, 1685-1716. However, in these optical recording media, different wavelength of laser light is used for recording and reproduction, respectively.

In addition, since photochromic reaction is used in both recording and reproduction, light resistance with respect to reproducing light is low, and there are problems in stability and repeatability. Also, being of photon mode, those are highly sensitive and fast in speed but lacking in heat stability as well as in light resistance.

As a thermal mode type rewritable optical recording medium, the optical recording medium described in Japanese published unexamined patent application No.H6-60421, for example, is an optical recording medium, including a recording layer made of a shape-memory resin such as polyurethane or a styrene-butadiene copolymer which contains a light absorbent such as inorganic or organic dye or color, in which a part recorded by laser light rises to convexly protude due to thermal expansion and then cools rapidly and hardens, and when erased, light having power stronger than that at the time of recording is applied, or laser light is applied for a longer period of time than at the time of recording. Also, in Japanese published patent application No.H6-1073, an optical recording medium which uses a recording layer containing a conjugated system polymer whose conformation changes according to thermal energy and dye which has light absorption power is described.

Also, in Japanese published patent application No.H9-226249, information rewriting executed by reversibly changing cohesive power among substituents of a central metal in a metal phthalocyanine compound is proposed. Only an embodiment in which metal phthalocyanine compounds are dissolved in high molecular compounds such as polystyrene and polyamide is described.

Further, in Japanese published patent application No.H9-147414, an optical recording medium utilizing an absorbance change of a recording layer, in which a recording layer is made of a photochromism or thermochromism material and an associative dye such as an azaannulene compound, for example phthalocyanine, is proposed; however, only embodiments in which the above is mixed into high molecular compounds such"as polystyrene and polymethyl methacrylate is described.
In all those examples, recording films in which organic dye having light absorption power is mixed dispersively into or is polymerized with high molecular compounds are used, and the mixture ratio (or polymerization ratio) is 20-80%. In such cases, if the mixture ratio of light-absorbing dye dispersed in a system is low, the recording sensitivity diminishes because the amount of energy which is absorbed and converted to heat is small, and it becomes difficult to get a large modulation degree because the proportion of dye is low. On the other hand, if the mixture ratio is high, agglutination, segregation, crystallization and association of dye occur unevenly, causing a signal noise. Also, unless an appropriate high molecular compound or polymer is selected, there is a disadvantage in which the state of dispersion easily changes with time passed in preservation, even if there is a uniform dispersion at the time of deposition. Further, regarding the process of making a disc, since it is necessary to select a high molecular compound of a low moisture-absorption nature so as to gain stability in long-time preservation, the downside is that selecting a solvent which dissolves this high molecular compound and also does not attack a substrate often involves difficulties of causing the insufficient repeatability.
Also, in Japanese patent No. 3054770, a method of causing change in the crystallized state, involving reversible change in the oriented direction of molecules, with respect to a recording layer made of organic thin film-like crystals containing optical anisotropy such as fatty acid, a fatty acid derivative, a benzoic acid derivative, or n-alkane to detect differences in polarization characteristics is described; however, the crystallinity degree of those organic thin film-like crystals is uneven, so that the signal noise level tends to increase. Also, there is a problem in which a polarizing optical system is required for a recording and reproducing apparatus similarly to the case of a magneto optical disc.
It is necessary for an optical information recording medium to have appropriate recording sensitivity capable of high density recording, good reproducing performance with low noise and high modulation degree, and superb rewriting performance with a high erasure ratio and allowing many times of repetition; also in practice, it is important to have a simplified structure suitable for mass production. Further, it is desirable for the optical information recording medium to have compatibility with currently widespread optical recording media, such as a CD using a laser oscillation wavelength around 780nm, a DVD using that of 650nm or so, and also with the optical disc using a laser oscillation wavelength of 400nm or so, which is considered to be a next-generation optical disc.
The present invention has been devised in light of the problems above, in which only organic dye thin film materials are employed as recording films to also provide a rewritable optical information recording medium and further, a recording and reproducing method and a recording and reproducing apparatus, which can satisfy the abovementioned requirements.

DISCLOSURE OF INVENTION

Conventionally, as organic dyes for a write-once type organic-based optical disc, such dyes as: polymethine - based dyes, that is, cyanine-based, azulene-based and squarylium-based dyes; metal complex-based dyes, that is, metal naphthalocyanine-based, metal phthalocyanine-based, porphyrin-based, azo-based, and indoaniline-based dyes; quinone-based dyes, that is, anthraquinone-based and naphthoquinone-based dyes; and the like have been studied and some of the above have partially been put into practical use. A write-once type organic optical disc with so-called the perforating mode as the recording principle was put into practical use in an early stage of the development.
As regards organic dye optical recording materials in CD-Rs and DVD-Rs widely used of late, the recording and reproducing principle is that an organic dye recording film is thermally decomposed by energy locally obtained by laser irradiation to change the optical constant thereof, and returning light (reflectance) of reproduction laser light is changed by phase modulation or amplitude modulation of the complex reflectance; and it is generally thought that rewriting is impossible.
The inventors of the present invention and others have found that the above objectives can be achived by using an organic dye recording film in which at least one of azaannulene compounds of less than 3000 in molecular weight or of metal complexes thereof is used as an organic dye, which is not thermally decomposed when applying predetermined laser light; and also by subjecting the film to physical change such as reversible deformation as simple organic dye substance without having mixed or dispersed into high molecular compounds, with appropriately selecting irradiation conditions of beam light both at the time of recording and at the time of erasing.
The present invention is completed based on the above understandings. Specifically, a rewritable optical information recording medium according to the present invention includes at least one layer of a light-absorbing organic compound film (organic dye film) substantially composed of only at least one kind of light-absorbing organic compounds (including metal complexes thereof) (for example organic dye compounds) as a recording film, in which the recording

and erasing of information are performed by a reversible physical change (for example a change in shape such as deformation) of the organic dye film substance caused by laser light irradiation. Further, a recording and reproducing method according to the present invention is the method in which a rewritable optical information recording medium including at least one layer of a light-absorbing organic compound film substantially composed of only at least one kind of light-absorbing organic compounds (including metal complexes thereof) as a recording film, in which the recording and erasing of information are performed by a reversible physical change of the organic dye film substance caused by laser light irradiation. Further, a recording and reproducing apparatus according to the present invention is provided with a rewritable optical information recording medium including at least one layer of a light-absorbing organic compound film substantially composed of only at least one kind of light-absorbing organic compounds (including metal complexes thereof) as a recording film, in which the recording and erasing of information are performed by a reversible physical change of the organic dye film substance caused by laser light irradiation.

Recording on the information recording medium of the present invention is performed by applying laser light corresponding to the absorption wavelength of the above-mentioned light-absorbing organic compound (for example organic dye) to heat and then rapidly cool the part irradiated with the laser light. As the laser light, it is preferable to use a small-sized, lightweight semiconductor laser corresponding to the absorption wavelength of the dye used. A part of an organic dye thin film in the recording layer, which is irradiated with the laser light becomes low in viscosity as the temperature rises; and by being bent or bocoming hollow in some cases due to expansion and contraction caused by fusion or sublimation, consequently the relevant part of the film is deformed accompanied by a volume change or a mass transfer. In the case of an optical disc in which a medium rotates at a high speed, after laser light is applied for a short period of time to heating, as soon as applying the laser light is stopped the heated part is rapidly cooled with ease when the laser spot passed. At this time, if the cooling rate is equal to or more than a certain critical cooling rate, the deformed part is hardened to remain as the same shape, and thus becomes a recorded mark.

The reproduction of an information signal of the mark recorded in the above-mentioned manner can be performed by applying light having less power than the light used at the times of recording and later-mentioned erasure to detect the difference in the amount of returning light of the recorded portion and that of the unrecorded portion, similarly to the cases of the conventional CD-R and DVD-R. For example, if deformation caused by hollowing-out occurs at the recorded mark, the value of the optical constant of the hollow part stands approximately at $n = 1.0$ and $k = 0.0$ as a limit, even if a thermal decomposition reaction of organic dye does not occur, to be different from the value of the optical constant of the organic dye. Additionally, in the case accompanying a deformation such as a depression or protrusion caused by mass transfer as well, the model in which the thickness of an organic dye recording film locally changes at the recorded mark portion comes into effect, and since its optical light path length (the recording layer's refractive index x film thickness) is locally changed, a phase change of incident wave fronts of laser light occurs even when no change occurs in the above optical constant, causing a reflectance change and a diffraction phenomenon, so that the amount of the returning light is modulated. Therefore, depending on the shape of grooves in the substrate, either of the amplitude modulation mode and the phase modulation mode can be selected, so that a sufficient modulation degree (contrast) can be obtained.

Further, erasure of recorded information, that is, the recorded mark can be made by a method of heating the recorded portion and then gradually cooling it. The recorded portion or both the recorded and unrecorded portions may be heated by laser light irradiation. Accordingly, the erasure can be completed only by continuously scanning a track on which information is recorded, with laser light having more power than the laser light used on reproduction and less power than the laser light used on recording. In the case of an optical disc in which a medium rotates at a high speed, erasure can be executed by irradiating a track on which the recorded mark has been made or a part of the track with continuous laser light at least once. If the erasing light is applied continuously, the rate at which the recorded mark is cooled becomes lower than the above-mentioned critical cooling rate, which is referred to as slow cooling, a part in the vicinity of the laser spot of the recording film, whose temperature has risen, becomes low in viscosity, making mass transfer easily possible; and the deformed part is planarized, eliminating a trace of the hollow part of the recorded mark, and is hardened again once it returns to its pre-recording shape.

Note that it is desirable for the required physical deformation to occur reversibly only in the recording layer made of organic dye, in terms of its repeteted performance of recording, erasure, and recording. For this reason, it is preferable that a trace of a plastic deformation does not remain on an interface adjacent to the dye layer, which is the recording layer.

However, it is difficult to conclude that the recording principle is dependent solely on deformation, and with respect to such submicron minute parts, detailed analysis will be necessary in the future; and there is a possibility that some other physical changes such as change in the oriented state of organic dye molecules, phase change in the crystallized state and conformation change might occur concurrently with deformation. Altogether, to our surprise, we have found for the first time a rewritable optical recording medium in which reversible physical change of the above-mentioned organic dye film can be used.

BRIEF DESCRIPTION OF DRAWINGS

FIG. 1 is a schematic sectional view showing an example of a fundamental structure of a CD-R or DVD-R optical information recording medium; FIG. 2 is a schematic sectional view showing another example of a structure of an optical information recording medium according to the present invention; FIG. 3 is a schematic sectional view showing the fundamental structure of an optical information recording medium in which recording and reproduction are performed through a light-transmissive layer; FIG. 4 is an explanatory drawing showing a calculation method of the reflectance of an optical recording medium, considering multiple reflection of light in a multilayer thin film; FIG. 5 is a calculated example of the reflectance, according to the specific structural example of FIG. 3; FIG. 6 is a waveform chart showing a signal waveform (oscilloscopic image) of initial recording according to an embodiment 1; FIG. 7 is a waveform chart showing a signal waveform (oscilloscopic image) after erasure was performed, according to the embodiment 1; FIG. 8 is a waveform chart showing a signal waveform (oscilloscopic image) at the time of re-recording, according to the embodiment 1; FIG. 9 is a waveform chart showing a signal waveform (oscilloscopic image) of initial recording, according to an embodiment 2; FIG. 10 is a waveform chart showing a signal waveform (oscilloscopic image) after erasure was performed, according to the embodiment 2; FIG. 11 is a waveform chart showing a signal waveform (oscilloscopic image) at the time of re-recording, according to the embodiment 2; FIG. 12 is a waveform chart showing a signal waveform (oscilloscopic image) after recording and erasure was carried out 20 times repetitively, according to the embodiment 2; FIG. 13 is a waveform chart showing a signal waveform (oscilloscopic image) of initial recording, according to an embodiment 3; FIG. 14 is a waveform chart showing a signal waveform (oscilloscopic image) after erasure was performed, according to the embodiment 3; FIG. 15 is a waveform chart showing a signal waveform (oscilloscopic image) at the time of re-recording, according to the embodiment 3; FIG. 16 is a waveform chart showing an eye pattern (oscilloscopic image) of initial recording, according to the embodiment 3; FIG. 17 is a schematic sectional view of an optical information recording medium of an embodiment 4; FIG. 18 is a waveform chart showing a signal waveform (oscilloscopic image) of initial recording, according to an embodiment 5; FIG. 19 is a waveform chart showing a signal waveform (oscilloscopic image) after erasure was performed, according to the embodiment 5; FIG. 20 is a waveform chart showing a signal waveform (oscilloscopic image) at the time of re-recording, according to the embodiment 5; FIG. 21A is a photograph showing a deformation trace on the dye layer side when observing by SEM an exfoliated interface between a dielectric layer on a substrate side and a dye layer, after recording was performed; FIG. 21B is a photograph showing a deformation trace on the dye layer side when observing by SEM an exfoliated interface between a dielectric layer on the substrate side and a dye layer, after erasure was performed; FIG. 21C is a photograph showing a deformation trace on the dye layer side when observing by SEM an exfoliated interface between a dielectric layer on the substrate side and a dye layer, after re-recording was performed; and FIG. 21D is a photograph showing a SEM observation image of the surface of a dielectric layer when observing by SEM an exfoliated interface between a dielectric layer on the substrate side and a dye layer, after recording was performed.

BEST MODE FOR CARRYING OUT THE INVENTION

Hereinafter embodiments of the present invention will be described. It should be noted that in the followings, as a recording medium, explanation will be made with respect to an optical disc in which, for example, guide grooves, on these guide grooves a reflective film and a recording layer mainly composed of organic dye are formed on a substrate, and recording and reproduction of a signal is performed by applying blue-violet laser light of 350 to 450nm in wavelength; however, the optical recording medium of the present invention is not limited to the above shape and structure, and may be a card shape, sheet shape, or various kinds of other shapes; may have a structure without a reflective layer; and to which recording and reproduction may be performed using red laser light of 630 to 680nm in wavelength, near-infrared laser light of 750 to 850nm in wavelength, and short-wavelength laser of 350nm or less in wavelength as well.

As an example of an optical disc to which the present invention is applied, FIG. 1 shows the one in which a substrate 1, a recording layer 2, a reflective layer 3 and a protective film 4 are laminated in this order, and recording and reproduction are executed from the substrate 1 side in the optical disc of FIG. 1. Other layers may exist between the substrate 1 and the recording layer 2, between the recording layer 2 and the reflective layer 3, and between the reflective layer 3 and the protective film 4; in an example of FIG. 2, transparent protective films 5 and 6 are formed between the substrate 1 and the recording layer 2, and between the recording layer 2 and the reflective layer 3. Also, as another embodiment, there is a structure of an optical disc in which the recording and reproduction of information are performed through a light-transmissive layer of 10 to 177 $\mu$ m in thickness (hereinafter called DVR-Blue) (disclosed in Japanese published patent application No.H10-302310), for example the one, as shown in FIG. 3, in which a reflective layer 2 and a recording layer 3 are deposited in this order on a substrate 1 where guide grooves are formed, a light-transmissive layer 8 is formed on this recording layer 3 with an arbitrarily formed transparent protective film 7 in between, and the recording and reproduction of information are performed from the light-transmissive layer 8 side. Considering

the case in which the blue-violet laser light is applied through the substrate 1 as shown in FIG. 1, a transparent material, namely a polymeric material such as acrylic resin, polyethylene resin, polycarbonate resin, polyolefin resin, epoxy resin, etc. or an inorganic material such as glass, etc. is used for the substrate material, for example. On the other hand, as shown in the structure in FIG. 3, if laser irradiation is performed from the side of the light-transmissive layer 8, which is opposite to the substrate 1 side, it is not necessary for the substrate material to satisfy such optical requirements, so that it is possible to select the material from a wider range thereof. Materials capable of being injection molded, such as acrylic resin, polycarbonate resin, polyolefin resin and the like are favorable in terms of the mechanical characteristics required for the substrate and productivity. Guide grooves and/or pre-pits of 1μm or less may be formed spirally or concentrically on the surface layers of those substrates. It is preferable that the guide grooves and pre-pits be provided when the substrate is formed, and those can be made by injection molding using a stamper master, or by a thermal transfer method using a photopolymer. Note that guide grooves and/or pre-pits may be formed in the light-transmissive layer 8 in FIG. 3, and the same manner can be used. For example, in the case of the DVR-Blue, it is preferrable for the pitch and depth of the guide grooves to be selected in the range of 0.2 to 0.80μm for the pitch, and 20 to 150nm for the depth.

Materials constituting the recording layer in the optical recording medium of the present invention must have sufficient absorbency in the laser wavelength band that is paid attention to, for example the oscillation wavelength band of a semiconductor laser loaded in the recording and reproducing apparatus used, and must locally heat the recording film with irradiating laser light having predetermined energy. Light-absorbing organic compounds described in the present invention are compounds which absorb light; preferably organic compounds which cause light absorption, light emission, chemical and physical changes, etc., interacting with light in the range of 180 to 2000nm in wavelength, which are used as materials satisfying the above-mentioned conditions. As the light-absorbing organic compounds, organic dye compounds, particularly ones which interact with light in the range of wavelength of ultraviolet light, visible light, and/or near-infrared light (preferably ultraviolet light, visible light, and/or near-infrared light in the range of 350nm to 850nm in wavelength) are favorably used.

Specifically, examples of organic dye compounds of the present invention used for optical recording media of the present invention where recording is performed in oscillation wavelength bands of a blue-violet nitride-based semiconductor laser 350 to 450nm in wavelength, of the red semiconductor laser600 to 650nm in wavelength used for the DVD-R, and of the near-infrared semiconductor laser 750 to 850nm in wavelength used for the CD-R can preferably be found in the followings: azaannulene compounds; azaporphyrin compounds such as phthalocyanine, naphthalocyanine, tetraazaporphyrin, triazaporphyrin, diazaporphyrin and monoazaporphyrin; metal complexes of porphyrin compounds and the like; and mixtures of two or more out of those compounds.

Azaannulene compounds described in the present invention are such cyclic hydrocarbon compounds formed by conjugate double bonds, each including at least one azaannulene ring where at least one of the carbon atoms constituting the ring has been substituted by a nitrogen atom; and the present invention includes compounds complexed with metal atoms and/or metalloid atoms. Also, a plurality of azaannulene rings may bond to each other through one or more connecting radicals. As favorable examples of compounds, azaporphyrin-based compounds including phthalocyanine rings, naphthalocyanine rings, subphthalocyanine rings, monoazaporphyrin rings, diazaporphyrin rings, triazaporphyrin rings, tetraazaporphyrin rings, or the like; and (aza) porphyrin compounds and the like, including pyrrole ring structure, such as porphyrin-based compounds, etc. can be mentioned. Each pyrrole ring in those ring structures may have a condensed ring; and substituents on the pyrrole rings and/or the condensed rings may bond to each other through connecting radicals. As examples of condensed compounds, compounds whose benzene rings have been condensed, such as dibenzotetraazaporphyrin compounds, phthalocyanine compounds, and naphthalocyanine compounds, for example and the like can be taken. Additionally, as other examples of compounds, compounds having azaannulene rings that include structures where pyrrole rings in the ring structure are directly single-bonded to each another, such as porphycene rings and corrole rings, can be taken, for example.

Azaannulene compounds used in the present invention are preferably: compounds having monomeric structures, in which bivalent metal atoms which may have ligands, or trivalent to tetravalent metal/metalloid atoms which have substituents and/or ligands are coordinated; and compounds having in their molecules dimeric structures, in which two azaannulene rings bond to one metal atom having a central metal atom of trivalent to tetravalent. Azaannulene compounds used in the present invention also include trimeric and multimeric structures. Since azaannulene compounds of less than 3000 in molecular weight which may be metal complexes are in particular capable of arbitrarily selecting absorption wavelengths thereof with their light absorption coefficients being maintained by selecting substituents, those compounds are invaluable organic dyes which can satisfy optical constants necessary for the recording layer in the aforementioned wavelengths of the laser light.

Hereinafter, compounds for the recording layer described in the present invention will be explained in detail.

As azaannulene compounds in the present invention, compounds illustrated by General Formula (1) can be used as favorable examples.

[Chemical Formula 5]

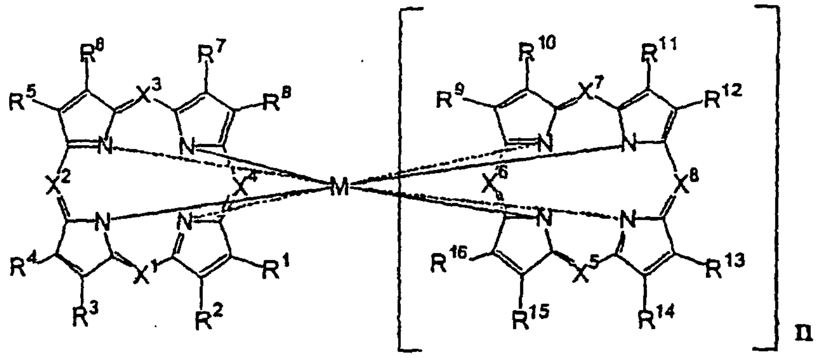

(1)

[In the formula, $R^1$ to $R^{16}$ each show individually a hydrogen atom, a halogen atom, a nitro group, a cyano group, a substituted or unsubstituted hydrocarbon radical, a substituted or unsubstituted hydroxyl group, a substituted or unsubstituted mercapto group, or a substituted or unsubstituted amino group; $X^1$ to $X^8$ each show individually a nitrogen atom, or a substituted or unsubstituted methine group; substituents in $R^1$ to $R^{16}$ and in methine groups may bond to each other through a connecting radical; and there may be contained oxygen atoms, substituted or unsubstituted sulfur atoms and substituted or unsubstituted nitrogen atoms between carbon atoms in substituted or unsubstituted hydrocarbon radicals, in hydrocarbon-substituted hydroxyl groups, in hydrocarbon-substituted mercapto groups and/or hydrocarbon-substituted amino groups. Also, n represents 0 or 1; when n is 0, M represents a bivalent metal atom which may have a ligand, or a trivalent or tetravalent metal/metalloid atom which has a substituent and/or ligand, and when n is 1, M represents a trivalent metal atom and one hydrogen atom, or a tetravalent metal atom.]

As regards compounds shown by General Formula (1) of the present invention, a hydrogen atom; a halogen atom such as a fluorine atom, a chlorine atom, a bromine atom, an iodine atom, etc.; a nitro group; a cyano group; or the like can be mentioned as each of specific examples of $R^1$ to $R^{16}$.

As specific examples of substituted or unsubstituted hydrocarbon radicals shown by $R^1$ to $R^{16}$; substituted or unsubstituted alkyl groups, aralkyl groups, aryl groups, alkenyl groups and the like; which may have oxygen atoms, substituted or unsubstituted sulfur atoms, and substituted or unsubstituted nitrogen atoms between carbon atoms in the hydrocarbon radicals; can be mentioned.

The substituted or unsubstituted alkyl groups used for $R^1$ to $R^{16}$ are: unsubstituted normal chain, branched-chain or cyclic alkyl groups of 1 to 15 in carbon number, such as methyl group, ethyl group, n-propyl group, isopropyl group, n-butyl group, iso-butyl group, sec-butyl group, t-butyl group, n-pentyl group, iso-pentyl group, 2-methylbutyl group, 1-methylbutyl group, neopentyl group, 1,2-dimethylpropyl group, 1,1-dimethylpropyl group, cyclopentyl group, n-hexyl group, 4-methylpentyl group, 3-methylpentyl group, 2-methylpentyl group, 1-methylpentyl group, 3,3-dimethylbutyl group, 2,3-dimethylbutyl group, 1,3-dimethylbutyl group, 2,2-dimethylbutyl group, 1,2-dimethylbutyl group, 1,1-dimethylbutyl group, 3-ethylbutyl group, 2-ethylbutyl group, 1-ethylbutyl group, 1,2,2-trimethylbutyl group, 1,1,2-trimethylbutyl group, 1-ethyl-2-methylpropyl group, cyclohexyl group, n-heptyl group, 2-methylhexyl group, 3-methylhexyl group, 4-methylhexyl group, 5-methylhexyl group, 2,4-dimethylpentyl group, n-octyl group, 2-ethylhexyl group, 2,5-dimethylhexyl group, 2,5,5-trimethylpentyl group, 2,4-dimethylhexyl group, 2,2,4-trimethylpentyl group, 3,5,5-trimethylhexyl group, n-nonyl group, n-decyl group, 4-ethyloctyl group, 4-ethyl-4,5-methylhexyl group, n-undecyl group, n-dodecyl group, 1,3,5,7-tetraethyloctyl group, 4-butyloctyl group, 6,6-diethyloctyl group, n-tridecyl group, 6-methyl-4-butyloctyl group, n-tetradecyl group, n-pentadecyl group, 3,5-dimethylheptyl group, 2,6-dimethylheptyl group, 2,4-dimethylheptyl group, 2,2,5,5-tetramethylhexyl group, 1-cyclopentyl-2,2-dimethylpropyl group and 1-cyclohexyl-2,2-dimethylpropyl group;

halogen-substituted alkyl groups of 1 to 10 in carbon number, such as chloromethyl group, chloroethyl group, bromoethyl group, iodoethyl group, dichloromethyl group, fluoromethyl group, trifluoromethyl group, pentafluoroethyl group, 2,2,2-trifluoroethyl group, 2,2,2-trichloroethyl group, 1,1,1,3,3,3-hexafluoro-2-propyl group, nonafluorobutyl group and perfluorodecyl group;

hydroxyl-substituted alkyl groups of 1 to 10 in carbon number, such as hydroxymethyl group, 2-hydroxyethyl group, 3-hydroxypropyl group, 4-hydroxybutyl group, 2-hydroxy-3-methoxypropyl group, 2-hydroxy-3-chloropropyl group, 2-hydroxy-3-ethoxypropyl group, 3-butoxy-2-hydroxypropyl group, 2-hydroxy-3-cyclohexyloxypropyl group, 2-hydroxypropyl group, 2-hydroxybutyl group and 4-hydroxydecalyl group;

hydroxyalkoxy-substituted alkyl groups of 2 to 10 in carbon number, such as hydroxymethoxymethyl group, hydroxyethoxyethyl group, 2-(2'-hydroxy-1'-methylethoxy)-1-methylethyl group, 2-(3'-fluoro-2'-hydroxypropoxy)ethyl

group, 2-(3'-chloro-2'-hydroxypropoxy)ethyl group and hydroxybutoxycyclohexyl group;

hydroxyalkoxyalkoxy-substituted alkyl groups of 3 to 10 in carbon number, such as hydroxymethoxymethoxymethyl group, hydroxyethoxyethoxyethyl group, [2'-(2'-hydroxy-1'-methylethoxy)-1'-methylethoxy]ethoxyethyl group, [2'-(2'-fluoro-1'-hydroxyethoxy)-1'-methylethoxy]ethoxyethyl group and [2'-(2'-chloro-1'-hydroxyethoxy)-1'-methylethoxy] ethoxyethyl group;

cyano-substituted alkyl groups of 2 to 10 in carbon number, such as cyanomethyl group, 2-cyanoethyl group, 3-cyanopropyl group, 4-cyanobutyl group, 2-cyano-3-methoxypropyl group, 2-cyano-3-chloropropyl group, 2-cyano-3-ethoxypropyl group, 3-butoxy-2-cyanopropyl group, 2-cyano-3-cyclohexylpropyl group, 2-cyanopropyl group and 2-cyanobutyl group;

alkoxy-substituted alkyl groups of 2 to 15 in carbon number, such as methoxymethyl group, ethoxymethyl group, propoxymethyl group, butoxymethyl group, methoxyethyl group, ethoxyethyl group, propoxyethyl group, butoxyethyl group, n-hexyloxyethyl group, (4-methylpentoxy) ethyl group, (1,3-dimethylbutoxy)ethyl group, (2-ethylhexyloxy)ethyl group, n-octyloxyethyl group, (3,5,5-trimethylhexyloxy)ethyl group, (2-methyl-1-isopropylpropoxy)ethyl group, (3-methyl-1-isopropylbutyloxy) ethyl group, 2-ethoxy-1-methylethyl group, 3-methoxybutyl group, (3,3,3-trifluoropropoxy) ethyl group and (3,3,3-trichloropropoxy)ethyl group;

alkoxyalkoxy-substituted alkyl groups of 3 to 15 in carbon number, such as methoxymethoxymethyl group, methoxyethoxyethyl group, ethoxyethoxyethyl group, propoxyethoxyethyl group, butoxyethoxyethyl group, cyclohexyloxyethoxyethyl group, decalyloxypropoxyethoxy group, (1,2-dimethylpropoxy)ethoxyethyl group, (3-methyl-1-isobutylbutoxy)ethoxyethyl group, (2-methoxy-1-methylethoxy)ethyl group, (2-butoxy-1-methylethoxy) ethyl group, 2-(2'-ethoxy-1'-methylethoxy)-1-methylethyl group, (3,3,3-trifluoropropoxy)ethoxyethyl group and (3,3,3-trichloropropoxy) ethoxyethyl group;

alkoxyalkoxyalkoxy-substituted alkyl groups of 4 to 15 in carbon number, such as methoxymethoxymethoxymethyl group, methoxyethoxyethoxyethyl group, ethoxyethoxyethoxyethyl group, butoxyethoxyethoxyethyl group, cyclohexyloxyethoxyethoxyethyl group, propoxypropoxypropoxyethyl group, (2,2,2-trifluoroethoxy)ethoxyethoxyethyl group and (2,2,2-trichloroethoxy)ethoxyethoxyethyl group;

acyl-substituted alkyl groups of 2 to 10 in carbon number, such as formylmethyl group, 2-oxobutyl group, 3-oxobutyl group, 4-oxobutyl group, 2,6-dioxocyclohexane-1-yl group and 2-oxo-5-t-butylcyclohexane-1-yl group;

acyloxy-substituted alkyl groups of 2 to 15 in carbon number, such as formyloxymethyl group, acetoxyethyl group, propionyloxyethyl group, butanoyloxyethyl group, valeryloxyethyl group, (2-ethylhexanoyloxy)ethyl group, (3,5,5-trimethylhexanoyloxy)ethyl group, (3,5,5-trimethylhexanoyloxy)hexyl group, (3-fluorobutyryloxy)ethyl group and (3-chlorobutyryloxy)ethyl group;

acyloxyalkoxy-substituted alkyl groups of 3 to 15 in carbon number, such as formyloxymethoxymethyl group, acetoxyethoxyethyl group, propionyloxyethoxyethyl group, valeryloxyethoxyethyl group, (2-ethylhexanoyloxy)ethoxyethyl group, (3,5,5-trimethylhexanoyl)oxybutoxyethyl group, (3,5,5-trimethylhexanoyloxy)ethoxyethyl group, (2-fluoropropionyloxy)ethoxyethyl group and (2-chloropropionyloxy)ethoxyethyl group;

acyloxyalkoxyalkoxy-substituted alkyl groups of 5 to 15 in carbon number, such as acetoxymethoxymethoxymethyl group, acetoxyethoxyethoxyethyl group, propionyloxyethoxyethoxyethyl group, valeryloxyethoxyethoxyethyl group, (2-ethylhexanoyloxy)ethoxyethoxyethyl group, (3,5,5-trimethylhexanoyloxy)ethoxyethoxyethyl group, (2-fluoropropionyloxy)ethoxyethoxyethyl group and (2-chloropropionyloxy)ethoxyethoxyethyl group;

alkoxycarbonyl-substituted alkyl groups of 3 to 15 in carbon number, such as methoxycarbonylmethyl group, ethoxycarbonylmethyl group, butoxycarbonylmethyl group, methoxycarbonylethyl group, ethoxycarbonylethyl group, butoxycarbonylethyl group, (p-ethylcyclohexyloxycarbonyl)cyclohexyl group, (2,2,3,3,-tetrafluoropropoxycarbonyl)methyl group and (2,2,3,3-tetrachloropropoxycarbonyl)methyl group;

aryloxycarbonyl-substituted alkyl groups of 8 to 15 in carbon number, such as phenoxycarbonylmethyl group, phenoxycarbonylethyl group, (4-t-butylphenoxycarbonyl)ethyl group, naphthyloxycarbonylmethyl group and biphenyloxycarbonylethyl group;

aralkyloxycarbonyl-substituted alkyl groups of 9 to 15 in carbon number, such as benzyloxycarbonylmethyl group, benzyloxycarbonylethyl group, phenethyloxycarbonylmethyl group and (4-cyclohexyloxybenzyloxycarbonyl)methyl group;

alkenyloxycarbonyl-substituted alkyl groups of 4 to 10 in carbon number, such as vinyloxycarbonylmethyl group, vinyloxycarbonylethyl group, allyloxycarbonylmethyl group, cyclopentadienyloxycarbonylmethyl group and octenoxycarbonylmethyl group;

alkoxycarbonyloxy-substituted alkyl groups of 3 to 15 in carbon number, such as methoxycarbonyloxymethyl group, methoxycarbonyloxyethyl group, ethoxycarbonyloxyethyl group, butoxycarbonyloxyethyl group, (2,2,2-trifluoroethoxycarbonyloxy)ethyl group and (2,2,2-trichloroethoxycarbonyloxy) ethyl group;

alkoxyalkoxycarbonyloxy-substituted alkyl groups of 4 to 15 in carbon number, such as methoxymethoxycarbonyloxymethyl group, methoxyethoxycarbonyloxyethyl group, ethoxyethoxycarbonyloxyethyl group, butoxyethoxycarbonyloxyethyl group, (2,2,2-trifluoroethoxy)ethoxycarbonyloxyethyl group and (2,2,2-trichloroethoxy)ethoxycarbonyloxyethyl group;

dialkylamino-substituted alkyl groups of 3 to 20 in carbon number, such as dimethylaminomethyl group, diethylaminomethyl group, di-n-butylaminomethyl group, di-n-hexylaminomethyl group, di-n-octylaminomethyl group, di-n-decylaminomethyl group, N-isoamyl-N-methylaminometriyl group, piperidinomethyl group, di(methoxymethyl)aminomethyl group, di(methoxyethyl)aminomethyl group, di(ethoxymethyl)aminomethyl group, di(ethoxyethyl)aminomethyl group, di(propoxyethyl)aminomethyl group, di(butoxyethyl)aminomethyl group, bis(2-cyclohexyloxyethyl)aminomethyl group, dimethylaminoethyl group, diethylaminoethyl group, di-n-butylaminoethyl group, di-n-hexylaminoethyl group, di-n-octylaminoethyl group, di-n-decylaminoethyl group, N-isoamyl-N-methylaminoethyl group, piperidinoethyl group, di(methoxymethyl)aminoethyl group, di(methoxyethyl)aminoethyl group, di(ethoxymethyl)aminoethyl group, di (ethoxyethyl)aminoethyl group, di(propoxyethyl)aminoethyl group, di(butoxyethyl)aminoethyl group, bis(2-cyclohexyloxyethyl)aminoethyl group, dimethylaminopropyl group, diethylaminopropyl group, di-n-butylaminopropyl group, di-n-hexylaminopropyl group, di-n-octylaminopropyl group, di-n-decylaminopropyl group, N-isoamyl-N-methylaminopropyl group, piperidinopropyl group, di(methoxymethyl)aminopropyl , group, di(methoxyethyl)aminopropyl group, di (ethoxymethyl)aminopropyl group, di(ethoxyethyl)aminopropyl group, di(propoxyethyl)aminopropyl group, di(butoxyethyl)aminopropyl group, bis(2-cyclohexyloxyethyl)aminopropyl group, dimethylaminobutyl group, diethylaminobutyl group, di-n-butylaminobutyl group, di-n-hexylaminobutyl group, di-n-octylaminobutyl group, di-n-decylaminobutyl group, N-isoamyl-N-methylaminobutyl group, piperidinobutyl group, di(methoxymethyl)aminobutyl group, di(methoxyethyl)aminobutyl group, di(ethoxymethyl)aminobutyl group, di(ethoxyethyl)aminobutyl group, di(propoxyethyl)aminobutyl group, di(butoxyethyl)aminobutyl group and bis(2-cyclohexyloxyethyl)aminobutyl group;

acylamino-substituted alkyl groups of 3 to 10 in carbon number, such as acetylaminomethyl group, acetylaminoethyl group, propionylaminoethyl group, butanoylaminoethyl group, cyclohexanecarbonylaminoethyl group, p-methylcyclohexanecarbonylaminoethyl group and succiniminoethyl group;

alkylsulfonamino-substituted alkyl groups of 2 to 10 in carbon number, such as methylsulfonaminomethyl group, methylsulfonaminoethyl group, ethylsulfonaminoethyl group, propylsulfonaminoethyl group and octylsulfonaminoethyl group;

alkylsulfonyl-substituted alkyl groups of 2 to 10 in carbon number, such as methylsulfonylmethyl group, ethylsulfonylmethyl group, butylsulfonylmethyl group, methylsulfonylethyl group, ethylsulfonylethyl group, butylsulfonylethyl group, 2-ethylhexylsulfonylethyl group, 2,2,3,3-tetrafluoropropylsulfonylmethyl group and 2,2,3,3-tetrachloropropylsulfonylmethyl group;

arylsulfonyl-substituted alkyl groups of 7 to 12 in carbon number, such as benzenesulfonylmethyl group, benzenesulfonylethyl group, benzenesulfonylpropyl group, benzenesulfonylbutyl group, toluenesulfonylmethyl group, toluenesulfonylethyl group, toluenesulfonylpropyl group, toluenesulfonylbutyl group, xylenesulfonylmethyl group, xylenesulfonylethyl group, xylenesulfonylpropyl group and xylenesulfonylbutyl group;

heterocycle-substituted alkyl groups of 2 to 13 in carbon number, such as thiadiazolinomethyl group, pyrrolinomethyl group, pyrrolidinomethyl group, pyrazolidinomethyl group, imidazolidinomethyl group, oxazolyl group, triazolinomethyl group, morpholinomethyl group, indolinomethyl group, benzimidazolinomethyl group and carbazolinomethyl group;

metallocenyl-substituted alkyl groups of 11 to 20 in carbon number, such as ferrocenylmethyl group, ferrocenylethyl group, ferrocenyl-n-propyl group, ferrocenyl-iso-propyl group, ferrocenyl-n-butyl group, ferrocenyl-iso-butyl group, ferrocenyl-sec-butyl group, ferrocenyl-t-butyl group, ferrocenyl-n-pentyl group, ferrocenyl-iso-pentyl group, ferrocenyl-2-methylbutyl group, ferrocenyl-1-methylbutyl group, ferrocenylneopentyl group, ferrocenyl-1,2-dimethylpropyl group, ferrocenyl-1,1-dimethylpropyl group, ferrocenylcyclopentyl group, ferrocenyl-n-hexyl group, ferrocenyl-4-methylpentyl group, ferrocenyl-3-methylpentyl group, ferrocenyl-2-methylpentyl group, ferrocenyl-1-methylpentyl group, ferrocenyl-3,3-dimethylbutyl group, ferrocenyl-2,3-dimethylbutyl group, ferrocenyl-1,3-dimethylbutyl group, ferrocenyl-2,2-dimethylbutyl group, ferrocenyl-1,2-dimethylbutyl group, ferrocenyl-1,1-dimethylbutyl group, ferrocenyl-3-ethylbutyl group, ferrocenyl-2-ethylbutyl group, ferrocenyl-1-ethylbutyl group, ferrocenyl-1,2,2-trimethylbutyl group, ferrocenyl-1,1,2-trimethylbutyl group, ferrocenyl-1-ethyl-2-methylpropyl group, ferrocenylcyclohexyl group, ferrocenyl-n-heptyl group, ferrocenyl-2-methylhexyl group, ferrocenyl-3-methylhexyl group, ferrocenyl-4-methylhexyl group, ferrocenyl-5-methylhexyl group, ferrocenyl-2,4-dimethylpentyl group, ferrocenyl-n-octyl group, ferrocenyl-2-ethylhexyl group, ferrocenyl-2,5-dimethylhexyl group, ferrocenyl-2,5,5-trimethylpentyl group, ferrocenyl-2,4-dimethylhexyl group, ferrocenyl-2,2,4-trimethylpentyl group, ferrocenyl-3,5,5-trimethylhexyl group, ferrocenyl-n-nonyl group, ferrocenyl-n-decyl group,

cobaltcenylmethyl group, cobaltcenylethyl group,

nickelocenylmethyl group, nickelocenylethyl group;

dichlorotitanocenylmethyl group, trichlorotitaniumcyclopentadienylmethyl group, bis(trifluomethanesulfonato)titanocenemethyl group, dichlorozirconocenylmethyl group, dimethylzirconocenylmethyl group, diethoxyzirconocenylmethyl group, bis(cyclopentadienyl)chromiummethyl group, bis(cyclopentadienyl)dichloromolybdenummethyl group, bis(cyclopentadienyl)dichlorohafniummethyl group, bis (cyclopentadienyl) dichloroniobiummethyl group, bis(cyclopentadienyl)rutheniummethyl group, bis(cyclopentadienyl)vanadiummethyl group and bis(cyclopentadienyl)dichlorovanadiummethyl group;

metallocenylalkyloxy-substituted alkyl groups of 12 to 30 in carbon number, such as ferrocenylmethoxymethyl group, ferrocenylmethoxyethyl group, ferrocenylmethoxypropyl group, ferrocenylmethoxybutyl group, ferrocenylmethoxypentyl group, ferrocenylmethoxyhexyl group, ferrocenylmethoxyheptyl group, ferrocenylmethoxyoctyl group, ferrocenylmethoxynonyl group, ferrocenylmethoxydecyl group, ferrocenylethoxymethyl group, ferrocenylethoxyethyl group, ferrocenylethoxypropyl group, ferrocenylethoxybutyl group, ferrocenylethoxypentyl group, ferrocenylethoxyhexyl group, ferrocenylethoxyheptyl group, ferrocenylethoxyoctyl group, ferrocenylethoxynonyl group, ferrocenylethoxydecyl group;

cobaltcenylmethoxymethyl group, cobaltcenylmethoxyethyl group;

nickelocenylmethoxymethyl group, nickelocenylmethoxyethyl group;

dichlorotitanocenylmethoxymethyl group, trichlorotitaniumcyclopentadienylmethoxyethyl group, bis(trifluoromethanesulfonato)titanocenemethoxypropyl group, dichlorozirconocenylmethoxybutyl group, dimethylzirconocenylmethoxypentyl group, diethoxyzirconocenylmethoxymethyl group, bis (cyclopentadienyl) chromiummethoxyhexyl group, bis(cyclopentadienyl)dichlorohafniummethoxymethyl group, bis(cyclopentadienyl)dichloroniobiummethoxyoctyl group, bis(cyclopentadienyl)rutheniummethoxymethyl group, bis(cyclopentadienyl)vanadiummethoxymethyl group, bis(cyclopentadienyl)dichlorovanadiummethoxyethyl group and osmocenylmethoxyethyl group;

metallocenylcarbonyloxy-substituted alkyl groups of 12 to 30 in carbon number, such as ferrocenecarbonyloxymethyl group, ferrocenecarbonyloxyethyl group, ferrocenecarbonyloxypropyl group, ferrocenecarbonyloxybutyl group, ferrocenecarbonyloxypentyl group, ferrocenecarbonyloxyhexyl group, ferrocenecarbonyloxyheptyl group, ferrocenecarbonyloxyoctyl group, ferrocenecarbonyloxynonyl group, ferrocenecarbonyloxydecyl group;

cobaltcenecarbonyloxymethyl group, cobaltcenecarbonyloxyethyl group,

nickelocenecarbonyloxymethyl group, nickelocenecarbonyloxyethyl group,

dichlorotitanocenylcarbonyloxymethyl group, trichlorotitaniumcyclopentadienylcarbonyloxyethyl group, bis (trifluoromethanesulfonato) titanocenecarbonyloxymethoxyp ropyl group, dichlorozirconocenecarbonyloxybutyl group, dimethylzirconocenecarbonyloxypentyl group, diethoxyzirconocenecarbonyloxymethyl group, bis (cyclopentadienyl) chromiumcarbonyloxyhexyl group, bis(cyclopentadienyl)dichlorohafniumcarbonyloxymethyl group, bis(cyclopentadienyl)dichloroniobiumcarbonyloxyoctyl group, bis (cyclopentadienyl) rutheniumcarbonyloxymethyl group, bis(cyclopentadienyl)vanadiumcarbonyloxymethyl group, bis(cyclopentadienyl)dichlorovanadiumcarbonyloxyethyl group and bis (cyclopentadienyl)osmiumcarbonyloxyethyl group;

and the like.

Examples of the substituted or unsubstituted aralkyl groups used for $R^1$ to $R^{16}$ are aralkyl groups which may have the substituents similar to the above-mentioned alkyl groups, and are preferably aralkyl groups of 7 to 15 in carbon number and the like, such as benzyl group, nitrobenzyl group, cyanobenzyl group, hydroxybenzyl group, methylbenzyl group, dimethylbenzyl group, trimethylbenzyl group, trifluoromethylbenzyl group, naphthylmethyl group, nitronaphthylmethyl group, cyanonaphthylmethyl group, hydroxynaphthylmethyl group, methylnaphthylmethyl group, trifluoromethylnaphthylmethyl group and fluorene-9-ylethyl group.

Examples of the substituted or unsubstituted aryl groups used for $R^1$ to $R^{16}$ are aryl groups which may have the substituents similar to the above-mentioned alkyl groups, and are preferably aryl groups of 6 to 15 in carbon number and the like, such as phenyl group, nitrophenyl group, cyanophenyl group, hydroxyphenyl group, methylphenyl group, ethylphenyl group, xylyl group, mesityl group, trifluoromethylphenyl group, naphthyl group, nitronaphthyl group, cyanonaphthyl group, hydroxynaphthyl group, methylnaphthyl group, trifluoromethylnaphthyl group, methoxycarbonylphenyl group, 4-(5'-methylbenzoxazole-2'-yl)phenyl group and dibutylaminocarbonylphenyl group.

Also, regarding aryl groups having oxygen atoms, substituted or unsubstituted sulfur atoms, and substituted or unsubstituted nitrogen atoms between carbon atoms, that is, heteroaryl groups; specific examples of the substituted or unsubstituted heteroaryl groups used for $R^1$ to $R^{16}$ are heteroaryl groups which may have the substituents similar to the aforementioned alkyl groups, and are preferably: unsubstituted heteroaryl groups such as furanyl group, pyrrolyl group, 3-pyrrolino group, pyrazolyl group, imidazolyl group, oxazolyl group, thiazolyl group, 1,2,3-oxadiazolyl group, 1,2,3-triazolyl group, 1,2,4-triazolyl group, 1,3,4-thiadiazolyl group, pyridinyl group, pyridazinyl group, pyrimidinyl group, pyrazinyl group, piperazinyl group, triazinyl group, benzofuranyl group, indolyl group, thionaphcenyl group, benzimidazolyl group, benzothiazolyl group, benzotriazol-2-yl group, benzotriazol-1-yl group, prinyl group, quinolinyl group, isoquinolinyl group, coumarinyl group, cinnolinyl group, quinoxalinyl group, dibenzofuranyl group, carbazolyl group, phenanthronilyl group, phenothiazinyl group, flavonyl group, phthalimidyl group and naphthylimidyl group;

or heteroaryl groups substituted by the following substituents: that is

halogen atoms such as fluorine atom, chlorine atom, bromine atom and iodine atom;

cyano group;

alkyl groups such as methyl group, ethyl group, propyl group, butyl group, pentyl group, hexyl group, heptyl group, octyl group, decyl group, methoxymethyl group, ethoxyethyl group, ethoxymethyl group and trifluoromethyl group; aralkyl groups such as benzyl group and phenethyl group; aryl groups such as phenyl group, tolyl group, naphthyl

group, xylyl group, mesyl group, chlorophenyl group and methoxyphenyl group;

alkoxy groups such as methoxy group, ethoxy group, propoxy group, butoxy group, pentoxy group, hexyloxy group, heptyloxy group, octyloxy group, nonyloxy group, decyloxy group, 2-ethylhexyloxy group, 3,5,5-trimethylhexyloxy group, ferrocenemethoxy group, cobaltcenemethoxy group and nickelocenemethoxy group;

aralkyloxy groups such as benzyloxy group and phenethyloxy group;

aryloxy groups such as phenoxy group, tolyloxy group, naphthoxy group, xylyloxy group, mesityloxy group, chlorophenoxy group and methoxyphenoxy group; alkenyl groups such as vinyl group, allyl group, butenyl group, butadienyl group, pentenyl group, cyclopentadienyl group and octenyl group;

alkenyloxy groups such as vinyloxy group, allyloxy group, butenyloxy group, butadienyloxy group, pentenyloxy group, cyclopentadienyloxy group and octenyloxy group;

alkylthio groups such as methylthio group, ethylthio group, propylthio group, butylthio group, pentylthio group, hexylthio group, heptylthio group, octylthio group, decylthio group, methoxymethylthio group, ethoxyethylthio group, ethoxyethylthio group and trifluoromethylthio group;

aralkylthio groups such as benzylthio group and phenethylthio group;

arylthio groups such as phenylthio group, tolylthio group, naphthylthio group, xylylthio group, mesylthio group, chlorophenylthio group and methoxyphenylthio group;

dialkylamino groups such as dimethylamino group, diethylamino group, dipropylamino group and dibutylamino group;

acyl groups such as acetyl group, propionyl group, butanoyl group, ferrocenecarbonyl group, cobaltcenecarbonyl group and nickelocenecarbonyl group;

alkoxycarbonyl groups such as methoxycarbonyl group, ethoxycarbonyl group, ferrocenemethoxycarbonyl group, 1-methylferrocene-1'-ylmethoxycarbonyl group, cobaltcenylmethoxycarbonyl group and nickelocenylmethoxycarbonyl group;

aralkyloxycarbonyl groups such as benzyloxycarbonyl group and phenethyloxycarbonyl group;

aryloxycarbonyl groups such as phenoxycarbonyl group, tolyloxycarbonyl group, naphthoxycarbonyl group, xylyloxycarbonyl group, mesyloxycarbonyl group, chlorophenoxycarbonyl group and methoxyphenoxycarbonyl group;

alkenyloxycarbonyl groups such as vinyloxycarbonyl group, allyloxycarbonyl group, butenyloxycarbonyl group, butadienyloxycarbonyl group, cyclopentadienyloxy group, pentenyloxycarbonyl group and octenyloxycarbonyl group;

alkylaminocarbonyl groups, specifically monoalkylaminocarbonyl groups of 2 to 10 in carbon number, such as methylaminocarbonyl group, ethylaminocarbonyl group, propylaminocarbonyl group, butylaminocarbonyl group, pentylaminocarbonyl group, hexylaminocarbonyl group, heptylaminocarbonyl group, octylaminocarbonyl group, nonylaminocarbonyl group, 3,5,5-trimethylhexylaminocarbonyl group and 2-ethylhexylaminocarbonyl group, dialkylaminocarbonyl groups of 3 to 20 in carbon number, such as dimethylaminocarbonyl group, diethylaminocarbonyl group, dipropylaminocarbonyl group, dibutylaminocarbonyl group, dipentylaminocarbonyl group, dihexylaminocarbonyl group, diheptylaminocarbonyl group, dioctylaminocarbonyl group, piperidinocarbonyl group, morpholinocarbonyl group, 4-methylpiperazinocarbonyl group and 4-ethylpiperazinocarbonyl group;

heterocyclic groups such as furanyl group, pyrrolyl group, 3-pyrrolino group, pyrrolidino group, 1,3-oxolanyl group, pyrazolyl group, 2-pyrazolinyl group, pyrazolidinyl group, imidazolyl group, oxazolyl group, thiazolyl group, 1,2,3-oxadiazolyl group, 1,2,3-triazolyl group, 1,2,4-triazolyl group, 1,3,4-thiadiazolyl group, 4H-pyranyl group, pyridinyl group, piperidinyl group, dioxanyl group, morpholinyl group, pyridazinyl group, pyrimidinyl group, pyrazinyl group, piperazinyl group, triazinyl group, benzofuranyl group, indolyl group, thionaphcenyl group, benzimidazolyl group, benzothiazolyl group, prinyl group, quinolinyl group, isoquinolinyl group, coumarinyl group, cinnolinyl group, quinoxalinyl group, dibenzofuranyl group, carbazolyl group, phenanthronilyl group, phenothiazinyl group and flavonyl group;

metallocenyl groups such as ferrocenyl group, cobaltcenyl group, nickelocenyl group, ruthenocenyl group, osmocenyl group and titanocenyl group; and the like.

Examples of the substituted or unsubstituted alkenyl groups used for $R^1$ to $R^{16}$ are alkenyl groups which may have the substituents similar to the above-mentioned alkyl groups, and are preferably alkenyl groups of 2 to 10 in carbon number, such as vinyl group, propenyl group, 1-butenyl group, iso-butenyl group, 1-pentenyl group, 2-pentenyl group, 2-methyl-1-butenyl group, 3-methyl-1-butenyl group, 2-methyl-2-butenyl group, 2,2-dicyanovinyl group, 2-cyano-2-methylcarboxylvinyl group, 2-cyano-2-methylsulfonvinyl group, styryl group and 4-phenyl-2-butenyl group.

Also, as the substituted hydrocarbon radicals shown by $R^1$ to $R^{16}$, hydrocarbon radicals whose carbon atoms directly linked to azaannulene rings are substituted by oxo groups can be mentioned. As specific examples, substituted or unsubstituted acyl groups; carboxyl groups; substituted or unsubstituted hydrocarbonoxycarbonyl groups such as alkoxycarbonyl group, aralkyloxycarbonyl group, aryloxycarbonyl group and alkenyloxycarbonyl group; aminocarbonyl groups; and substituted or unsubstituted hydrocarbonaminocarbonyl groups such as monosubstituted aminocarbonyl group and disubstituted aminocarbonyl group can be mentioned.

Examples of the substituted or unsubstituted acyl groups used for $R^1$ to $R^{16}$ are acyl groups which may have the substituents similar to the above-mentioned alkyl groups, and are preferably acyl groups of 1 to 15 in carbon

number, such as formyl group, methylcarbonyl group, ethylcarbonyl group, n-propylcarbonyl group, iso-propylcarbonyl group, n-butylcarbonyl group, iso-butylcarbonyl group, sec-butylcarbonyl group, t-butylcarbonyl group, n-pentylcarbonyl group, iso-pentylcarbonyl group, neopentylcarbonyl group, 2-methylbutylcarbonyl group, benzoyl group, methylbenzoyl group, ethylbenzoyl group, tolylcarbonyl group, propylbenzoyl group, 4-t-butylbenzoyl group, nitrobenzylcarbonyl group, 3-butoxy-2-naphthoyl group, cinnamoyl group, ferrocenecarbonyl group and 1-methylferrocene-1'-carbonyl group.

Examples of the substituted or unsubstituted alkoxycarbonyl groups used for $R^1$ to $R^{16}$ are alkoxycarbonyl groups which may have the substituents similar to the above-mentioned alkyl groups, and are preferably: alkoxycarbonyl groups of 2 to 11 in carbon number, such as methoxycarbonyl group, ethoxycarbonyl group, n-propoxycarbonyl group, iso-propoxycarbonyl group, n-butoxycarbonyl group, iso-butoxycarbonyl group, sec-butoxycarbonyl group, t-butoxycarbonyl group, n-pentoxycarbonyl group, iso-pentoxycarbonyl group, neopentoxycarbonyl group, 2-pentoxycarbonyl group, 2-ethylhexyloxycarbonyl group, 3,5,5-trimethylhexyloxycarbonyl group, decalyloxycarbonyl group, cyclohexyloxycarbonyl group, chloroethoxycarbonyl group, hydroxymethoxycarbonyl group and hydroxyethoxycarbonyl group;

alkoxy-substituted alkoxycarbonyl groups of 3 to 11 in carbon number, such as methoxymethoxycarbonyl group, methoxyethoxycarbonyl group, ethoxyethoxycarbonyl group, propoxyethoxycarbonyl group, butoxyethoxycarbonyl group, pentoxyethoxycarbonyl group, hexyloxyethoxycarbonyl group, butoxybutoxycarbonyl group, hexyloxybutoxycarbonyl group, hydroxymethoxymethoxycarbonyl group and hydroxyethoxyethoxycarbonyl group;

alkoxyalkoxy-substituted alkoxycarbonyl groups of 4 to 11 in carbon number, such as methoxymethoxymethoxycarbonyl group, methoxyethoxyethoxycarbonyl group, ethoxyethoxyethoxycarbonyl group, propoxyethoxyethoxycarbonyl group, butoxyethoxyethoxycarbonyl group, pentoxyethoxyethoxycarbonyl group and hexyloxyethoxyethoxycarbonyl group;

metallocenyl-substituted alkoxycarbonyl groups of 11 to 20 in carbon number, such as ferrocenylmethoxycarbonyl group, ferrocenylethoxycarbonyl group, ferrocenylpropoxycarbonyl group, ferrocenylbutoxycarbonyl group, ferrocenylpentyloxycarbonyl group, ferrocenylhexyloxycarbonyl group, ferrocenylheptyloxycarbonyl group, ferrocenyloctyloxycarbonyl group, ferrocenylnonyloxycarbonyl group, ferrocenyldecyloxycarbonyl group, cobaltcenylmethoxycarbonyl group, cobaltcenylethoxycarbonyl group, nickelocenylmethoxycarbonyl group, nickelocenylethoxycarbonyl group, dichlorotitanocenylmethoxycarbonyl group, trichlorotitaniumcyclopentadienylmethoxycarbonyl group, bis(trifluoromethanesulfonato)titanocenemethoxycarbonyl group, dichlorozirconocenylmethoxycarbonyl group, dimethylzirconocenylmethoxycarbonyl group, diethoxyzirconocenylmethoxycarbonyl group, bis(cyclopentadienyl)chromiummethoxycarbonyl group, bis(cyclopentadienyl)dichlorohafniummethoxycarbonyl group, bis(cyclopentadienyl)dichloroniobiummethoxycarbonyl group, bis(cyclopentadienyl)rutheniummethoxycarbonyl group, bis(cyclopentadienyl)vanadiummethoxycarbonyl group, bis(cyclopentadienyl)dichlorovanadiummethoxycarbonyl group and bis(cyclopentadienyl)osmiummethoxycarbonyl group;

and the like.

Examples of the substituted or unsubstituted aralkyloxycarbonyl groups used for $R^1$ to $R^{16}$ are aralkyloxycarbonyl groups which may have the substituents similar to the above-mentioned alkyl groups, and are preferably aralkyloxycarbonyl groups of 8 to 16 in carbon number and the like, such as benzyloxycarbonyl group, nitrobenzyloxycarbonyl group, cyanobenzyloxycarbonyl group, hydroxybenzyloxycarbonyl group, methylbenzyloxycarbonyl group, trifluoromethylbenzyloxycarbonyl group, naphthylmethoxycarbonyl group, nitronaphthylmethoxycarbonyl group, cyanonaphthylmethoxycarbonyl group, hydroxynaphthylmethoxycarbonyl group, methylnaphthylmethoxycarbonyl group, trifluoromethylnaphthylmethoxycarbonyl group and fluorene-9-ylethoxycarbonyl group.

Examples of the substituted or unsubstituted aryloxycarbonyl groups used for $R^1$ to $R^{16}$ are aryloxycarbonyl groups which may have the substituents similar to the above-mentioned aryl groups, and are preferably aryloxycarbonyl groups of 7 to 11 in carbon number, such as phenoxycarbonyl group, 2-methylphenoxycarbonyl group, 4-methylphenoxycarbonyl group, 4-t-butylphenoxycarbonyl group, 2-methoxyphenoxycarbonyl group, 4-iso-propylphenoxycarbonyl group, naphthoxycarbonyl group, ferrocenyloxycarbonyl group, cobaltcenyloxycarbonyl group, nickelocenyloxycarbonyl group, zirconocenyloxycarbonyl group, octamethylferrocenyloxycarbonyl group, octamethylcobaltcenyloxycarbonyl group, octamethylnickelocenyloxycarbonyl group and octamethylzirconocenyloxycarbonyl group.

Examples of the substituted or unsubstituted alkenyloxycarbonyl groups used for $R^1$ to $R^{16}$ are alkenyloxycarbonyl groups which may have the substituents similar to the above-mentioned alkyl groups, and are preferably alkenyloxycarbonyl groups of 3 to 11 in carbon number, such as vinyloxycarbonyl group, propenyloxycarbonyl group, 1-butenyloxycarbonyl group, iso-butenyloxycarbonyl group, 1-pentenyloxycarbonyl group, 2-pentenyloxycarbonyl group, cyclopentadienyloxycarbonyl group, 2-methyl-1-butenyloxycarbonyl group, 3-methyl-1-butenyloxycarbonyl group, 2-methyl-2-butenyloxycarbonyl group, 2,2-dicyanovinyloxycarbonyl group, 2-cyano-2-methylcarboxylvinyloxycarbonyl group, 2-cyano-2-methylsulfonvinyloxycarbonyl group, styryloxycarbonyl group and 4-phenyl-2-butenyloxycarbonyl group.

Examples of the monosubstituted aminocarbonyl groups used for $R^1$ to $R^{16}$ are monosubstituted aminocar-

bonyl groups which may have the substituents similar to the above-mentioned alkyl groups, and are preferably: monoalkylaminocarbonyl groups of 2 to 11 in carbon number, such as methylaminocarbonyl group, ethylaminocarbonyl group, propylaminocarbonyl group, butylaminocarbonyl group, pentylaminocarbonyl group, hexylaminocarbonyl group, heptylaminocarbonyl group, octylaminocarbonyl group, (2-ethylhexyl)aminocarbonyl group, cyclohexylaminocarbonyl group, (3,5,5-trimethylhexyl)aminocarbonyl group, nonylaminocarbonyl group and decylaminocarbonyl group;

monoaralkylaminocarbonyl groups of 8 to 11 in carbon number, such as benzylaminocarbonyl group, phenethylaminocarbonyl group, (3-phenylpropylaminocarbonyl group, (4-ethylbenzyl)aminocarbonyl group, (4-isopropylbenzyl) aminocarbonyl group, (4-methylbenzyl)aminocarbonyl group, (4-ethylbenzyl)aminocarbonyl group, (4-allylbenzyl)aminocarbonyl group, [4-(2-cyanoethyl)benzyl]aminocarbonyl group and [4-(2-acetoxyethyl)benzyl]aminocarbonyl group;

monoarylaminocarbonyl groups of 7 to 11 in carbon number, such as anilinocarbonyl group, naphthylaminocarbonyl group, toluidinocarbonyl group, xylidinocarbonyl group, ethylanilinocarbonyl group, isopropylanilinocarbonyl group, methoxyanilinocarbonyl group, ethoxyanilinocarbonyl group, chloroanilinocarbonyl group, acetylanilinocarbonyl group, methoxycarbonylanilinocarbonyl group, ethoxycarbonylanilinocarbonyl group, propoxycarbonylanilinocarbonyl group, 4-methylanilinocarbonyl group and 4-ethylanilinocarbonyl group;

monoalkenylaminocarbonyl groups of 3 to 11 in carbon number, such as vinylaminocarbonyl group, allylaminocarbonyl group, butenylaminocarbonyl group, pentenylaminocarbonyl group, hexenylaminocarbonyl group, cyclohexenylaminocarbonyl group, octadienylaminocarbonyl group and adamantenylaminocarbonyl group; and the like.

Examples of the disubstituted aminocarbonyl groups used for $R^1$ to $R^{16}$ are disubstituted aminocarbonyl groups which may have the substituents similar to the above-mentioned alkyl groups, and are preferably: dialkylaminocarbonyl groups of 3 to 17 in carbon number, such as dimethylaminocarbonyl group, diethylaminocarbonyl group, methylethylaminocarbonyl group, dipropylaminocarbonyl group, dibutylaminocarbonyl group, di-n-hexylaminocarbonyl group, dicyclohexylaminocarbonyl group, dioctylaminocarbonyl group, pyrrolidinocarbonyl. group, piperidinocarbonyl group, morpholinocarbonyl group, bis(methoxyethyl)aminocarbonyl group, bis(ethoxyethyl)aminocarbonyl group, bis (propoxyethyl)aminocarbonyl group, bis(butoxyethyl)aminocarbonyl group, di(acetyloxyethyl)aminocarbonyl group, di (hydroxyethyl)aminocarbonyl group, N-ethyl-N-(2-cyanoethyl)aminocarbonyl group and di(propionyloxyethyl)aminocarbonyl group;

diaralkylaminocarbonyl groups of 15 to 21 in carbon number, such as dibenzylaminocarbonyl group, diphenethylaminocarbonyl group, bis(4-ethylbenzyl)aminocarbonyl group and bis(4-isopropylbenzyl)aminocarbonyl group;

diarylaminocarbonyl groups of 13 to 15 in carbon number, such as diphenylaminocarbonyl group, ditolylaminocarbonyl group and N-phenyl-N-tolylaminocarbonyl group;

dialkenylaminocarbonyl groups of 5 to 13 in carbon number, such as divinylaminocarbonyl group, diallylaminocarbonyl group, dibutenylaminocarbonyl group, dipentenylaminocarbonyl group, dihexenylaminocarbonyl group and N-vinyl-N-allylaminocarbonyl group;

and disubstituted aminocarbonyl groups of 4 to 11 in carbon number containing substituents selected from substituted or unsubstituted alkyl groups, aralkyl groups, aryl groups and alkenyl groups, such as N-phenyl-N-allylaminocarbonyl group, N-(2-acetyloxyethyl)-N-ethylaminocarbonyl group, N-tolyl-N-methylaminocarbonyl group, N-vinyl-N-methylaminocarbonyl group and N-benzyl-N-allylaminocarbonyl group.

As specific examples of the substituted or unsubstituted hydroxy groups shown by $R^1$ to $R^{16}$, hydroxyl groups; and substituted or unsubstituted hydrocarbonoxy groups such as alkoxy group, aralkyloxy group, aryloxy group and alkenyloxy group, which may have oxygen atoms, sulfur atoms, and substituted or unsubstituted nitrogen atoms between carbon atoms, can be mentioned.

Examples of the substituted or unsubstituted alkoxy groups used for $R^1$ to $R^{16}$ are: normal chain, branched-chain or cyclic unsubstituted alkoxy groups of 1 to 15 in carbon number, such as methoxy group, ethoxy group, n-propoxy group, isopropoxy group, n-butoxy group, isobutoxy group, tert-butoxy group, sec-butoxy group, n-pentyloxy group, isopentyloxy group, tert-pentyloxy group, sec-pentyloxy group, cyclopentyloxy group, n-hexyloxy group, 1-methylpentyloxy group, 2-methylpentyloxy group, 3-methylpentyloxy group, 4-methylpentyloxy group, 1,1-dimethylbutoxy group, 1,2-dimethylbutoxy group, 1,3-dimethylbutoxy group, 2,3-dimethylbutoxy group, 1,1,2-trimethylpropoxy group, 1,2,2-trimethylpropoxy group, ethylbutoxy group, 1-ethyl-2-methylpropoxy group, cyclohexyloxy group, methylcyclopentyloxy group, n-heptyloxy group, methylhexyloxy group, dimethylpentyloxy group, ethylpentyloxy group, trimethylbutoxy group, 1-ethyl-1-methylbutoxy group, 1-ethyl-2-methylbutoxy group, 1-ethyl-3-methylbutoxy group, 2-ethyl-1-methylbutoxy group, 2-ethyl-3-methylbutoxy group, 1-n-propylbutoxy group, 1-isopropylbutoxy group, 1-isopropyl-2-methylpropoxy group, methylcyclohexyloxy group, n-octyloxy group, 1-methylheptyloxy group, 2-methylheptyloxy group, 3-methylheptyloxy group, 4-methylheptyloxy group, 5-methylheptyloxy group, 6-methylheptyloxy group, dimethylhexyloxy group, 1-ethylhexyloxy group, 2-ethylhexyloxy group, 3-ethylhexyloxy group, 4-ethylhexyloxy group, 1-n-propylpentyloxy group, 2-n-propylpentyloxy group, 1-isopropylpentyloxy group, 2-isopropylpentyloxy group, 1-ethyl-1-methylpentyloxy group, 1-ethyl-2-methylpentyloxy group, 1-ethyl-3-methylpentyloxy group, 1-ethyl-4-methylpentyloxy group, 2-ethyl-1-methylpentyloxy group, 2-ethyl-2-methylpentyloxy group, 2-ethyl-3-methylpentyloxy group, 2-ethyl-4-methylpentyloxy group, 3-ethyl-1-methylpentyloxy group, 3-ethyl-2-methylpentyloxy group, 3-ethyl-3-methylpentyloxy group, 3-ethyl-4-methylpentyloxy group, trimethylpentyloxy group, 1-n-butylbutoxy group, 1-isobutylbutoxy group, 1-sec-butylbutoxy group, 1-tert-butylbutoxy group, 2-tert-butylbutoxy group, 1-n-propyl-1-methylbutoxy group, 1-n-propyl-2-methylbutoxy group, 1-n-propyl-3-methylbutoxy group, 1-isopropyl-1-methylbutoxy group, 1-isopropyl-2-methylbutoxy group, 1-isopropyl-3-methylbutoxy group, 1,1-diethylbutoxy group, 1,2-diethylbutoxy group, 1-ethyl-1,2-dimethylbutoxy group, 1-ethyl-1,3-dimethylbutoxy group, 1-ethyl-2,3-dimethylbutoxy group, 2-ethyl-1,1-dimethylbutoxy group, 2-ethyl-1,2-dimethylbutoxy group, 2-ethyl-1,3-dimethylbutoxy group, 2-ethyl-2,3-dimethylbutoxy group, 1,1,3,3-tetramethylbutoxy group, 1,2-dimethylcyclohexyloxy group, 1,3-dimethylcyclohexyloxy group, 1,4-dimethylcyclohexyloxy group, ethylcyclohexyloxy group, n-nonyloxy group, 3,5,5-trimethylhexyloxy group, n-decyloxy group, n-undecyloxy group, n-dodecyloxy group, 1-adamantyloxy group and n-pentadecyloxy group;

alkoxy-substituted alkoxy groups of 2 to 15 in carbon number, such as methoxymethoxy group, methoxyethoxy group, ethoxyethoxy group, n-propoxyethoxy group, isopropoxyethoxy group, n-butoxyethoxy group, isobutoxyethoxy group, tert-butoxyethoxy group, sec-butoxyethoxy group, n-pentyloxyethoxy group, isopentyloxyethoxy group, tert-pentyloxyethoxy group, sec-pentyloxyethoxy group, cyclopentyloxyethoxy group, n-hexyloxyethoxy group, ethylcyclohexyloxyethoxy group, n-nonyloxyethoxy group, (3,5,5-trimethylhexyloxy)ethoxy group, (3,5,5-trimethylhexyloxy) butoxy group, n-decyloxyethoxy group, n-undecyloxyethoxy group, n-dodecyloxyethoxy group, 3-methoxypropoxy group, 3-ethoxypropoxy group, 3-(n-propoxy)propoxy group, 2-isopropoxypropoxy group, 2-methoxybutoxy group, 2-ethoxybutoxy group, 2-(n-propoxy)butoxy group, 4-isopropoxybutoxy group, decalyloxyethoxy group and adamantyloxyethoxy group;

alkoxyalkoxy-substituted normal chain, branched-chain or cyclic alkoxy groups of 3 to 15 in carbon number, such as methoxymethoxymethoxy group, ethoxymethoxymethoxy group, propoxymethoxymethoxy group, butoxymethoxymethoxy group, methoxyethoxymethoxy group, ethoxyethoxymethoxy group, propoxyethoxymethoxy group, butoxyethoxymethoxy group, methoxypropoxymethoxy group, ethoxypropoxymethoxy group, propoxypropoxymethoxy group, butoxypropoxymethoxy group, methoxybutoxymethoxy group, ethoxybutoxymethoxy group, propoxybutoxymethoxy group, butoxybutoxymethoxy group, methoxymethoxyethoxy group, ethoxymethoxyethoxy group, propoxymethoxyethoxy group, butoxymethoxyethoxy group, methoxyethoxyethoxy group, ethoxyethoxyethoxy group, propoxyethoxyethoxy group, butoxyethoxyethoxy group, methoxypropoxyethoxy group, ethoxypropoxyethoxy group, propoxypropoxyethoxy group, butoxypropoxyethoxy group, methoxybutoxyethoxy group, ethoxybutoxyethoxy group, propoxybutoxyethoxy group, butoxybutoxyethoxy group, methoxymethoxypropoxy group, ethoxymethoxypropoxy group, propoxymethoxypropoxy group, butoxymethoxypropoxy group, methoxyethoxypropoxy group, ethoxyethoxypropoxy group, propoxyethoxypropoxy group, butoxyethoxypropoxy group, methoxypropoxypropoxy group, ethoxypropoxypropoxy group, propoxypropoxypropoxy group, butoxypropoxypropoxy group, methoxybutoxypropoxy group, ethoxybutoxypropoxy group, propoxybutoxypropoxy group, butoxybutoxypropoxy group, methoxymethoxybutoxy group, ethoxymethoxybutoxy group, propoxymethoxybutoxy group, butoxymethoxybutoxy group, methoxyethoxybutoxy group, ethoxyethoxybutoxy group, propoxyethoxybutoxy group, butoxyethoxybutoxy group, methoxypropoxybutoxy group, ethoxypropoxybutoxy group, propoxypropoxybutoxy group, butoxypropoxybutoxy group, methoxybutoxybutoxy group, ethoxybutoxybutoxy group, propoxybutoxybutoxy group, butoxybutoxybutoxy group, (4-ethylcyclohexyloxy)ethoxyethoxy group, (2-ethyl-1-hexyloxy)ethoxypropoxy group and [4-(3,5,5-trimethylhexyloxy)butoxy]ethoxy group;

alkoxycarbonyl-substituted alkoxy groups of 3 to 10 in carbon number, such as methoxycarbonylmethoxy group, ethoxycarbonylmethoxy group, n-propoxycarbonylmethoxy group, isopropoxycarbonylmethoxy group and (4'-ethylcyclohexyloxy)carbonylmethoxy group;

acyl-substituted alkoxy groups of 3 to 10 in carbon number, such as acetylmethoxy group, ethylcarbonylmethoxy group, octylcarbonylmethoxy group and phenacyloxy group;

acyloxy-substituted alkoxy groups of 3 to 10 in carbon number, such as acetyloxymethoxy group, acetyloxyethoxy group, acetyloxyhexyloxy group and butanoyloxycyclohexyloxy group;

alkylamino-substituted alkoxy groups of 2 to 10 in carbon number, such as methylaminomethoxy group, 2-methylaminoethoxy group, 2-(2-methylaminoethoxy)ethoxy group, 4-methylaminobutoxy group, 1-methylaminopropane-2-yloxy group, 3-methylaminopropoxy group, 2-methylamino-2-methylpropoxy group, 2-ethylaminoethoxy group, 2-(2-ethylaminoethoxy)ethoxy group, 3-ethylaminopropoxy group, 1-ethylaminopropoxy group, 2-isopropylaminoethoxy group, 2-(n-butylamino)ethoxy group, 3-(n-hexylamino)propoxy group and 4-(cyclohexylamino)butyloxy group;

alkylaminoalkoxy-substituted alkoxy groups of 3 to 10 in carbon number, such as methylaminomethoxymethoxy group, methylaminoethoxyethoxy group, methylaminoethoxypropoxy group, ethylaminoethoxypropoxy group and 4-(2'-isobutylaminopropoxy)butoxy group;

dialkylamino-substituted alkoxy groups of 3 to 15 in carbon number, such as dimethylaminomethoxy group, 2-dimethylaminoethoxy group, 2-(2-dimethylaminoethoxy)ethoxy group, 4-dimethylaminobutoxy group, 1-dimethylaminopropane-2-yloxy group, 3-dimethylaminopropoxy group, 2-dimethylamino-2-methylpropoxy group, 2-diethylaminoethoxy group, 2-(2-diethylaminoethoxy)ethoxy group, 3-diethylaminopropoxy group, 1-diethylaminopropoxy group,

2-diisopropylaminoethoxy group, 2-(di-n-butylamino)ethoxy group, 2-piperidylethoxy group and 3-(di-n-hexylamino) propoxy group;

dialkylaminoalkoxy-substituted alkoxy groups of 4 to 15 in carbon number, such as dimethylaminomethoxymethoxy group, dimethylaminoethoxyethoxy group, dimethylaminoethoxypropoxy group, diethylaminoethoxypropoxy group and 4-(2'-diisobutylaminopropoxy)butoxy group;

alkylthio-substituted alkoxy groups of 2 to 15 in carbon number, such as methylthiomethoxy group, 2-methylthioethoxy group, 2-ethylthioethoxy group, 2-n-propylthioethoxy group, 2-isopropylthioethoxy group, 2-n-butylthioethoxy group, 2-isobutylthioethoxy group and (3,5,5-trimethylhexylthio)hexyloxy group;

and the like; preferably alkoxy groups of 1 to 10 in carbon number, such as methoxy group, ethoxy group, n-propoxy group, iso-propoxy group, n-butoxy group, isobutoxy group, sec-butoxy group, t-butoxy group, n-pentoxy group, iso-pentoxy group, neopentoxy group, 2-methylbutoxy group, 2-ethylhexyloxy group, 3,5,5-trimethylhexyloxy group, decalyloxy group, methoxyethoxy group, ethoxyethoxy group, methoxyethoxyethoxy group and ethoxyethoxyethoxy group.

Examples of the substituted or unsubstituted aralkyloxy groups used for $R^1$ to $R^{16}$ are aralkyloxy groups which may have the substituents similar to the above-mentioned alkyl groups, and are preferably aralkyloxy groups of 7 to 15 in carbon number and the like, such as benzyloxy group, nitrobenzyloxy group, cyanobenzyloxy group, hydroxybenzyloxy group, methylbenzyloxy group, trifluoromethylbenzyloxy group, naphthylmethoxy group, nitronaphthylmethoxy group, cyanonaphthylmethoxy group, hydroxynaphthylmethoxy group, methylnaphthylmethoxy group, trifluoromethylnaphthylmethoxy group and fluorene-9-ylethoxy group.

Examples of the substituted or unsubstituted aryloxy groups used for $R^1$ to $R^{16}$ are aryloxy groups which may have the substituents similar to the above-mentioned alkyl groups, and are preferably aryloxy groups of 6 to 18 in carbon number, such as phenylthio group, 2-methylphenylthio group, 4-methylphenylthio group, 4-t-butylphenylthio group, 2-methoxyphenylthio group, 4-isopropylphenylthio group, tolyloxy group, naphthoxy group, ferrocenyloxy group, cobaltcenyloxy group, nickelocenyloxy group, octamethylferrocenyloxy group, octamethylcobaltcenyloxy group and octamethylnickelocenyloxy group.

Also, as examples of substituted or unsubstituted heteroaryloxy groups used for $R^1$ to $R^{16}$, which are aryloxy groups having oxygen atoms, substituted or unsubstituted sulfur atoms, and substituted or unsubstituted nitrogen atoms between carbon atoms, heteroaryloxy groups made by the aforementioned heteroaryl groups bonding with oxygen atoms can be mentioned.

Examples of the substituted or unsubstituted alkenyloxy groups used for $R^1$ to $R^{16}$ are alkenyloxy groups which may have the substituents similar to the above-mentioned alkyl groups, and are preferably alkenyloxy groups of 2 to 10 in carbon number, such as vinyloxy group, propenyloxy group, 1-butenyloxy group, iso-butenyloxy group, 1-pentenyloxy group, 2-pentenyloxy group, 2-methyl-1-butenyloxy group, 3-methyl-1-butenyloxy group, 2-methyl-2-butenyloxy group, cyclopentadienyloxy group, 2,2-dicyanovinyloxy group, 2-cyano-2-methylcarboxylvinyloxy group, 2-cyano-2-methylsulfonvinyloxy group, styryloxy group, 4-phenyl-2-butenyloxy group and cinnamylalkoxy group.

Also, as the substituted hydrocarbonoxy groups shown by $R^1$ to $R^{16}$, hydrocarbonoxy groups whose carbon atoms directly linked to oxygen atoms directly linked to azaannulene rings are substituted by oxo groups can be mentioned. As specific examples, substituted or unsubstituted acyloxy groups; substituted or unsubstituted hydrocarbonoxycarbonyloxy groups such as alkoxycarbonyloxy group, aralkyloxycarbonyloxy group, aryloxycarbonyloxy group and alkenyloxycarbonyloxy group; substituted or unsubstituted hydrocarbonaminocarbonyloxy groups such as monosubstituted aminocarbonyloxy group and disubstituted aminocarbonyloxy group; and the like can be mentioned.

Examples of the substituted or unsubstituted acyloxy groups used for $R^1$ to $R^{16}$ are acyloxy groups which may have the substituents similar to the above-mentioned alkyl groups, and are preferably acyloxy groups of 1 to 15 in carbon number, such as formyloxy group, methylcarbonyloxy group, ethylcarbonyloxy group, n-propylcarbonyloxy group, iso-propylcarbonyloxy group, n-butylcarbonyloxy group, iso-butylcarbonyloxy group, sec-butylcarbonyloxy group, t-butylcarbonyloxy group, n-pentylcarbonyloxy group, iso-pentylcarbonyloxy group, neopentylcarbonyloxy group, 2-methylbutylcarbonyloxy group, benzoyloxy group, methylbenzoyloxy group, ethylbenzoyloxy group, tolylcarbonyloxy group, propylbenzoyloxy group, 4-t-butylbenzoyloxy group, nitrobenzylcarbonyloxy group, 3-butoxy-2-naphthoyloxy group, cinnamoyloxy group, ferrocenecarbonyloxy group and 1-methylferrocene-1'-carbonyloxy group.

Examples of the substituted or unsubstituted alkoxycarbonyloxy groups used for $R^1$ to $R^{16}$ are alkoxycarbonyloxy groups which may have the substituents similar to the above-mentioned alkyl groups, and are preferably: alkoxycarbonyloxy groups of 2 to 11 in carbon number, such as methoxycarbonyloxy group, ethoxycarbonyloxy group, n-propoxycarbonyloxy group, iso-propoxycarbonyloxy group, n-butoxycarbonyloxy group, iso-butoxycarbonyloxy group, sec-butoxycarbonyloxy group, t-butoxycarbonyloxy group, n-pentoxycarbonyloxy group, iso-pentoxycarbonyloxy group, neopentoxycarbonyloxy group, 2-pentoxycarbonyloxy group, 2-ethylhexyloxycarbonyloxy group, 3,5,5-trimethylhexyloxycarbonyloxy group, decalyloxycarbonyloxy group, cyclohexyloxycarbonyloxy group, chloroethoxycarbonyloxy group, hydroxymethoxycarbonyloxy group and hydroxyethoxycarbonyloxy group;

alkoxy-substituted alkoxycarbonyloxy groups of 3 to 11 in carbon number, such as methoxymethoxycarbonyloxy

group, methoxyethoxycarbonyloxy group, ethoxyethoxycarbonyloxy group, propoxyethoxycarbonyloxy group, butoxyethoxycarbonyloxy group, pentoxyethoxycarbonyloxy group, hexyloxyethoxycarbonyloxy group, butoxybutoxycarbonyloxy group, hexyloxybutoxycarbonyloxy group, hydroxymethoxymethoxycarbonyloxy group and hydroxyethoxyethoxycarbonyloxy group;

alkoxyalkoxy-substituted alkoxycarbonyloxy groups of 4 to 11 in carbon number, such as methoxymethoxymethoxycarbonyloxy group, methoxyethoxyethoxycarbonyloxy group, ethoxyethoxyethoxycarbonyloxy group, propoxyethoxyethoxycarbonyloxy group, butoxyethoxyethoxycarbonyloxy group, pentoxyethoxyethoxycarbonyloxy group and hexyloxyethoxyethoxycarbonyloxy group;

metallocenyl-substituted alkoxycarbonyloxy groups of 11 to 20 in carbon number, such as ferrocenylmethoxycarbonyloxy group, ferrocenylethoxycarbonyloxy group, ferrocenylpropoxycarbonyloxy group, ferrocenylbutoxycarbonyloxy group, ferrocenylpentyloxycarbonyloxy group, ferrocenylhexyloxycarbonyloxy group, ferrocenylheptyloxycarbonyloxy group, ferrocenyloctyloxycarbonyloxy group, ferrocenylnonyloxycarbonyloxy group, ferrocenyldecyloxycarbonyloxy group,

cobaltcenylmethoxycarbonyloxy group, cobaltcenylethoxycarbonyloxy group, nickelocenylmethoxycarbonyloxy group, nickelocenylethoxycarbonyloxy group, dichlorotitanocenylmethoxycarbonyloxy group, trichlorotitaniumcyclopentadienylmethoxycarbonyloxy group, bis(trifluoromethanesulfonato)titanocenemethoxycarbonyloxy group, dichlorozirconocenylmethoxycarbonyloxy group, dimethylzirconocenylmethoxycarbonyloxy group, diethoxyzirconocenylmethoxycarbonyloxy group, bis(cyclopentadienyl)chromiummethoxycarbonyloxy group, bis(cyclopentadienyl) dichlorohafniummethoxycarbonyloxy group, bis(cyclopentadienyl)dichloroniobiummethoxycarbonyloxy group, bis(cyclopentadienyl)rutheniummethoxycarbonyloxy group, bis(cyclopentadienyl)vanadiummethoxycarbonyloxy group, bis (cyclopentadienyl)dichlorovanadiummethoxycarbonyloxy group and bis(cyclopentadienyl)osmiummethoxycarbonyloxy group; and the like.

Examples of the substituted or unsubstituted aralkyloxycarbonyloxy groups used for $R^1$ to $R^{16}$ are aralkyloxycarbonyloxy groups which may have the substituents similar to the above-mentioned alkyl groups, and are preferably aralkyloxycarbonyloxy groups of 8 to 16 in carbon number and the like, such as benzyloxycarbonyloxy group, nitrobenzyloxycarbonyloxy group, cyanobenzyloxycarbonyloxy group, hydroxybenzyloxycarbonyloxy group, methylbenzyloxycarbonyloxy group, trifluoromethylbenzyloxycarbonyloxy group, naphthylmethoxycarbonyloxy group, nitronaphthylmethoxycarbonyloxy group, cyanonaphthylmethoxycarbonyloxy group, hydroxynaphthylmethoxycarbonyloxy group, methylnaphthylmethoxycarbonyloxy group, trifluoromethylnaphthylmethoxycarbonyloxy group and fluorene-9-ylethoxycarbonyloxy group.

Examples of the substituted or unsubstituted aryloxycarbonyloxy groups used for $R^1$ to $R^{16}$ are aryloxycarbonyloxy groups which may have the substituents similar to the above-mentioned aryl groups, and preferably are aryloxycarbonyloxy groups of 7 to 11 in carbon number, such as phenoxycarbonyloxy group, 2-methylphenoxycarbonyloxy group, 4-methylphenoxycarbonyloxy group, 4-t-butylphenoxycarbonyloxy group, 2-methoxyphenoxycarbonyloxy group, 4-isopropylphenoxycarbonyloxy group, naphthoxycarbonyloxy group, ferrocenyloxycarbonyloxy group, cobaltcenyloxycarbonyloxy group, nickelocenyloxycarbonyloxy group, zirconocenyloxycarbonyloxy group, octamethylferrocenyloxycarbonyloxy group, octamethylcobaltcenyloxycarbonyloxy group, octamethylnickelocenyloxycarbonyloxy group and octamethylzirconocenyloxycarbonyloxy group.

Examples of the substituted or unsubstituted alkenyloxycarbonyloxy groups used for $R^1$ to $R^{16}$ are alkenyloxycarbonyloxy groups which may have the substituents similar to the above-mentioned alkyl groups, and are preferably alkenyloxycarbonyloxy groups of 3 to 11 in carbon number, such as vinyloxycarbonyloxy group, propenyloxycarbonyloxy group, 1-butenyloxycarbonyloxy group, iso-butenyloxycarbonyloxy group, 1-pentenyloxycarbonyloxy group, 2-pentenyloxycarbonyloxy group, cyclopentadienyloxycarbonyloxy group, 2-methyl-1-butenyloxycarbonyloxy group, 3-methyl-1-butenyloxycarbonyloxy group, 2-methyl-2-butenyloxycarbonyloxy group, 2,2-dicyanovinyloxycarbonyloxy group, 2-cyano-2-methylcarboxylvinyloxycarbonyloxy group, 2-cyano-2-methylsulfonvinyloxycarbonyloxy group, styryloxycarbonyloxy group and 4-phenyl-2-butenyloxycarbonyloxy group.

Examples of the monosubstituted aminocarbonyloxy groups used for $R^1$ to $R^{16}$ are monosubstituted aminocarbonyloxy groups which may have the substituents similar to the above-mentioned alkyl groups, and are preferably: monoalkylaminocarbonyloxy groups of 2 to 11 in carbon number, such as methylaminocarbonyloxy group, ethylaminocarbonyloxy group, propylaminocarbonyloxy group, butylaminocarbonyloxy group, pentylaminocarbonyloxy group, hexylaminocarbonyloxy group, heptylaminocarbonyloxy group, octylaminocarbonyloxy group, (2-ethylhexyl)aminocarbonyloxy group, cyclohexylaminocarbonyloxy group, (3,5,5-trimethylhexyl)aminocarbonyloxy group, nonylaminocarbonyloxy group and decylaminocarbonyloxy group;

monoaralkylaminocarbonyloxy groups of 8 to 11 in carbon number, such as benzylaminocarbonyloxy group, phenethylaminocarbonyloxy group, (3-phenylpropylaminocarbonyloxy group, (4-ethylbenzyl)aminocarbonyloxy group, (4-isopropylbenzyl)aminocarbonyloxy group, (4-methylbenzyl)aminocarbonyloxy group, (4-ethylbenzyl)aminocarbonyloxy group, (4-allylbenzyl)aminocarbonyloxy group, [4-(2-cyanoethyl)benzyl]aminocarbonyloxy group and [4-(2-acetoxyethyl)benzyl]aminocarbonyloxy group;

monoarylaminocarbonyloxy groups of 7 to 11 in carbon number, such as anilinocarbonyloxy group, naphthylaminocarbonyloxy group, toluidinocarbonyloxy group, xylidinocarbonyloxy group, ethylanilinocarbonyloxy group, isopropylanilinocarbonyloxy group, methoxyanilinocarbonyloxy group, ethoxyanilinocarbonyloxy group, chloroanilinocarbonyloxy group, acetylanilinocarbonyloxy group, methoxycarbonylanilinocarbonyloxy group, ethoxycarbonylanilinocarbonyloxy group, propoxycarbonylanilinocarbonyloxy group, 4-methylanilinocarbonyloxy group and 4-ethylanilinocarbonyloxy group;

monoalkenylaminocarbonyloxy groups of 3 to 11 in carbon number, such as vinylaminocarbonyloxy group, allylaminocarbonyloxy group, butenylaminocarbonyloxy group, pentenylaminocarbonyloxy group, hexenylaminocarbonyloxy group, cyclohexenylaminocarbonyloxy group, octadienylaminocarbonyloxy group and adamantenylaminocarbonyloxy group; and the like.

Examples of the disubstituted aminocarbonyloxy groups used for $R^1$ to $R^{16}$ are disubstituted aminocarbonyloxy groups which may have the substituents similar to the above-mentioned alkyl groups, and are preferably: dialkylaminocarbonyloxy groups of 3 to 17 in carbon number, such as dimethylaminocarbonyloxy group, diethylaminocarbonyloxy group, methylethylaminocarbonyloxy group, dipropylaminocarbonyloxy group, dibutylaminocarbonyloxy group, di-n-hexylaminocarbonyloxy group, dicyclohexylaminocarbonyloxy group, dioctylaminocarbonyloxy group, pyrrolidinocarbonyloxy group, piperidinocarbonyloxy group, morpholinocarbonyloxy group, bis(methoxyethyl)aminocarbonyloxy group, bis(ethoxyethyl)aminocarbonyloxy group, bis(propoxyethyl)aminocarbonyloxy group, bis(butoxyethyl)aminocarbonyloxy group, di(acetyloxyethyl)aminocarbonyloxy group, di(hydroxyethyl)aminocarbonyloxy group, N-ethyl-N-(2-cyanoethyl)aminocarbonyloxy group and di(propionyloxyethyl)aminocarbonyloxy group;

diaralkylaminocarbonyloxy groups of 15 to 21 in carbon number, such as dibenzylaminocarbonyloxy group, diphenethylaminocarbonyloxy group, bis(4-ethylbenzyl)aminocarbonyloxy group and bis(4-isopropylbenzyl)aminocarbonyloxy group;

diarylaminocarbonyloxy groups of 13 to 15 in carbon number, such as diphenylaminocarbonyloxy group, ditolylaminocarbonyloxy group and N-phenyl-N-tolylaminocarbonyloxy group;

dialkenylaminocarbonyloxy groups of 5 to 13 in carbon number, such as divinylaminocarbonyloxy group, diallylaminocarbonyloxy group, dibutenylaminocarbonyloxy group, dipentenylaminocarbonyloxy group, dihexenylaminocarbonyloxy group and N-vinyl-N-allylaminocarbonyloxy group;

and disubstituted aminocarbonyloxy groups of 4 to 11 in carbon number containing substituents selected from substituted or unsubstituted alkyl groups, aralkyl groups, aryl groups and alkenyl groups, such as N-phenyl-N-allylaminocarbonyloxy group, N-(2-acetyloxyethyl)-N-ethylaminocarbonyloxy group, N-tolyl-N-methylaminocarbonyloxy group, N-vinyl-N-methylaminocarbonyloxy group and N-benzyl-N-allylaminocarbonyloxy group.

As specific examples of the substituted or unsubstituted mercapto groups shown by $R^1$ to $R^{16}$: unsubstituted mercapto groups; and substituted or unsubstituted hydrocarbonthio groups such as alkylthio group, aralkylthio group, arylthio group and alkenylthio group, which may have oxygen atoms, substituted or unsubstituted sulfur atoms, and substituted or unsubstituted nitrogen atoms between carbon atoms, can be mentioned.

Examples of the substituted or unsubstituted alkylthio groups used for $R^1$ to $R^{16}$ are alkylthio groups which may have the substituents similar to the above-mentioned alkyl groups, and are preferably: normal chain, branched-chain or cyclic unsubstituted alkylthio groups of 1 to 15 in carbon number, such as methylthio group, ethylthio group, n-propylthio group, isopropylthio group, n-butylthio group, isobutylthio group, tert-butylthio group, sec-butylthio group, n-pentylthio group, isopentylthio group, tert-pentylthio group, sec-pentylthio group, cyclopentylthio group, n-hexylthio group, methylpentylthio group, dimethylbutylthio group, trimethylpropylthio group, 1-ethylbutylthio group, 2-ethylbutylthio group, 1-ethyl-2-methylpropylthio group, cyclohexylthio group, methylcyclopentylthio group, n-heptylthio group, methylhexylthio group, dimethylpentylthio group, ethylpentylthio group, trimethylbutylthio group, 1-ethyl-1-methylbutylthio group, 1-ethyl-2-methylbutylthio group, 1-ethyl-3-methylbutylthio group, 2-ethyl-1-methylbutylthio group, 2-ethyl-3-methylbutylthio group, 1-n-propylbutylthio group, 1-isopropylbutylthio group, 1-isopropyl-2-methylpropylthio group, methylcyclohexylthio group, n-octylthio group, 1-methylheptylthio group, 2-methylheptylthio group, 3-methylheptylthio group, 4-methylheptylthio group, 5-methylheptylthio group, 6-methylheptylthio group, 1,1-dimethylhexylthio group, 1,2-dimethylhexylthio group, 1,3-dimethylhexylthio group, 1,4-dimethylhexylthio group, 1,5-dimethylhexylthio group, 2,2-dimethylhexylthio group, 2,3-dimethylhexylthio group, 2,4-dimethylhexylthio group, 2,5-dimethylhexylthio group, 3,3-dimethylhexylthio group, 3,4-dimethylhexylthio group, 3,5-dimethylhexylthio group, 4,4-dimethylhexylthio group, 4,5-dimethylhexylthio group, 1-ethylhexylthio group, 2-ethylhexylthio group, 3-ethylhexylthio group, 4-ethylhexylthio group, 1-n-propylpentylthio group, 2-n-propylpentylthio group, 1-isopropylpentylthio group, 2-isopropylpentylthio group, 1-ethyl-1-methylpentylthio group, 1-ethyl-2-methylpentylthio group, 1-ethyl-3-methylpentylthio group, 1-ethyl-4-methylpentylthio group, 2-ethyl-1-methylpentylthio group, 2-ethyl-2-methylpentylthio group, 2-ethyl-3-methylpentylthio group, 2-ethyl-4-methylpentylthio group, 3-ethyl-1-methylpentylthio group, 3-ethyl-2-methylpentylthio group, 3-ethyl-3-methylpentylthio group, 3-ethyl-4-methylpentylthio group, trimethylpentylthio group, 1-n-butylbutylthio group, 1-isobutylbutylthio group, 1-sec-butylbutylthio group, 1-tert-butylbutylthio group, 2-tert-butylbutylthio group, 1-n-propyl-1-methylbutylthio group, 1-n-propyl-2-methylbutylthio group, 1-n-propyl-3-methylbutylthio group, 1-isopropyl-1-methylbutylthio group, 1-isopropyl-2-methylbutylthio group, 1-isopropyl-3-methylbutylthio group, diethylbutylthio group, 1-ethyl-1,2-dimethylbutylthio group, 1-ethyl-1,3-dimethylbutylthio group, 1-ethyl-2,3-dimethylbutylthio group, 2-ethyl-1,1-dimethylbutylthio group, 2-ethyl-1,2-dimethylbutylthio group, 2-ethyl-1,3-dimethylbutylthio group, 2-ethyl-2,3-dimethylbutylthio group, 1,1,3,3-tetramethylbutylthio group, 1,2-dimethylcyclohexylthio group, 1,3-dimethylcyclohexylthio group, 1,4-dimethylcyclohexylthio group, ethylcyclohexylthio group, n-nonylthio group, 3,5,5-trimethylhexylthio group, n-decylthio group, n-undecylthio group, n-dodecylthio group, 1-adamantylthio group and n-pentadecylthio group;

alkoxy-substituted alkylthio groups of 2 to 15 in carbon number, such as methoxymethylthio group, methoxyethylthio group, ethoxyethylthio group, n-propoxyethylthio group, isopropoxyethylthio group, n-butoxyethylthio group, isobutoxyethylthio group, tert-butoxyethylthio group, sec-butoxyethylthio group, n-pentyloxyethylthio group, isopentyloxyethylthio group, tert-pentyloxyethylthio group, sec-pentyloxyethylthio group, cyclopentyloxyethylthio group, n-hexyloxyethylthio group, ethylcyclohexyloxyethylthio group, n-nonyloxyethylthio group, (3,5,5-trimethylhexyloxy)ethylthio group, (3,5,5-trimethylhexyloxy)butylthio group, n-decyloxyethylthio group, n-undecyloxyethylthio group, n-dodecyloxyethylthio group, 3-methoxypropylthio group, 3-ethoxypropylthio group, 3-(n-propoxy)propylthio group, 2-isopropoxypropylthio group, 2-methoxybutylthio group, 2-ethoxybutylthio group, 2-(n-propoxy)butylthio group, 4-isopropoxybutylthio group, decalyloxyethylthio group and adamantyloxyethylthio group;

alkoxyalkoxy-substituted normal chain, branched-chain or cyclic alkylthio groups of 3 to 15 in carbon number, such as methoxymethoxymethylthio group, ethoxymethoxymethylthio group, propoxymethoxymethylthio group, butoxymethoxymethylthio group, methoxyethoxymethylthio group, ethoxyethoxymethylthio group, propoxyethoxymethylthio group, butoxyethoxymethylthio group, methoxypropoxymethylthio group, ethoxypropoxymethylthio group, propoxypropoxymethylthio group, butoxypropoxymethylthio group, methoxybutoxymethylthio group, ethoxybutoxymethylthio group, propoxybutoxymethylthio group, butoxybutoxymethylthio group, methoxymethoxyethylthio group, ethoxymethoxyethylthio group, propoxymethoxyethylthio group, butoxymethoxyethylthio group, methoxyethoxyethylthio group, ethoxyethoxyethylthio group, propoxyethoxyethylthio group, butoxyethoxyethylthio group, methoxypropoxyethylthio group, ethoxypropoxyethylthio group, propoxypropoxyethylthio group, butoxypropoxyethylthio group, methoxybutoxyethylthio group, ethoxybutoxyethylthio group, propoxybutoxyethylthio group, butoxybutoxyethylthio group, methoxymethoxypropylthio group, ethoxymethoxypropylthio group, propoxymethoxypropylthio group, butoxymethoxypropylthio group, methoxyethoxypropylthio group, ethoxyethoxypropylthio group, propoxyethoxypropylthio group, butoxyethoxypropylthio group, methoxypropoxypropylthio group, ethoxypropoxypropylthio group, propoxypropoxypropylthio group, butoxypropoxypropylthio group, methoxybutoxypropylthio group, ethoxybutoxypropylthio group, propoxybutoxypropylthio group, butoxybutoxypropylthio group, methoxymethoxybutylthio group, ethoxymethoxybutylthio group, propoxymethoxybutylthio group, butoxymethoxybutylthio group, methoxyethoxybutylthio group, ethoxyethoxybutylthio group, propoxyethoxybutylthio group, butoxyethoxybutoxy group, methoxypropoxybutylthio group, ethoxypropoxybutylthio group, propoxypropoxybutylthio group, butoxypropoxybutylthio group, methoxybutoxybutylthio group, ethoxybutoxybutylthio group, propoxybutoxybutylthio group, butoxybutoxybutylthio group, (4-ethylcyclohexyloxy) ethoxyethylthio group, (2-ethyl-1-hexyloxy)ethoxypropylthio group and [4-(3,5,5-trimethylhexyloxy)butoxy]ethylthio group;

alkoxycarbonyl-substituted alkylthio groups of 3 to 10 in carbon number, such as methoxycarbonylmethylthio group, ethoxycarbonylmethylthio group, n-propoxycarbonylmethylthio group, isopropoxycarbonylmethylthio group and (4'-ethylcyclohexyloxy)carbonylmethylthio group;

acyl-substituted alkylthio groups of 3 to 10 in carbon number, such as acetylmethylthio group, ethylcarbonylmethylthio group, octylcarbonylmethylthio group and phenacylthio group;

acylthio-substituted alkylthio groups of 3 to 10 in carbon number, such as acetyloxymethylthio group, acetyloxyethylthio group, acetyloxyhexylthio group and butanoyloxycyclohexylthio group;

alkylamino-substituted alkylthio groups of 2 to 10 in carbon number, such as methylaminomethylthio group, 2-methylaminoethylthio group, 2-(2-methylaminoethoxy)ethylthio group, 4-methylaminobutylthio group, 1-methylaminopropane-2-ylthio group, 3-methylaminopropylthio group, 2-methylamino-2-methylpropylthio group, 2-ethylaminoethylthio group, 2-(2-ethylaminoethoxy)ethylthio group, 3-ethylaminopropylthio group, 1-ethylaminopropylthio group, 2-isopropylaminoethylthio group, 2-(n-butylamino)ethylthio group, 3-(n-hexylamino)propylthio group and 4-(cyclohexylamino)butylthio group;

alkylaminoalkylthio-substituted alkylthio groups of 3 to 10 in carbon number, such as methylaminomethoxymethylthio group, methylaminoethoxyethylthio group, methylaminoethoxypropylthio group, ethylaminoethoxypropylthio group and 4-(2'-isobutylaminopropoxy)butylthio group;

dialkylamino-substituted alkylthio groups of 3 to 15 in carbon number, such as dimethylaminomethylthio group, 2-dimethylaminoethylthio group, 2-(2-dimethylaminoethoxy)ethylthio group, 4-dimethylaminobutylthio group, 2-dimethylaminopropane-2-ylthio group, 3-dimethylaminopropylthio group, 2-dimethylamino-2-methylpropylthio group, 2-diethylaminoethylthio group, 2-(2-diethylaminoethoxy)ethylthio group, 3-diethylaminopropylthio group, 1-diethylaminopropylthio group, 2-diisopropylaminoethylthio group, 2-(di-n-butylamino)ethylthio group, 2-piperidylethylthio

group and 3-(di-n-hexylamino)propylthio group;

dialkylaminoalkylthio-substituted alkylthio groups of 4 to 15 in carbon number, such as dimethylaminomethoxymethylthio group, dimethylaminoethoxyethylthio group, dimethylaminoethoxypropylthio group, diethylaminoethoxypropylthio group and 4-(2'-diisobutylaminopropoxy)butylthio group;

alkylthio-substituted alkylthio groups of 2 to 15 in carbon number, such as methylthiomethylthio group, 2-methylthioethylthio group, 2-ethylthioethylthio group, 2-n-propylthioethylthio group, 2-isopropylthioethylthio group, 2-n-butylthioethylthio group, 2-isobutylthioethylthio group and (3,5,5-trimethylhexylthio)hexylthio group;

and the like; more preferably alkylthio groups of 1 to 10 in carbon number, such as methylthio group, ethylthio group, n-propylthio group, iso-propylthio group, n-butylthio group, iso-butylthio group, sec-butylthio group, t-butylthio group, n-pentylthio group, iso-pentylthio group, neopentylthio group, 2-methylbutylthio group, n-hexylthio group, n-heptylthio group, n-octylthio group, 2-ethylhexylthio group, 3,5,5-trimethylhexylthio group, decalylthio group, methoxyethylthio group, ethoxyethylthio group, methoxyethoxyethylthio group, ethoxyethoxyethylthio group and n-decylthio group.

Examples of the substituted or unsubstituted aralkylthio groups used for $R^1$ to $R^{16}$ are aralkylthio groups which may have the substituents similar to the above-mentioned alkyl groups, and are preferably aralkylthio groups of 7 to 15 in carbon number and the like, such as benzylthio group, nitrobenzylthio group, cyanobenzylthio group, hydroxybenzylthio group, methylbenzylthio group, trifluoromethylbenzylthio group, naphthylmethylthio group, nitronaphthylmethylthio group, cyanonaphthylmethylthio group, hydroxynaphthylmethylthio group, methylnaphthylmethylthio group, trifluoromethylnaphthylmethylthio group and fluorene-9-ylethylthio group.

Examples of the substituted or unsubstituted arylthio groups used for $R^1$ to $R^{16}$ are arylthio groups which may have the substituents similar to the above-mentioned alkyl groups, and are preferably arylthio groups of 6 to 18 in carbon number, such as phenylthio group, 2-methylphenylthio group, 4-methylphenylthio group, 4-t-butylphenylthio group, 2-methoxyphenylthio group, 4-isopropylphenylthio group, tolylthio group, naphthylthio group, ferrocenylthio group, cobaltcenylthio group, nickelocenylthio group, octamethylferrocenylthio group, octamethylcobaltcenylthio group and octamethylnickelocenylthio group.

Also, as examples of substituted or unsubstituted heteroarylthio groups used for $R^1$ to $R^{16}$, which are arylthio groups having oxygen atoms, substituted or unsubstituted sulfur atoms, and substituted or unsubstituted nitrogen atoms between carbon atoms, heteroarylthio groups made by the aforementioned heteroaryl groups bonding with oxygen atoms can be mentioned.

Examples of the substituted or unsubstituted alkenylthio groups used for $R^1$ to $R^{16}$ are alkenylthio groups which may have the substituents similar to the above-mentioned alkyl groups, and are preferably alkenylthio groups of 2 to 10 in carbon number, such as vinylthio group, propenylthio group, 1-butenylthio group, iso-butenylthio group, 1-pentenylthio group, 2-pentenylthio group, 2-methyl-1-butenylthio group, 3-methyl-1-butenylthio group, 2-methyl-2-butenylthio group, cyclopentadienylthio group, 2,2-dicyanovinylthio group, 2-cyano-2-methylcarboxylvinylthio group, 2-cyano-2-methylsulfonvinylthio group, styrylthio group, 4-phenyl-2-butenylthio group and cinnamylalkoxy group.

Also, as the substituted hydrocarbonthio groups shown by $R^1$ to $R^{16}$, oxo-substituted hydrocarbonthio groups whose carbon atoms directly linked to sulfur atoms directly linked to azaannulene rings can be mentioned. As specific examples, substituted or unsubstituted acylthio groups; substituted or unsubstituted hydrocarbonoxycarbonylthio groups such as alkoxycarbonylthio group, aralkyloxycarbonylthio group, aryloxycarbonylthio group and alkenyloxycarbonylthio group; substituted or unsubstituted hydrocarbonaminocarbonylthio groups such as monosubstituted aminocarbonylthio group and disubstituted aminocarbonylthio group; and the like can be mentioned.

Examples of the substituted or unsubstituted acylthio groups used for $R^1$ to $R^{16}$ are acylthio groups which may have the substituents similar to the above-mentioned alkyl groups, and are preferably acylthio groups of 1 to 15 in carbon number, such as formylthio group, methylcarbonylthio group, ethylcarbonylthio group, n-propylcarbonylthio group, iso-propylcarbonylthio group, n-butylcarbonylthio group, iso-butylcarbonylthio group, sec-butylcarbonylthio group, t-butylcarbonylthio group, n-pentylcarbonylthio group, iso-pentylcarbonylthio group, neopentylcarbonylthio group, 2-methylbutylcarbonylthio group, benzoylthio group, methylbenzoylthio group, ethylbenzoylthio group, tolylcarbonylthio group, propylbenzoylthio group, 4-t-butylbenzoylthio group, nitrobenzylcarbonylthio group, 3-butoxy-2-naphthoylthio group, cinnamoylthio group, ferrocenecarbonylthio group and 1-methylferrocene-1'-carbonylthio group.

Examples of the substituted or unsubstituted alkoxycarbonylthio groups used for $R^1$ to $R^{16}$ are alkoxycarbonylthio groups which may have the substituents similar to the above-mentioned alkyl groups, and are preferably: alkoxycarbonylthio groups of 2 to 11 in carbon number, such as methoxycarbonylthio group, ethoxycarbonylthio group, n-propoxycarbonylthio group, isopropoxycarbonylthio group, n-butoxycarbonylthio group, isobutoxycarbonylthio group, sec-butoxycarbonylthio group, t-butoxycarbonylthio group, n-pentoxycarbonylthio group, isopentoxycarbonylthio group, neopentoxycarbonylthio group, 2-pentoxycarbonylthio group, 2-ethylhexyloxycarbonylthio group, 3,5,5-trimethylhexyloxycarbonylthio group, decalyloxycarbonylthio group, cyclohexyloxycarbonylthio group, chloroethoxycarbonylthio group, hydroxymethoxycarbonylthio group and hydroxyethoxycarbonylthio group;

alkylthio-substituted alkoxycarbonylthio groups of 3 to 11 in carbon number, such as methoxymethoxycarbonylthio group, methoxyethoxycarbonylthio group, ethoxyethoxycarbonylthio group, propoxyethoxycarbonylthio group, butoxyethoxycarbonylthio group, pentoxyethoxycarbonylthio group, hexyloxyethoxycarbonylthio group, butoxybutoxycarbonylthio group, hexyloxybutoxycarbonylthio group, hydroxymethoxymethoxycarbonylthio group and hydroxyethoxyethoxycarbonylthio group;

alkoxyalkoxy-substituted alkoxycarbonylthio groups of 4 to 11 in carbon number, such as methoxymethoxymethoxycarbonylthio group, methoxyethoxyethoxycarbonylthio group, ethoxyethoxyethoxycarbonylthio group, propoxyethoxyethoxycarbonylthio group, butoxyethoxyethoxycarbonylthio group, pentoxyethoxyethoxycarbonylthio group and hexyloxyethoxyethoxycarbonylthio group;

metallocenyl-substituted alkoxycarbonylthio groups of 11 to 20 in carbon number, such as ferrocenylmethoxycarbonylthio group, ferrocenylethoxycarbonylthio group, ferrocenylpropoxycarbonylthio group, ferrocenylbutoxycarbonylthio group, ferrocenylpentyloxycarbonylthio group, ferrocenylhexyloxycarbonylthio group, ferrocenylheptyloxycarbonylthio group, ferrocenyloctyloxycarbonylthio group, ferrocenylnonyloxycarbonylthio group, ferrocenyldecyloxycarbonylthio group;

cobaltcenylmethoxycarbonylthio group, cobaltcenylethoxycarbonylthio group,

nickelocenylmethoxycarbonylthio group, nickelocenylethoxycarbonylthio group,

dichlorotitanocenylmethoxycarbonylthio group, trichlorotitaniumcyclopentadienylmethoxycarbonylthio group, bis (trifluoromethanesulfonato)titanocenemethoxycarbonylthio group, dichlorozirconocenylmethoxycarbonylthio group, dimethylzirconocenylmethoxycarbonylthio group, diethoxyzirconocenylmethoxycarbonylthio group, bis(cyclopentadienyl)chromiummethoxycarbonylthio group, bis(cyclopentadienyl)dichlorohafniummethoxycarbonylthio group, bis(cyclopentadienyl)dichloroniobiummethoxycarbonylthio group, bis(cyclopentadienyl)rutheniummethoxycarbonylthio group, bis(cyclopentadienyl)vanadiummethoxycarbonylthio group, bis(cyclopentadienyl)dichlorovanadiummethoxycarbonylthio group and bis(cyclopentadienyl)osmiummethoxycarbonylthio group; and the like.

Examples of the substituted or unsubstituted aralkyloxycarbonylthio groups used for $R^1$ to $R^{16}$ are aralkyloxycarbonylthio groups which may have the substituents similar to the above-mentioned alkyl groups, and are preferably aralkyloxycarbonylthio groups of 8 to 16 in carbon number and the like, such as benzyloxycarbonylthio group, nitrobenzyloxycarbonylthio group, cyanobenzyloxycarbonylthio group, hydroxybenzyloxycarbonylthio group, methylbenzyloxycarbonylthio group, trifluoromethylbenzyloxycarbonylthio group, naphthylmethoxycarbonylthio group, nitronaphthylmethoxycarbonylthio group, cyanonaphthylmethoxycarbonylthio group, hydroxynaphthylmethoxycarbonylthio group, methylnaphthylmethoxycarbonylthio group, trifluoromethylnaphthylmethoxycarbonylthio group and fluorene-9-ylethoxycarbonylthio group.

Examples of the substituted or unsubstituted aryloxycarbonylthio groups used for $R^1$ to $R^{16}$ are aryloxycarbonylthio groups which may have the substituents similar to the above-mentioned aryl groups, and are preferably aryloxycarbonylthio groups of 7 to 11 in carbon number, such as phenoxycarbonylthio group, 2-methylphenoxycarbonylthio group, 4-methylphenoxycarbonylthio group, 4-t-butylphenoxycarbonylthio group, 2-methoxyphenoxycarbonylthio group, 4-isopropylphenoxycarbonylthio group, naphthoxycarbonylthio group, ferrocenyloxycarbonylthio group, cobaltcenyloxycarbonylthio group, nickelocenyloxycarbonylthio group, zirconocenyloxycarbonylthio group, octamethylferrocenyloxycarbonylthio group, octamethylcobaltcenyloxycarbonylthio group, octamethylnickelocenyloxycarbonylthio group and octamethylzirconocenyloxycarbonylthio group.

Examples of the substituted or unsubstituted alkenyloxycarbonylthio groups used for $R^1$ to $R^{16}$ are alkenyloxycarbonylthio groups which may have the substituents similar to the above-mentioned alkyl groups, and are preferably alkenyloxycarbonylthio groups of 3 to 11 in carbon number, such as vinyloxycarbonylthio group, propenyloxycarbonylthio group, 1-butenyloxycarbonylthio group, iso-butenyloxycarbonylthio group, 1-pentenyloxycarbonylthio group, 2-pentenyloxycarbonylthio group, cyclopentadienyloxycarbonylthio group, 2-methyl-1-butenyloxycarbonylthio group, 3-methyl-1-butenyloxycarbonylthio group, 2-methyl-2-butenyloxycarbonylthio group, 2,2-dicyanovinyloxycarbonylthio group, 2-cyano-2-methylcarboxylvinyloxycarbonylthio group, 2-cyano-2-methylsulfonvinyloxycarbonylthio group, styryloxycarbonylthio group and 4-phenyl-2-butenyloxycarbonylthio group.

Examples of the monosubstituted aminocarbonylthio groups used for $R^1$ to $R^{16}$ are monosubstituted aminocarbonylthio groups which may have the substituents similar to the above-mentioned alkyl groups, and are preferably: monoalkylaminocarbonylthio groups of 2 to 11 in carbon number, such as methylaminocarbonylthio group, ethylaminocarbonylthio group, propylaminocarbonylthio group, butylaminocarbonylthio group, pentylaminocarbonylthio group, hexylaminocarbonylthio group, heptylaminocarbonylthio group, octylaminocarbonylthio group, (2-ethylhexyl)aminocarbonylthio group, cyclohexylaminocarbonylthio group, (3,5,5-trimethylhexyl)aminocarbonylthio group, nonylaminocarbonylthio group and decylaminocarbonylthio group;

monoaralkylaminocarbonylthio groups of 8 to 11 in carbon number, such as benzylaminocarbonylthio group, phenethylaminocarbonylthio group, (3-phenylpropylaminocarbonylthio group, (4-ethylbenzyl)aminocarbonylthio group, (4-isopropylbenzyl)aminocarbonylthio group, (4-methylbenzyl)aminocarbonylthio group, (4-ethylbenzyl)aminocarbonylthio group, (4-allylbenzyl)aminocarbonylthio group, [4-(2-cyanoethyl)benzyl]aminocarbonylthio group and [4-(2-acetoxyethyl)benzyl]aminocarbonylthio group;

monoarylaminocarbonylthio groups of 7 to 11 in carbon number, such as anilinocarbonylthio group, naphthylaminocarbonylthio group, toluidinocarbonylthio group, xylidinocarbonylthio group, ethylanilinocarbonylthio group, isopropylanilinocarbonylthio group, methoxyanilinocarbonylthio group, ethoxyanilinocarbonylthio group, chloroanilinocarbonylthio group, acetylanilinocarbonylthio group, methoxycarbonylanilinocarbonylthio group, ethoxycarbonylanilinocarbonylthio group, propoxycarbonylanilinocarbonylthio group, 4-methylanilinocarbonylthio group and 4-ethylanilinocarbonylthio group;

monoalkenylaminocarbonylthio groups of 3 to 11 in carbon number, such as vinylaminocarbonylthio group, allylaminocarbonylthio group, butenylaminocarbonylthio group, pentenylaminocarbonylthio group, hexenylaminocarbonylthio group, cyclohexenylaminocarbonylthio group, octadienylaminocarbonylthio group and adamantenylaminocarbonylthio group; and the like.

Examples of the disubstituted aminocarbonylthio groups used for $R^1$ to $R^{16}$ are disubstituted aminocarbonylthio groups which may have the substituents similar to the above-mentioned alkyl groups, and are preferably: dialkylaminocarbonylthio groups of 3 to 17 in carbon number, such as dimethylaminocarbonylthio group, diethylaminocarbonylthio group, methylethylaminocarbonylthio group, dipropylaminocarbonylthio group, dibutylaminocarbonylthio group, di-n-hexylaminocarbonylthio group, dicyclohexylaminocarbonylthio group, dioctylaminocarbonylthio group, pyrrolidinocarbonylthio group, piperidinocarbonylthio group, morpholinocarbonylthio group, bis(methoxyethyl)aminocarbonylthio group, bis(ethoxyethyl)aminocarbonylthio group, bis(propoxyethyl)aminocarbonylthio group, bis(butoxyethyl)aminocarbonylthio group, di(acetyloxyethyl)aminocarbonylthio group, di(hydroxyethyl)aminocarbonylthio group, N-ethyl-N-(2-cyanoethyl)aminocarbonylthio group and di(propionyloxyethyl)aminocarbonylthio group;

diaralkylaminocarbonylthio groups of 15 to 21 in carbon number, such as dibenzylaminocarbonylthio group, diphenethylaminocarbonylthio group, bis(4-ethylbenzyl)aminocarbonylthio group and bis(4-isopropylbenzyl)aminocarbonylthio group;

diarylaminocarbonylthio groups of 13 to 15 in carbon number, such as diphenylaminocarbonylthio group, ditolylaminocarbonylthio group and N-phenyl-N-tolylaminocarbonylthio group;

dialkenylaminocarbonylthio groups of 5 to 13 in carbon number, such as divinylaminocarbonylthio group, diallylaminocarbonylthio group, dibutenylaminocarbonylthio group, dipentenylaminocarbonylthio group, dihexenylaminocarbonylthio group and N-vinyl-N-allylaminocarbonylthio group;

and disubstituted aminocarbonylthio groups of 4 to 11 in carbon number containing substituents selected from substituted or unsubstituted alkyl groups, aralkyl groups, aryl groups and alkenyl groups, such as N-phenyl-N-allylaminocarbonylthio group, N-(2-acetyloxyethyl)-N-ethylaminocarbonylthio group, N-tolyl-N-methylaminocarbonylthio group, N-vinyl-N-methylaminocarbonylthio group and N-benzyl-N-allylaminocarbonylthio group.

As specific examples of the substituted or unsubstituted amino groups shown by $R^1$ to $R^{16}$: unsubstituted amino groups; and monosubstituted amino groups and disubstituted amino groups, which may have oxygen atoms, substituted or unsubstituted sulfur atoms, and substituted or unsubstituted nitrogen atoms between carbon atoms, can be mentioned.

Examples of the monosubstituted amino groups used for $R^1$ to $R^{16}$ are monosubstituted amino groups which may have the substituents similar to the above-mentioned alkyl groups, and are preferably the following monoalkylamino groups: normal chain, branched-chain or cyclic unsubstituted monoalkylamino groups of 1 to 15 in carbon number, such as methylamino group, ethylamino group, n-propylamino group, isopropylamino group, n-butylamino group, isobutylamino group, tert-butylamino group, sec-butylamino group, n-pentylamino group, isopentylamino group, tert-pentylamino group, sec-pentylamino group, cyclopentylamino group, n-hexylamino group, 1-methylpentylamino group, 2-methylpentylamino group, 3-methylpentylamino group, 4-methylpentylamino group, 1,1-dimethylbutylamino group, 1,2-dimethylbutylamino group, 1,3-dimethylbutylamino group, 2,3-dimethylbutylamino group, 1,1,2-trimethylpropylamino group, 1,2,2-trimethylpropylamino group, 1-ethylbutylamino group, 2-ethylbutylamino group, 1-ethyl-2-methylpropylamino group, cyclohexylamino group, methylcyclopentylamino group, n-heptylamino group, 1-methylhexylamino group, 2-methylhexylamino group, 3-methylhexylamino group, 4-methylhexylamino group, 5-methylhexylamino group, dimethylpentylamino group, 1-ethylpentylamino group, 2-ethylpentylamino group, 3-ethylpentylamino group, trimethylbutylamino group, 1-ethyl-1-methylbutylamino group, 1-ethyl-2-methylbutylamino group, 1-ethyl-3-methylbutylamino group, 2-ethyl-1-methylbutylamino group, 2-ethyl-3-methylbutylamino group, 1-n-propylbutylamino group, 1-isopropylbutylamino group, 1-isopropyl-2-methylpropylamino group, methylcyclohexylamino group, n-octylamino group, 1-methylheptylamino group, 2-methylheptylamino group, 3-methylheptylamino group, 4-methylheptylamino group, 5-methylheptylamino group, 6-methylheptylamino group, dimethylhexylamino group, 1-ethylhexylamino group, 2-ethylhexylamino group, 3-ethylhexylamino group, 4-ethylhexylamino group, 1-n-propylpentylamino group, 2-n-propylpentylamino group, 1-isopropylpentylamino group, 2-isopropylpentylamino group, 1-ethyl-1-methylpentylamino group, 1-ethyl-2-methylpentylamino group, 1-ethyl-3-methylpentylamino group, 1-ethyl-4-methylpentylamino group, 2-ethyl-1-methylpentylamino group, 2-ethyl-2-methylpentylamino group, 2-ethyl-3-methylpentylamino group, 2-ethyl-4-methylpentylamino group, 3-ethyl-1-methylpentylamino group, 3-ethyl-2-methylpentylamino group, 3-ethyl-3-methylpentylamino group, 3-ethyl-4-methylpentylamino group, trimethylpentylamino group, 1-n-butylbutylamino group, 1-isobutylbutylamino group, 1-sec-butylbutylamino group, 1-tert-butylbutylamino group, 2-tert-butylbutylamino group, 1-n-propyl-1-methylbutylamino group, 1-n-propyl-2-methylbutylamino group, 1-n-propyl-3-methylbutylamino group, 1-isopropyl-1-methylbutylamino group, 1-isopropyl-2-methylbutylamino group, 1-isopropyl-3-methylbutylamino group, 1,1-diethylbutylamino group, 1,2-diethylbutylamino group, 1-ethyl-1,2-dimethylbutylamino group, 1-ethyl-1,3-dimethylbutylamino group, 1-ethyl-2,3-dimethylbutylamino group, 2-ethyl-1,2-dimethylbutylamino group, 2-ethyl-1,2-dimethylbutylamino group, 2-ethyl-1,3-dimethylbutylamino group, 2-ethyl-2,3-dimethylbutylamino group, 1,1,3,3-tetramethylbutylamino group, 1,2-dimethylcyclohexylamino group, 1,3-dimethylcyclohexylamino group, 1,4-dimethylcyclohexylamino group, ethylcyclohexylamino group, n-nonylamino group, 3,5,5-trimethylhexylamino group, n-decylamino group, n-undecylamino group, n-dodecylamino group, 1-adamantylamino group and n-pentadecylamino group;

alkoxy-substituted monoalkylamino groups of 2 to 15 in carbon number, such as methoxymethylamino group, methoxyethylamino group, ethoxyethylamino group, n-propoxyethylamino group, isopropoxyethylamino group, n-butoxyethylamino group, isobutoxyethylamino group, tert-butoxyethylamino group, sec-butoxyethylamino group, n-pentyloxyethylamino group, isopentyloxyethylamino group, tert-pentyloxyethylamino group, sec-pentyloxyethylamino group, cyclopentyloxyethylamino group, n-hexyloxyethylamino group, ethylcyclohexyloxyethylamino group, n-nonyloxyethylamino group, (3,5,5-trimethylhexyloxy)ethylamino group, (3,5,5-trimethylhexyloxy)butylamino group, n-decyloxyethylamino group, n-undecyloxyethylamino group, n-dodecyloxyethylamino group, 3-methoxypropylamino group, 3-ethoxypropylamino group, 3-(n-propoxy)propylamino group, 2-isopropoxypropylamino group, 2-methoxybutylamino group, 2-ethoxybutylamino group, 2-(n-propoxy)butylamino group, 4-isopropoxybutylamino group, decalyloxyethylamino group and adamantyloxyethylamino group;

alkoxyalkoxy-substituted normal chain, branched-chain or cyclic monoalkylamino groups of 3 to 15 in carbon number, such as methoxymethoxymethylamino group, ethoxymethoxymethylamino group, propoxymethoxymethylamino group, butoxymethoxymethylamino group, methoxyethoxymethylamino group, ethoxyethoxymethylamino group, propoxyethoxymethylamino group, butoxyethoxymethylamino group, methoxypropoxymethylamino group, ethoxypropoxymethylamino group, propoxypropoxymethylamino group, butoxypropoxymethylamino group, methoxybutoxymethylamino group, ethoxybutoxymethylamino group, propoxybutoxymethylamino group, butoxybutoxymethylamino group, methoxymethoxyethylamino group, ethoxymethoxyethylamino group, propoxymethoxyethylamino group, butoxymethoxyethylamino group, methoxyethoxyethylamino group, ethoxyethoxyethylamino group, propoxyethoxyethylamino group, butoxyethoxyethylamino group, methoxypropoxyethylamino group, ethoxypropoxyethylamino group, propoxypropoxyethylamino group, butoxypropoxyethylamino group, methoxybutoxyethylamino group, ethoxybutoxyethylamino group, propoxybutoxyethylamino group, butoxybutoxyethylamino group, methoxymethoxypropylamino group, ethoxymethoxypropylamino group, propoxymethoxypropylamino group, butoxymethoxypropylamino group, methoxyethoxypropylamino group, ethoxyethoxypropylamino group, propoxyethoxypropylamino group, butoxyethoxypropylamino group, methoxypropoxypropylamino group, ethoxypropoxypropylamino group, propoxypropoxypropylamino group, butoxypropoxypropylamino group, methoxybutoxypropylamino group, ethoxybutoxypropylamino group, propoxybutoxypropylamino group, butoxybutoxypropylamino group, methoxymethoxybutylamino group, ethoxymethoxybutylamino group, propoxymethoxybutylamino group, butoxymethoxybutylamino group, methoxyethoxybutylamino group, ethoxyethoxybutylamino group, propoxyethoxybutylamino group, butoxyethoxybutoxy group, methoxypropoxybutylamino group, ethoxypropoxybutylamino group, propoxypropoxybutylamino group, butoxypropoxybutylamino group, methoxybutoxybutylamino group, ethoxybutoxybutylamino group, propoxybutoxybutylamino group, butoxybutoxybutylamino group, (4-ethylcyclohexyloxy)ethoxyethylamino group, (2-ethyl-1-hexyloxy)ethoxypropylamino group and [4-(3,5,5-trimethylhexyloxy)butoxy]ethylamino group;

alkoxycarbonyl-substituted monoalkylamino groups of 3 to 10 in carbon number, such as methoxycarbonylmethylamino group, ethoxycarbonylmethylamino group, n-propoxycarbonylmethylamino group, isopropoxycarbonylmethylamino group and (4'-ethylcyclohexyloxy)carbonylmethylamino group;

acyl-substituted monoalkylamino groups of 3 to 10 in carbon number, such as acetylmethylamino group, ethylcarbonylmethylamino group, octylcarbonylmethylamino group and phenacylamino group;

acylamino-substituted monoalkylamino groups of 3 to 10 in carbon number, such as acetyloxymethylamino group, acetyloxyethylamino group, acetyloxyhexylamino group and butanoyloxycyclohexylamino group;

monoalkylamino-substituted monoalkylamino groups of 2 to 10 in carbon number, such as methylaminomethylamino group, 2-methylaminoethylamino group, 2-(2-methylaminoethoxy)ethylamino group, 4-methylaminobutylamino group, 1-methylaminopropane-2-ylamino group, 3-methylaminopropylamino group, 2-methylamino-2-methylpropylamino group, 2-ethylaminoethylamino group, 2-(2-ethylaminoethoxy)ethylamino group, 3-ethylaminopropylamino group, 1-ethylaminopropylamino group, 2-isopropylaminoethylamino group, 2-(n-butylamino)ethylamino group, 3-(n-hexylamino)propylamino group and 4-(cyclohexylamino)butylamino group;

alkylaminomonoalkylamino-substituted monoalkylamino groups of 3 to 10 in carbon number, such as methylaminomethoxymethylamino group, methylaminoethoxyethylamino group, methylaminoethoxypropylamino group, ethylaminoethoxypropylamino group and 4-(2'-isobutylaminopropoxy)butylamino group;

dimonoalkylamino-substituted monoalkylamino groups of 3 to 15 in carbon number, such as dimethylaminomethylamino group, 2-dimethylaminoethylamino group, 2-(2-dimethylaminoethoxy)ethylamino group, 4-dimethylaminobutylamino group, 1-dimethylaminopropane-2-ylamino group, 3-dimethylaminopropylamino group, 2-dimethylamino-2-methylpropylamino group, 2-diethylaminoethylamino group, 2-(2-diethylaminoethoxy)ethylamino group, 3-diethylaminopropylamino group, 1-diethylaminopropylamino group, 2-diisopropylaminoethylamino group, 2-(di-n-butylamino)ethylamino group, 2-piperidylethylamino group and 3-(di-n-hexylamino)propylamino group;

dialkylaminomonoalkylamino-substituted monoalkylamino groups of 4 to 15 in carbon number, such as dimethylaminomethoxymethylamino group, dimethylaminoethoxyethylamino group, dimethylaminoethoxypropylamino group, diethylaminoethoxypropylamino group and 4-(2'-diisobutylaminopropoxy)butylamino group;

monoalkylamino-substituted monoalkylamino groups of 2 to 15 in carbon number, such as methylthiomethylamino group, 2-methylthioethylamino group, 2-ethylthioethylamino group, 2-n-propylthioethylamino group, 2-isopropylthioethylamino group, 2-n-butylthioethylamino group, 2-isobutylthioethylamino group and (3,5,5-trimethylhexylthio)hexylamino group;

and the like; more preferably the following monosubstituted amino groups: monoalkylamino groups of 1 to 10 in carbon number, such as methylamino group, ethylamino group, n-propylamino group, iso-propylamino group, n-butylamino group, iso-butylamino group, sec-butylamino group, t-butylamino group, n-pentylamino group, iso-pentylamino group, neopentylamino group, 2-methylbutylamino group, n-hexylamino group, n-heptylamino group, n-octylamino group, 2-ethylhexylamino group, 3,5,5-trimethylhexylamino group, decalylamino group, methoxyethylamino group, ethoxyethylamino group, methoxyethoxyethylamino group, ethoxyethoxyethylamino group and n-decylamino group;

monoaralkylamino groups of 7 to 10 in carbon number, such as benzylamino group, phenethylamino group, (3-phenylpropyl)amino group, (4-ethylbenzyl)amino group, (4-isopropylbenzyl) amino group, (4-methylbenzyl)amino group, (4-ethylbenzyl)amino group, (4-allylbenzyl)amino group, [4-(2-cyanoethyl)benzyl]amino group and [4-(2-acetoxyethyl)benzyl]amino group;

monoarylamino groups of 6 to 10 in carbon number, such as anilino group, naphthylamino group, toluidino group, xylidino group, ethylanilino group, isopropylanilino group, methoxyanilino group, ethoxyanilino group, chloroanilino group, acetylanilino group, methoxycarbonylanilino group, ethoxycarbonylanilino group, propoxycarbonylanilino group, 4-methylanilino group, 4-ethylanilino group, ferrocenylamino group, cobaltcenylamino group, nickelocenylamino group, zirconocenylamino group, octamethylferrocenylamino group, octamethylcobaltcenylamino group, octamethylnickelocenylamino group and octamethylzirconocenylamino group;

monoalkenylamino groups of 2 to 10 in carbon number, such as vinylamino group, allylamino group, butenylamino group, pentenylamino group, hexenylamino group, cyclohexenylamino group, cyclopentadienylamino group, octadienylamino group and adamantenylamino group;

acylamino groups of 1 to 16 in carbon number, such as formylamino group, methylcarbonylamino group, ethylcarbonylamino group, n-propylcarbonylamino group, isopropylcarbonylamino group, n-butylcarbonylamino group, isobutylcarbonylamino group, sec-butylcarbonylamino group, t-butylcarbonylamino group, n-pentylcarbonylamino group, isopentylcarbonylamino group, neopentylcarbonylamino group, 2-methylbutylcarbonylamino group, benzoylamino group, methylbenzoylamino group, ethylbenzoylamino group, tolylcarbonylamino group, propylbenzoylamino group, 4-t-butylbenzoylamino group, nitrobenzylcarbonylamino group, 3-butoxy-2-naphthoylamino group, cinnamoylamino group, ferrocenecarbonylamino group, 1-methylferrocene-1'-carbonylamino group, cobaltcenecarbonylamino group and nickelocenecarbonylamino group; and the like.

Examples of the disubstituted amino groups used for $R^1$ to $R^{16}$ are disubstituted amino groups which may have the substituents similar to the above-mentioned alkyl groups, and are preferably: normal chain, branched-chain or cyclic unsubstituted dialkylamino groups of 1 to 15 in carbon number, such as dimethylamino group, diethylamino group, di(n-propyl)amino group, di (isopropyl) amino group, di(n-butyl)amino group, di (isobutyl) amino group, di(tert-butyl)amino group, di(sec-butyl)amino group, di(n-pentyl)amino group, di (isopentyl) amino group, di(tert-pentyl)amino group, di(sec-pentyl)amino group, di (cyclopentyl) amino group, di (n-hexyl) amino group, di(1-methylpentyl) amino group, di(2-methylpentyl)amino group, di(3-methylpentyl)amino group, di(4-methylpentyl)amino group, di(1,1-dimethylbutyl)amino group, di(1,2-dimethylbutyl) amino group, di(1,3-dimethylbutyl)amino group, di(2,3-dimethylbutyl)amino group, di(1,1,2-trimethylpropyl) amino group, di(1,2,2-trimethylpropyl)amino group, di(1-ethylbutyl)amino group, di (2-ethylbutyl)amino group, di(1-ethyl-2-methylpropyl)amino group, di(cyclohexyl)amino group, di(methylcyclopentyl) amino group, di(n-heptyl)amino group, di(1-methylhexyl)amino group, di(2-methylhexyl)amino group, di(3-methylhexyl)amino group, di(4-methylhexyl)amino group, di(5-methylhexyl)amino group, di(dimethylpentyl)amino group, di (1-ethylpentyl)amino group, di(2-ethylpentyl)amino group, di(3-ethylpentyl)amino group, di(trimethylbutyl)amino group, did-ethyl-1-methylbutyl)amino group, di(1-ethyl-2-methylbutyl)amino group, di(1-ethyl-3-methylbutyl)amino group, di (2-ethyl-1-methylbutyl)amino group, di(2-ethyl-3-methylbutyl)amino group, di(1-n-propylbutyl)amino group, di(1-isopropylbutyl)amino group, di(1-isopropyl-2-methylpropyl)amino group, di (methylcyclohexyl) amino group, di(n-octyl) amino group, di(1-methylheptyl)amino group, di(2-methylheptyl)amino group, di(3-methylheptyl)amino group, di (4-methylheptyl)amino group, di(5-methylheptyl) amino group, di(6-methylheptyl)amino group, di(dimethylhexyl)amino

group, di(1-ethylhexyl)amino group, di(2-ethylhexyl)amio group, di(3-ethylhexyl)amino group, di(4-ethylhexyl)amino group, di(1-n-propylpentyl)amino group, di(2-n-propylpentyl)amino group, di(1-isopropylpentyl) amino group, di(2-isopropylpentyl)amino group, di(1-ethyl-1-methylpentyl)amino group, di(1-ethyl-2-methylpentyl) amino group, di(1-ethyl-3-methylpentyl)amino group, di(1-ethyl-4-methylpentyl)amino group, di(2-ethyl-1-methylpentyl) amino group, di (2-ethyl-2-methylpentyl)amino group, di(2-ethyl-3-methylpentyl)amino group, di(2-ethyl-4-methylpentyl)amino group, di(3-ethyl-1-methylpentyl)amino group, di(3-ethyl-2-methylpentyl)amino group, di(3-ethyl-3-methylpentyl)amino group, di(3-ethyl-4-methylpentyl)amino group, di(trimethylpentyl)amino group, di(1-n-butylbutyl)amino group, di(1-isobutylbutyl)amino group, di(1-sec-butylbutyl)amino group, di(1-tert-butylbutyl)amino group, di(2-tert-butylbutyl)amino group, di(1-n-propyl-1-methylbutyl) amino group, di(1-n-propyl-2-methylbutyl)amino group, di(1-n-propyl-3-methylbutyl)amino group, di(1-isopropyl-1-methylbutyl)amino group, di(1-isopropyl-2-methylbutyl)amino group, di(1-isopropyl-3-methylbutyl)amino group, di(1,1-diethylbutyl)amino group, di(1,2-diethylbutyl)amino group, di(1-ethyl-1,2-dimethylbutyl) amino group, di(1-ethyl-1,3-dimethylbutyl)amino group, di(1-ethyl-2,3-dimethylbutyl)amino group, di(2-ethyl-1,1-dimethylbutyl)amino group, di(2-ethyl-1,2-dimethylbutyl)amino group, di(2-ethyl-1,3-dimethylbutyl)amino group, di (2-ethyl-2,3-dimethylbutyl)amino group, di(1,1,3,3-tetramethylbutyl)amino group, di(1,2-dimethylcyclohexyl)amino group, di(1,3-dimethylcyclohexyl)amino group, di(1,4-dimethylcyclohexyl)amino group, di(ethylcyclohexyl)amino group, di(n-nonyl)amino group, di(3,5,5-trimethylhexyl) amino group, di (n-decyl) amino group, di (n-undecyl)amino group, di(n-dodecyl)amino group, di(1-adamantyl)amino group and di(n-pentadecyl)amino group;

alkoxy-substituted dialkylamino groups of 2 to 15 in carbon number, such as di(methoxymethyl)amino group, di (methoxyethyl)amino group, di(ethoxyethyl)amino group, di(n-propoxyethyl)amino group, di(isopropoxyethyl)amino group, di(n-butoxyethyl)amino group, di(isobutoxyethyl)amino group, di(tert-butoxyethyl) amino group, di(sec-butoxyethyl)amino group, di(n-pentyloxyethyl)amino group, di(isopentyloxyethyl)amino group, di(tert-pentyloxyethyl)amino group, di(sec-pentyloxyethyl)amino group, di(cyclopentyloxyethyl)amino group, di(n-hexyloxyethyl)amino group, di (ethylcyclohexyloxyethyl)amino group, di(n-nonyloxyethyl)amino group, di[(3,5,5-trimethylhexyloxy)ethyl]amino group, di[(3,5,5-trimethylhexyloxy)butyl]amino group, di(n-decyloxyethyl)amino group, di(n-undecyloxyethyl)amino group, di (n-dodecyloxyethyl)amino group, di(3-methoxypropyl) amino group, di(3-ethoxypropyl)amino group, di[3-(n-propoxy) propyl]amino group, di(2-isopropoxypropyl)amino group, di(2-methoxybutyl)amino group, di(2-ethoxybutyl)amino group, di[2-(n-propoxy)butyl]amino group, di(4-isopropoxybutyl)amino group, di(decalyloxyethyl)amino group and di (adamantyloxyethyl)amino group;

alkoxyalkoxy-substituted normal chain, branched-chain, cyclic dialkylamino groups of 3 to 15 in carbon number, such as (methoxymethoxymethyl)amino group, di(ethoxymethoxymethyl)amino group, di(propoxymethoxymethyl)amino group, di(butoxymethoxymethyl)amino group, di(methoxyethoxymethyl)amino group, di(ethoxyethoxymethyl)amino group, di(propoxyethoxymethyl)amino group, di(butoxyethoxymethyl)amino group, di(methoxypropoxymethyl)amino group, di(ethoxypropoxymethyl)amino group, di(propoxypropoxymethyl)amino group, di(butoxypropoxymethyl)amino group, di(methoxybutoxymethyl)amino group, di(ethoxybutoxymethyl)amino group, di(propoxybutoxymethyl)amino group, di(butoxybutoxymethyl)amino group, di(methoxymethoxyethyl)amino group, di(ethoxymethoxyethyl)amino group, di(propoxymethoxyethyl)amino group, di(butoxymethoxyethyl)amino group, di(methoxyethoxyethyl)amino group, di(ethoxyethoxyethyl)amino group, di(propoxyethoxyethyl)amino group, di(butoxyethoxyethyl)amino group, di (methoxypropoxyethyl)amino group, di(ethoxypropoxyethyl)amino group, di(propoxypropoxyethyl)amino group, di(butoxypropoxyethyl)amino group, di(methoxybutoxyethyl)amino group, di(ethoxybutoxyethyl)amino group, di(propoxybutoxyethyl)amino group, di(butoxybutoxyethyl)amino group, di(methoxymethoxypropyl)amino group, di(ethoxymethoxypropyl)amino group, di(propoxymethoxypropyl)amino group, di(butoxymethoxypropyl)amino group, di(methoxyethoxypropyl)amino group, di(ethoxyethoxypropyl)amino group, di(propoxyethoxypropyl)amino group, di(butoxyethoxypropyl)amino group, di(methoxypropoxypropyl)amino group, di(ethoxypropoxypropyl)amino group, di(propoxypropoxypropyl)amino group, di(butoxypropoxypropyl)amino group, di(methoxybutoxypropyl)amino group, di(ethoxybutoxypropyl)amino group, di(propoxybutoxypropyl)amino group, di(butoxybutoxypropyl)amino group, di(methoxymethoxybutyl)amino group, di(ethoxymethoxybutyl)amino group, di(propoxymethoxybutyl)amino group, di(butoxymethoxybutyl)amino group, di(methoxyethoxybutyl)amino group, di(ethoxyethoxybutyl)amino group, di (propoxyethoxybutyl)amino group, di(butoxyethoxybutoxy, methoxypropoxybutyl)amino group, di(ethoxypropoxybutyl) amino group, di(propoxypropoxybutyl)amino group, di(butoxypropoxybutyl)amino group, di(methoxybutoxybutyl)amino group, di(ethoxybutoxybutyl)amino group, di(propoxybutoxybutyl)amino group, di(butoxybutoxybutyl)amino group, di[(4-ethylcyclohexyloxy)ethoxyethyl]amino group, di[(2-ethyl-1-hexyloxy)ethoxypropyl]amino group and di{[4-(3,5,5-trimethylhexyloxy)butoxy]ethyl}amino group;

alkoxycarbonyl-substituted dialkylamino groups of 3 to 10 in carbon number, such as di(methoxycarbonylmethyl) amino group, di(ethoxycarbonylmethyl)amino group, di(n-propoxycarbonylmethyl)amino group, di(isopropoxycarbonylmethyl)amino group and di[(4'-ethylcyclohexyloxy)carbonylmethyl]amino group;

acyl-substituted dialkylamino groups of 3 to 10 in carbon number, such as di(acetylmethyl)amino group, di(ethylcarbonylmethyl)amino group, di(octylcarbonylmethyl)amino group and di(phenacyl)amino group;

acylamino-substituted dialkylamino groups of 3 to 10 in carbon number, such as di(acetyloxymethyl)amino group,

di(acetyloxyethyl)amino group, di(acetyloxyhexyl) amino group and di(butanoyloxycyclohexyl)amino group;

dialkylamino-substituted dialkylamino groups of 2 to 10 in carbon number, such as di (methylaminomethyl) amino group, di(2-methylaminoethyl)amino group, di(2-(2-methylaminoethoxy)ethyl)amino group, di(4-methylaminobutyl) amino group, di(1-methylaminopropane-2-yl)amino group, di(3-methylaminopropyl)amino group, di(2-methylamino-2-methylpropyl)amino group, di(2-ethylaminoethyl)amino group, di(2-(2-ethylaminoethoxy)ethyl)amino group, di (3-ethylaminopropyl)amino group, di(1-ethylaminopropyl)amino group, di(2-isopropylaminoethyl)amino group, di(2-(n-butylamino)ethyl)amino group, di(3-(n-hexylamino)propyl)amino group and di(4-(cyclohexylamino)butyl)amino group;

alkylaminodialkylamino-substituted dialkylamino groups of 3 to 10 in carbon number, such as di(methylaminomethoxymethyl)amino group, di(methylaminoethoxyethyl)amino group, di(methylaminoethoxypropyl)amino group, di(ethylaminoethoxypropyl)amino group and di[4-(2'-isobutylaminopropoxy)butyl]amino group;

didialkylamino-substituted dialkylamino groups of 3 to 15 in carbon number, such as di(dimethylaminomethyl) amino group, di(2-dimethylaminoethyl) amino group, di[2-(2-dimethylaminoethoxy)ethyl]amino group, di(4-dimethylaminobutyl) amino group, di(1-dimethylaminopropane-2-yl) amino group, di(3-dimethylaminopropyl)amino group, di (2-dimethylamino-2-methylpropyl)amino group, di(2-diethylaminoethyl)amino group, di[2-(2-diethylaminoethoxy)ethyl] amino group, di(3-diethylaminopropyl)amino group, di(1-diethylaminopropyl)amino group, di(2-diisopropylaminoethyl) amino group, di[2-(di-n-butylamino)ethyl]amino group, di(2-piperidylethyl)amino group and di[3-(di-n-hexylamino)propyl]amino group;

dialkylaminodialkylamino-substituted dialkylamino groups of 4 to 15 in carbon number, such as di(dimethylaminomethoxymethyl)amino group, di(dimethylaminoethoxyethyl)amino group, di(dimethylaminoethoxypropyl)amino group, di(diethylaminoethoxypropyl)amino group and di(4-(2'-diisobutylaminopropoxy) butyl) amino group;

dialkylamino-substituted dialkylamino groups of 2 to 15 in carbon number, such as methylthiomethyl)amino group, di(2-methylthioethyl)amino group, di(2-ethylthioethyl)amino group, di(2-n-propylthioethyl) amino group, di(2-isopropylthioethyl)amino group, di(2-n-butylthioethyl) amino group, di(2-isobutylthioethyl) amino group and [(3,5,5-trimethylhexylthio)hexyl]amino group;

and the like; more preferably: dialkylamino groups of 1 to 10 in carbon number, such as dimethylamino group, diethylamino group, di(n-propyl)amino group, di(isopropyl)amino group, di(n-butyl)amino group, di(isobutyl)amino group, di(sec-butyl)amino group, di(t-butyl)amino group, di(n-pentyl)amino group, di(isopentyl)amino group, di(neopentyl)amino group, di(2-methylbutyl) amino group, di(n-hexyl)amino group, di(n-heptyl) amino group, di (n-octyl) amino group, di(2-ethylhexyl)amino group, di(3,5,5-trimethylhexyl)amino group, di(decalyl)amino group, di(methoxyethyl) amino group, di(ethoxyethyl)amino group, di(methoxyethoxyethyl)amino group, di(ethoxyethoxyethyl)amino group and di(n-decyl)amino group;

diaralkylamino groups of 14 to 20 in carbon number, such as dibenzylamino group, diphenethylamino group, bis (4-ethylbenzyl)amino group and bis(4-isopropylbenzyl)amino group;

diarylamino groups of 12 to 14 in carbon number, such as diphenylamino group, ditolylamino group, dixylylamino group, N-phenyl-N-tolylamino group, N-phenyl-N-xylylamino group and dimesitylamino group;

dialkenylamino groups of 4 to 12 in carbon number, such as divinylamino group, diallylamino group, dibutenylamino group, dipentenylamino group, dihexenylamino group, bis(cyclopentadienyl)amino group and N-vinyl-N-allylamino group;

diacylamino groups of 2 to 30 in carbon number, such as diformylamino group, di(methylcarbonyl)amino group, di(ethylcarbonyl)amino group, di(n-propylcarbonyl)amino group, di(iso-propylcarbonyl)amino group, di(n-butylcarbonyl)amino group, di(iso-butylcarbonyl)amino group, di(sec-butylcarbonyl)amino group, di(t-butylcarbonyl)amino group, di(n-pentylcarbonyl)amino group, di(isopentylcarbonyl)amino group, di(neopentylcarbonyl)amino group, di(2-methylbutylcarbonyl)amino group, di(benzoyl)amino group, di(methylbenzoyl)amino group, di(ethylbenzoyl)amino group, di (tolylcarbonyl) amino group, di(propylbenzoyl)amino group, di(4-t-butylbenzoyl)amino group, di(nitrobenzylcarbonyl) amino group, di(3-butoxy-2-naphthoyl)amino group, di(cinnamoyl)amino group and succinic nitrogen atom;

and disubstituted amino groups of 3 to 24 in carbon number containing substituents selected from substituted or unsubstituted alkyl groups, aralkyl groups, aryl groups and alkenyl groups, such as N-phenyl-N-allylamino group, N-(2-acetyloxyethyl)-N-ethylamino group, N-tolyl-N-methylamino group, N-vinyl-N-methylamino group, N-benzyl-N-allylamino group, N-methyl-ferrocenylamino group, N-ethyl-cobaltcenylamino group, N-butyl-nickelocenylamino group, N-hexyl-octamethylferrocenylamino group, N-methyl-octamethylcobaltcenylamino group, N-methyl-octamethylnickelocenylamino group.

As specific examples of the methine groups which may have substituents, shown by $X^1$ to $X^8$ in the frameworks of the azaannulene rings of General Formula (1), are methine groups respectively shown in General Formulae (5) to (12)

[Chemical Formula 6]

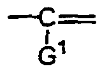 (5) 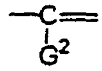 (6) 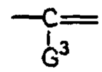 (7) 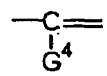 (8)

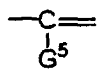 (9) 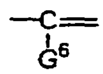 (10) 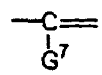 (11) 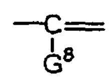 (12)

[In the formulae, $G^1$ to $G^8$ each represent hydrogen atoms or arbitrary substituents.] As favorable examples of the substituents, hydrogen atom; halogen atoms such as fluorine atom, chlorine atom, bromine atom and iodine atom; cyano group; substituted or unsubstituted alkyl groups; substituted or unsubstituted aralkyl groups; substituted or unsubstituted aryl group; substituted or unsubstituted alkenyl group; acyloxy groups; etc. can be mentioned.

Also, regarding $G^1$ to $G^8$ of General Formulae (5) to (12), which are substituents in $R^1$ to $R^{16}$ and the methine groups of General Formula (1), those substituents may bond to each other through connecting radicals between them; specifically, the formation of rings by aliphatic condensation or aromatic condensation, the formation of heterocyclic rings whose connecting radicals contain hetero atoms or hetero atoms such as metal complex residues, or the like can be mentioned.

Connecting radicals used when $R^1$ to $R^{16}$ and $G^1$ to $G^8$ each bond to adjacent substituents through the connecting radicals to form rings, are groupes made of selecting and combining accordingly from hetero atoms such as oxygen atom, sulfur atom, nitrogen atom, phosphorus atom, metal atom and metalloid atom, and carbon atom. As preferable examples of the connecting radicals, -O-; -S-; -C(=O)-; methylene groups, methine groups, ethynylene groups, phenylene groups, amino groups, imino groups, metal atoms and metalloid atoms which may be substituted; or the like can be mentioned, and desired rings can be obtained by suitably combining those groupes to make connecting chains. As rings formed by connecting chains, chain-like, planar or three-dimensional rings can be mentioned. As favorable examples of connecting chains when rings are formed by connection and as rings obtained: alicyclic condensed rings made of aliphatic chains, such as $-CH_2-CH_2-CH_2-CH_2-$, $-CH_2(NO_2)-CH_2-CH_2-CH_2-$, $-CH(CH_3)-CH_2-CH_2-CH_2-$ and $-CH(Cl)-CH_2-CH_2-$;

aromatic condensed rings made of aliphatic chains, such as -CH=CH-CH=CH-, $-C(NO_2)=CH-CH=CH-$, $-C(CH_3)=CH-CH=CH-$, $-C(CH_3)=CH-CH=CH-$, $-C(CH_3)=CH-CH=C(CH_3)-$, $-C(OCH_3)=CH-CH=C(OCH_3)-$, $-C(OCH_2CH_2CH(CH_3)-(OCH_3))=C(Cl)-C(Cl)=C(OCH_2CH_2CH(CH_3)-(OCH_3))-$, $-C(OCH_2CH_2CH(CH_3)_2)=C(Cl)-C(Cl)=C(OCH_2CH_2CH(CH_3)_2)-$, $-CH=C(CH_3)-C(CH_3)=CH-$, -C(Cl)=CH-CH=CH-, $-C\{OCH[CH(CH_3)_2]_2\}=CH-CH=CH-$, $-C\{OCH[CH(CH_3)_2]_2\}=C(Br)-CH=CH-$, $-C\{OCH[CH(CH_3)_2]_2\}=CH-C(Br)=CH-$, $-C\{OCH[CH(CH_3)_2]_2\}=CH-CH=C(Br)-$, $-C(C_2H_5)=CH-CH=CH-$, $-C(C_2H_5)=CH-CH=C(C_2H_5)-$, $-CH=C(C_2H_5)-C(C_2H_5)=CH-$ and -C(Cl)=CH-CH=CH-;

heterocyclic rings made of aliphatic chains, containing hetero atoms in carbon-carbon atom chains, such as $-O-CH_2-CH_2-O-$, $-O-CH(CH_3)-CH(CH_3)-O-$, $-COO-CH_2-CH_2-$, $-COO-CH_2-$, $-CONH-CH_2-CH_2-$, $-CONH-CH_2-$, $-CON(CH_3)-CH_2-CH_2-$, $-CON(CH_3)-CH_2-$, $-S-CH_2-CH_2-S-$, $-S-CH(CH_3)-CH(CH_3)-S-$, -N=CH-CH=N- and -CH=NN=CH-; or heterocyclic groups and the like, such as the following metal complex residues:

[Chemical Formula 7]

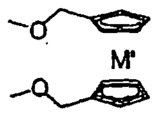
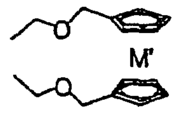
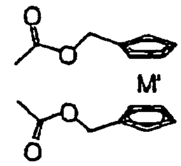
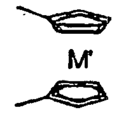
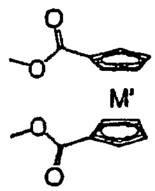
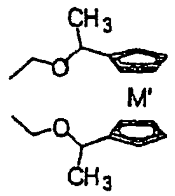
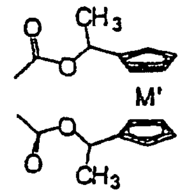
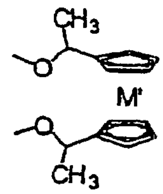
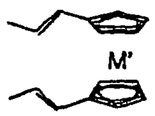
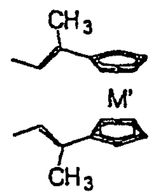
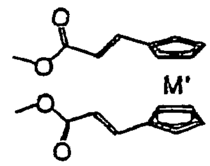
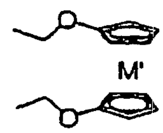
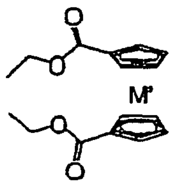
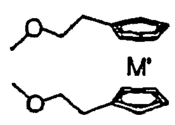
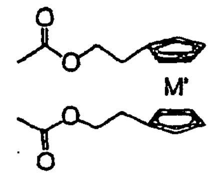
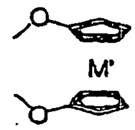
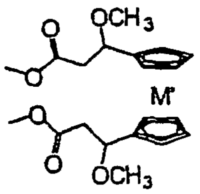
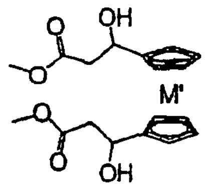

(M' represents Fe, Ru, Co, Ni, Os or M"$R'_2$ (M" represents Ti, Zr, Hf, Nb, Mo, V, and R' represents CO, F, Cl, Br, I, or alkyl groups, alkoxy groups, aryl groups, aryloxy groups, aralkyl groups and aralkyloxy groups of 1 to 10 in carbon number containing substituents similar to the above-mentioned $R^1$ to $R^{16}$.).)

As specific examples of substituted or unsubstituted sulfur atoms contained between carbon-carbon atoms in substituted or unsubstituted hydrocarbon radicals and/or in hydrocarbon-substituted substituted hydroxyl groups, substituted mercapto groups and substituted amino groups indicated by $R^1$ to $R^{16}$ of General Formula (1), and in $G^1$ to $G^8$ which are substituents of methane groupes of General Formulae (5) to (12), unsubstituted sulfur atoms such as thia group; oxygen-substituted sulfur atoms such as sulfonyl group and sulfinyl group; and the like can be mentioned.

As specific examples of substituted or unsubstituted sulfur atoms contained between carbon-carbon atoms in substituted or unsubstituted hydrocarbon radicals and/or in hydrocarbon-substituted substituted hydroxyl groups, substituted mercapto groups and substituted amino groups indicated in $R^1$ to $R^{16}$ of General Formula (1), and in $G^1$ to $G^8$ which are substituents of methane groupes of General Formulae (5) to (12), unsubstituted nitrogen atoms such as -N=; and substituted nitrogen atoms such as hydrogen or the aforementioned hydrocarbon substituted imino group can be mentioned.

As bivalent to tetravalent metal atoms or trivalent to tetravalent metalloid atoms represented by M, the metal atoms and metalloid atoms in Groups IIA to VIIA, Group VIII and Groups IB to VIIB on the periodic table can be mentioned.

As specific examples of bivalent metal atoms which may have ligands, bivalent unsubstituted metal atoms such as Cu, Zn, Fe, Co, Ni, Ru, Rh, Pd, Pt, Mn, Sn, Mg, Pb, Hg, Cd, Ba, Ti, Be, Ca, Re, Os, or the like, or bivalent metal atoms with which substituted or unsubstituted heterocyclic compounds such as five-membered ring nitrogen-containing aromatic compounds, six-membered ring nitrogen-containing aromatic compounds and condensed ring nitrogen-containing compounds, carbon monoxide, alcohols, or the like coordinate as ligands can be mentioned.

As examples of the substituted or unsubstituted five-membered ring nitrogen-containing aromatic compounds

which coorinate with the bivalent metal atoms, pyrrole, methylpyrrole, dimethylpyrrole, pyrazole, N-methylpyrazole, 3,5-dimethylpyrazole, imidazole, N-methylimidazole, methylimidazole, 1,2-dimethylimidazole, oxazole, thiazole, 4-methylthiazole, 2,4-dimethylthiazole, 1,2,3-oxadiazole, triazole, 1,3,4-thiadiazole, 2,5-dimethyl-1,3,4-thiadiazole and the like can be mentioned.

As examples of the substituted or unsubstituted six-membered ring nitrogen-containing aromatic compounds which coorinate with the bivalent metal atoms, pyridine, 2-methylpyridine, 3-methylpyridine, 4-methylpyridine, 2,3-dimethylpyridine, 2,4-dimethylpyridine, 2,5-dimethylpyridine, 2,6-dimethylpyridine, 3,4-dimethylpyridine, 3,5-dimethylpyridine, 2-chloropyridine, 3-chloropyridine, 2-methoxypyridine, pyridazine, 3-methylpyridazine, pyrimidine, 4-methylpyrimidine, 2-chloropyrimidine, pyrazine, 2-methylpyrazine, 2,3-dimethylpyrazine, 2,5-dimethylpyrazine, 2-methoxypyrazine, s-triazine and the like can be mentioned.

As examples of the substituted or unsubstituted condensed ring nitrogen-containing compounds which coorinate with the bivalent metal atoms, indole, N-methylindole, 2-methylindole, 3-methylindole, 5-methylindole, 1,2-dimethylindole, 2,3-dimethylindole, 4-chloroindole, 5-chloroindole, 6-chloroindole, 4-methoxyindole, 5-methoxyindole, 6-methoxyindole, benzimidazole, 2-methylbenzimidazole, 5-methylbenzimidazole, 5,6-dimethylbenzimidazole, 5-chlorobenzimidazole, benzothiazole, 2-methylbenzothiazole, 2,5-dimethylbenzothiazole, 2-chlorobenzothiazole, purine, quinoline, 2-methylquinoline, 3-methylquinoline, 4-methylquinoline, 6-methylquinoline, 7-methylquinoline, 8-methylquinoline, 2,4-dimethylquinoline, 2,6-dimethylquinoline, 2-chloroquinoline, 6-chloroquinoline, 8-chloroquinoline, 6-methoxyquinoline, isoquinoline, 1-methylquinoline, quinoxaline, 2-methylquinoxaline, 2,3-dimethylquinoxaline, carbazole, N-methylcarbazole, acridine, 9-methylacridine, phenothiazine and the like can be mentioned.

As favorable specific examples of the bivalent metal atoms, unsubstituted or two-coordinate bivalent metal atoms such as Cu, Ni, Co, Rh, Zn, Fe, Cu(pyridine)$_2$, Zn(pyridine)$_2$, Co(pyridine)$_2$, Fe (N-methylimidazole) , Co(N-methylimidazole) or the like can be mentioned.

When n is 0, M in General Formula (1) represents a trivalent or tetravalent metal or metalloid atom having a substituent.

As trivalent metal or metalloid atoms having substituents, represented by M, trivalent metal atoms or metalloid atoms of such as Sc, Ti, V, Cr, Mn, Mo, Ag, U, Fe, Co, Ni, Cu, Y, Nb, Ru, Rh, La, Ta, Ir, Au, In, Tl, Bi, Ce, Pr, Nd, Pm, Sm, Eu, Gd, Tb, Dy, Ho, Er, Tm, Yb, Lu, B, As, Sb, or the like, in which as substituents selected and bonded are in the above described $R_1$ to $R_{16}$ halogen atoms, hydroxyl groups; and alkyl groups, aryl groups, heteroaryl groups, alkoxy groups, aryloxy groups, heteroaryloxy groups, alkylthio groups, arylthio groups, heteroarylthio groups and amino groups which may have substituents, similarly to the aforementioned halogen atoms, hydroxyl groups; and alkyl groups, aryl groups, heteroaryl groups, alkoxy groups, aryloxy groups, heteroaryloxy groups, alkylthio groups, arylthio groups, heteroarylthio groups and amino groups which may have substituents, or alkyl- and aryl-substituted silyloxy groups; or in which as substituents selected and bonded are halogen atoms as described above, alkyl groupes, aryl groupes, heteroaryl groups, alkoxy groups, aryloxy groups, heteroaryloxy groups, alkylthio groups, arylthio groups, heteroarylthio groups and amino groups, wherein as ligands, heterocyclic compounds such as substituted or unsubstituted five-membered ring nitrogen-containing aromatic compounds, six-membered ring nitrogen-containing aromatic compounds and condensed ring nitrogen-containing compounds, carbon monoxide, alcohols, etc. are coordinated can be mentioned.

As examples of the alkyl- and aryl-substituted silyloxy groups, trialkylsilyloxy groups such as trimethylsilyloxy group and triethylsilyloxy group, triarylsilyloxy groups such as triphenylsilyloxy group, alkylarylsilyloxy groups such as dimethylphenylsilyloxy group, and the like can be mentioned.

As favorable specific examples of the trivalent metal atoms, 1-substituted trivalent metal atoms such as Al-F, Al-Cl, Al-Br, Al-I, Ga-F, Ga-Cl, Ga-Br, Ga-I, In-F, In-Cl, In-Br, In-I, Ti-F, Ti-Cl, Ti-Br, Ti-I, Al-$C_6H_5$, Al-$C_6H_4(CH_3)$, In-$C_6H_5$, In-$C_6H_4(CH_3)$, Mn(OH), Mn($OC_6H_5$), Mn[$OSi(CH_3)_3$], Fe-Cl, Fe-Cl(bis(N-methylimidazole)), Fe-(imidazolyloxy) and Ru-Cl or the like can be mentioned.

As favorable specific examples of the trivalent metalloid atoms, 1-substituted trivalent metalloid atoms such as B-F, B-$OCH_3$, B-$C_6H_5$, $BC_6H_4(CH_3)$, B(OH), B($OC_6H_5$) and B[$OSi(CH_3)_3$] can be mentioned.

As tetravalent metal or metalloid atoms having substituents represented by M, tetravalent metal or metalloid atoms of Ti, Cr, Sn, Zr, Ge, Mn, Si or the like can be mentioned, in which as substituents selected and bonded are among halogen atoms, hydroxyl groups; and alkyl groups, aryl groups, heteroaryl groups, alkoxy groups, aryloxy groups, heteroaryloxy groups, alkylthio groups, arylthio groups, heteroarylthio groups and amino groups which may have substituents similar to the above shown $R^1$ to $R^{16}$ of halogen atoms, hydroxyl groups; and alkyl groups, aryl groups, heteroaryl groups, alkoxy groups, aryloxy groups, heteroaryloxy groups, alkylthio groups, arylthio groups, heteroarylthio groups and amino groups which may have substituents, or selected and bonded from alkyl- and aryl-substituted silyloxy groups or oxygen atoms, wherein heterocyclic compounds such as substituted or unsubstituted five-membered ring nitrogen-containing aromatic compounds, six-membered ring nitrogen-containing aromatic compounds and condensed ring nitrogen-containing compounds, carbon monoxide, alcohols or the like may be coordinated as ligands.

As favorable specific examples of the tetravalent metal atoms, 2-substituted tetravalent metal atoms such as $TiF_2$, $TiCl_2$, $TiBr_2$, $TiI_2$, $CrF_2$, $CrCl_2$, $CrBr_2$, $CrI_2$, $SnF_2$, $SnCl_2$, $SnBr_2$, $SnI_2$, $ZrF_2$, $ZrCl_z$, $ZrBr_2$, $ZrI_2$, $GeF_2$, $GeCl_2$, $GeBr_2$, $GeI_2$, $MnF_2$, $MnCl_2$, $MnBr_2$, $MnI_2$, $Ti(OH)_2$, $Cr(OH)_2$, $Sn(OH)_2$, $Zr(OH)_2$, $Ge(OH)_2$, $Mn(OH)_2$, $TiA_2$, $CrA_2$, $SnA_2$, $ZrA_2$, $GeA_2$, $MnA_2$, $Ti(OA)_2$, $Cr(OA)_2$, $Sn(OA)_2$, $Zr(OA)_2$, $Ge(OA)_2$, $Mn(OA)_2$, $Ti(SA)_2$, $Cr(SA)_2$, $Sn(SA)_2$, $Zr(SA)_2$, $Ge(SA)_2$, $Mn(SA)_2$, $Ti(NHA)_2$, $Cr(NHA)_2$, $Sn(NHA)_2$, $Zr(NHA)_2$, $Ge(NHA)_2$, $Mn(NHA)_2$, $Ti(NA_2)_2$, $Cr(NA_2)_2$, $Sn(NA_2)_2$, $Zr(NA_2)_2$, $Ge(NA_2)_2$ and $Mn(NA_2)_2$ [A represents substituted or unsubstituted alkyl groups, aryl groups and heteroaryl groups similar to the above-mentioned alkyl groups, aryl groups and heteroaryl groups represented by $R^1$ to $R^{16}$.] can be mentioned.

As favorable specific examples of the tetravalent metalloid atoms, 2-substituted tetravalent metalloid atoms such as $SiF_2$, $SiCl_2$, $SiBr_2$, $SiI_2$, $Si(OH)_2$, $SiA_2$, $Si(OA)_2$, $Si(SA)_2$, $Si(NHA)_2$ and $Si(NA_2)_2$ [A means the aforementioned A.] can be mentioned.

As specific examples of oxo metal atoms, which are tetravalent metal atoms with oxgen atoms bonded, VO, MnO, TiO and the like can be mentioned.

As M, preferably Cu, Ni, Co, Rh, Zn, Fe, MnCl, CoCl, FeCl, Fe(N-methylimidazolyloxy), Fe-Cl(bis(N-methylimidazole)), $Cu(pyridine)_2$, $Zn(pyridine)_2$, $Co(pyridine)_2$, Fe(N-methylimidazole), $Co(N\text{-}methylimidazole)_2$, VO, TiO, $TiA_2$, $SiA_2$, $SnA_2$, $RuA_2$, $RhA_2$, $GeA_2$, $Si(OA)_2$, $Sn(OA)_2$, $Ge(OA)_2$, $Si(SA)_2$, $Sn(SA)_2$ and $Ge(SA)_2$ [A means the aforementioned A.] can be mentioned.

Further, when n is 1, M represents a trivalent metal atom and one hydrogen atom, or a tetravalent metal atom.

As regards M, each of the atoms in Groups IIIA to VIIA, Group VIII and Groups IB to VIIB on the periodic table can be used with one hydrogen atom. As preferable examples, trivalent unsubstituted metal atoms such as Sc, Ti, V, Cr, Mn, Mo, Ag, U, Fe, Co, Ni, Cu, Y, Nb, Ru, Rh, La, Ta, Ir, Au, In, Tl, Pb, Bi, Ce, Pr, Nd, Pm, Sm, Eu, Gd, Tb, Dy, Ho, Er, Tm, Yb and Lu can be mentioned. More preferably, Lu, Ce, Sm, Ru, Eu, Y, Rh and the like can be mentioned.

As the tetravalent metal atoms represented by M, the metal atoms in Groups IIIA to VIIA, Group VIII and Groups IB to VIIB on the periodic table can be mentioned. As preferable examples, trivalent unsubstituted metal atoms such as Ti, V, Cr, Mn, Mo, Zr, Nb, Ru, Rh, Ta, Ir, Pb, Ce, Pr, Nd, Pm, Sm, Eu, Gd, Tb, Dy, Ho, Er, Tm, Yb, Lu and the like can be mentioned. More preferably, Zr, Lu, Ce, Ru, Rh and the like can be mentioned.

Also, in the present invention, compounds shown by General Formula (2) can be mentioned as favorable examples shown by General Formula (1).

[Chemical Formula 8]

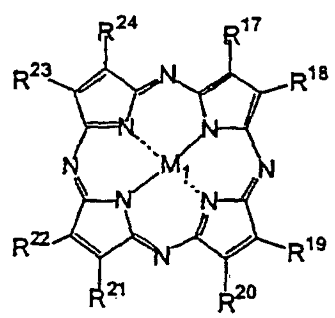

(2)

[In the formula, $R^{17}$ to $R^{24}$ each show a hydrogen atom, a halogen atom, a nitro group, a cyano group, a substituted or unsubstituted hydrocarbon radical, a substituted or unsubstituted hydroxy group, a substituted or unsubstituted mercapto group, or a substituted or unsubstituted amino group individually; substituents in $R^{17}$ to $R^{24}$ may bond to substituents on a tetraazaporphyrin ring to form aliphatic rings through a connecting radicals; and there may be contained oxygen atoms, substituted or unsubstituted sulfur atoms and substituted or unsubstituted nitrogen atoms between carbon atoms in substituted or unsubstituted hydrocarbon radicals and/or in hydrocarbon-substituted substituted hydroxyl groups, substituted mercapto groups and substituted amino groups. $M^1$ represents a bivalent metal atom which may have ligands, or a trivalent or tetravalent metal or metalloid atom which has a substituent and/or ligands.]

As regards compounds shown by General Formula (2) of the present invention, a hydrogen atom; a halogen atom such as a fluorine atom, a chlorine atom, a bromine atom, an iodine atom, etc.; a nitro group; a cyano group; or the like can be mentioned as a specific example of each of $R^{17}$ to $R^{24}$.

As examples of substituted or unsubstituted hydroxy groups, substituted or unsubstituted mercapto groups and substituted or unsubstituted amino groups used for $R^{17}$ to $R^{24}$, substituted or unsubstituted hydroxyl groups, substituted or unsubstituted mercapto groups and substituted or unsubstituted amino groups similar to the aforementioned

$R^1$ to $R^{16}$ can be mentioned.

As the connecting radicals used when $R^{17}$ to $R^{24}$ bond to form aliphatic rings through connecting radicals, connecting radicals similar to the above-described $R^1$ to $R^{16}$ can be mentioned.

As examples of the bivalent metal atoms which may have ligands, or trivalent or tetravalent metal or metalloid atoms which have substituents and/or ligands, used for $M^1$, metal atoms similar to the above-mentioned M can be mentioned.

Also, in the present invention, compounds shown by General Formula (3) can be mentioned as favorable examples shown by General Formula (1).

[Chemical Formula 9]

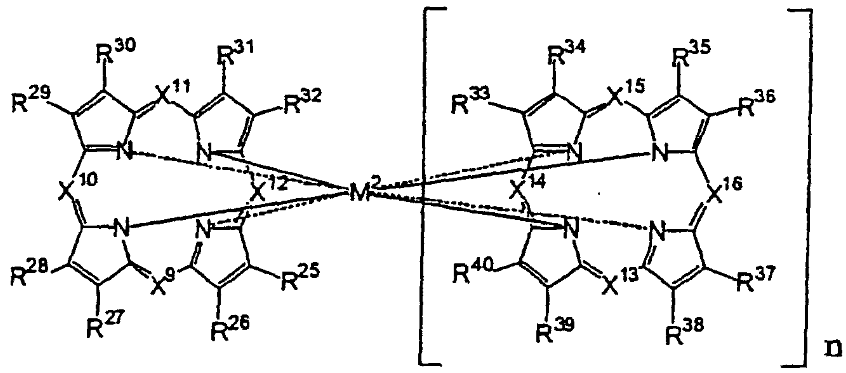

(3)

[In the formula, $R^{25}$ to $R^{40}$ each show a hydrogen atom, a halogen atom, a nitro group, a cyano group, a substituted or unsubstituted hydrocarbon radical, a substituted or unsubstituted hydroxy group, a substituted or unsubstituted mercapto group, or a substituted or unsubstituted amino group individually; $X^9$ to $X^{16}$ each show a nitrogen atom, or a substituted or unsubstituted methine group individually; substituents in $R^{25}$ to $R^{40}$ and in methine groups may each bond to form aliphatic rings through connecting radicals; and there may be contained oxygen atoms, substituted or unsubstituted sulfur atoms and substituted or unsubstituted nitrogen atoms between carbon atoms in substituted or unsubstituted hydrocarbon radicals and/or in hydrocarbon-substituted substituted hydroxy groups, substituted mercapto groups and substituted amino groups. Also, n represents 0 or 1; when n is 0, $M^2$ represents a bivalent metal atom which may have ligands, or a trivalent or tetravalent metal or metalloid atom which has substituents and/or ligands, and when n is 1, $M^2$ represents a trivalent metal atom and one hydrogen atom, or a tetravalent metal atom.]

As regards compounds shown by General Formula (3) of the present invention, a hydrogen atom; a halogen atom such as a fluorine atom, a chlorine atom, a bromine atom, an iodine atom, etc.; a nitro group; a cyano group; or the like can be mentioned as a specific example of $R^{25}$ to $R^{40}$ each.

As examples of substituted or unsubstituted hydroxy groups, substituted or unsubstituted mercapto groups and substituted or unsubstituted amino groups used for $R^{25}$ to $R^{40}$, substituted or unsubstituted hydroxyl groups, substituted or unsubstituted mercapto groups and substituted or unsubstituted amino groups similar to the above-mentioned $R^1$ to $R^{16}$ can be mentioned.

As the connecting radicals used when $R^{25}$ to $R^{40}$ each bond to form aliphatic rings through connecting radical, connecting radicals similar to the above-mentioned $R^1$ to $R^{16}$ can be mentioned.

As regards the metal or metalloid atoms used for $M^2$, when n is 0, metal atoms similar to the above-mentioned M can be mentioned as examples of the bivalent metal atoms which may have ligands, or trivalent or tetravalent metal or metalloid atoms which have substituents and/or ligands. Also, regarding $M^2$, when n is 1, metal atoms similar to the above-mentioned M can be mentioned as an example of a trivalent metal atom and one hydrogen atom, or a tetravalent metal atom.

Also, in the present invention, compounds shown by General Formula (4) can be mentioned as favorable examples shown by General Formula (1).

[Chemical Formula 10]

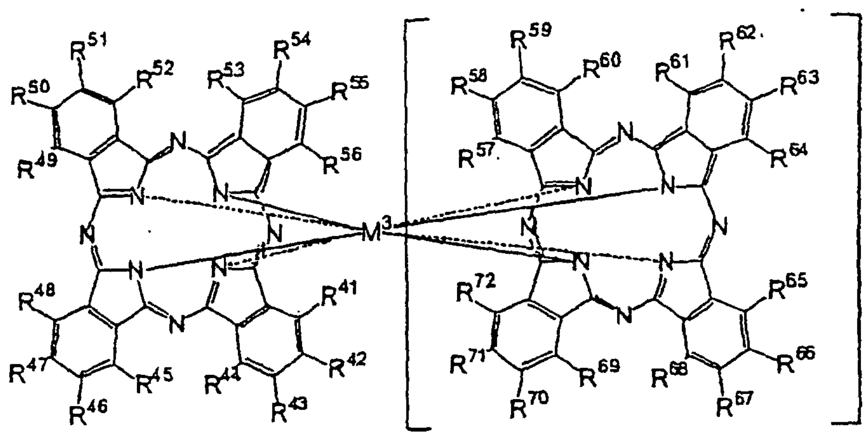

(4)

[In the formula, $R^{41}$ to $R^{72}$ each show a hydrogen atom, a halogen atom, a nitro group, a cyano group, a substituted or unsubstituted hydrocarbon radical, a substituted or unsubstituted hydroxy group, a substituted or unsubstituted mercapto group, or a substituted or unsubstituted amino group individually; substituents in $R^{41}$ to $R^{72}$ may each bond to a substituent on a phthalocyanine ring through connecting radicals; and there may be contained oxygen atoms, substituted or unsubstituted sulfur atoms and substituted or unsubstituted nitrogen atoms between carbon atoms in substituted or unsubstituted hydrocarbon radicals and/or in hydrocarbon-substituted substituted hydroxy groups, substituted mercapto groups and substituted amino groups. n represents 0 or 1; when n is 0, $M^3$ represents a bivalent metal atom which may have ligands, or a trivalent or tetravalent metal or metalloid atom which has a substituent, and when n is 1, $M^3$ represents a trivalent metal atom and one hydrogen atom, or a tetravalent metal atom.]

As regards compounds shown by General Formula (4) of the present invention, a hydrogen atom; a halogen atom such as a fluorine atom, a chlorine atom, a bromine atom, an iodine atom, etc.; a nitro group; a cyano group; or the like can be mentioned as a specific example of each of $R^{41}$ to $R^{72}$.

As examples of substituted or unsubstituted hydroxy groups, substituted or unsubstituted mercapto groups and substituted or unsubstituted amino groups used for $R^{41}$ to $R^{72}$, substituted or unsubstituted hydroxyl groups, substituted or unsubstituted mercapto groups and substituted or unsubstituted amino groups similar to the above-mentioned $R^1$ to $R^{16}$ can be mentioned.

As the connecting radicals used when $R^{41}$ to $R^{72}$ bond to form rings through connecting radicals, connecting radicals similar to the above-mentioned $R^1$ to $R^{16}$ can be mentioned.

As regards the metal or metalloid atoms used for $M^3$, when n is 0, metal atoms similar to the above-mentioned M can be mentioned as examples of the bivalent metal atoms which may have ligands, or trivalent or tetravalent metal or metalloid atoms which have substituents and/or ligands. Also, regarding $M^3$, when n is 1, metal atoms similar to the above-mentioned M can be mentioned as an example of a trivalent metal atom and one hydrogen atom, or a tetravalent metal atom.

Among the azaannulene compounds described in the present invention, the compounds of General Formula (1) can be favorably used for recording, reproducing and erasure by a blue-violet nitride-based semiconductor laser of 350 to 450nm in the oscillation wavelength band, by the red semiconductor laser of 600 to 650nm in wavelength used for the DVD-R, and by the near-infrared semiconductor laser of 750 to 850nm in wavelength used for the CD-R. Hereupon, the compounds of General Formula (3) can be more favorably used for recording, reproduction and erasure by the red semiconductor laser 600 to 650nm in wavelength used for the DVD-R, and the compounds of General Formula (4) can be more favorably used for recording, reproduction and erasure by the near-infrared semiconductor laser of 750 to 850nm in wavelength used for the CD-R. Particularly, the compounds of General Formula (2) is favorably used for recording, reproduction and erasure both in the oscillation wavelength band of a blue-violet nitride-based semiconductor laser of 350 to 450nm, and of the red semiconductor laser wavelength of 600 to 650nm used for the DVD-R.

As regards the compounds shown by General Formula (1) used for the present invention, the ones whose n is 0 are not limited; however, for example, tetraazaporphyrin (otherwise called porphyrazine) compounds whose $X^1$ to $X^4$ are all nitrogen are produced according to the methods described in J. Gen.Chem.USSR vol. 47, ppl 1954 - 1958 (1977) and the like, for example. Typically, those compounds can be produced by the following reactions.

Specifically, at least one kind of the following compounds shown by General Formulae (13) to (16) is used and heated to react with organic metallic salt such as acetylacetonato salt, acetate, trifluoroacetate, etc. of a bivalent or tetravalent metal atom or a hydrate thereof, or with inorganic metallic salt such as halide, sulfate, nitrate, perchlorate, chlorate, hypochlorite, etc. of a metal atom, or a hydrate thereof, under the existence of a base such as 1,8-diazabicyclo[5.4.0]-7-undecene depending on a case, in a solvent of alcohol such as pentanol, hexanol, etc. or of aromatic solvent such as benzene, toluene, xylene, 1-chloronaphthalene, 1,2-dichlorobenzene, 1,2,4-trichlorobenzene, etc, so that Phthalocyanine compounds of General Formula (1) whose n is 0, and four of whose $X^1$ to $X^4$ are nitrogen; or tetraazaporphyrin compounds of General Formula (2) can be obtained.

[Chemical Formula 11]

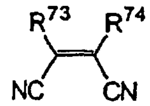 (13)

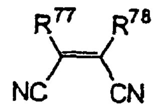 (15)

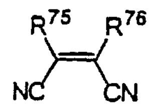 (14)

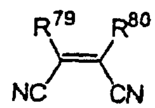 (16)

[In the formulae, each of $R^{73}$ to $R^{80}$ means the same as $R^1$ to $R^8$ of General Formula (1) respectively.]

Also, metal-free tetraazaporphyrin compounds can be obtained by making the tetraazaporphyrin compounds of General Formula (2) react with acid such as an organic acid of trifluoroacetic acid or the like in a solvent such as chloroform, etc., or by making a Grignard reagent such as methylmagnesiumbromide react with the tetraazaporphyrin compounds of General Formula (2), and treating them with an acid such as hydrochloric acid or sulfuric acid afterward.

Also, monoazaporphyrin-based compounds whose n is 0, and one of whose $X^1$ to $X^4$ is nitrogen are not particularly restricted, and can be produced according to the methods described in Bull. Chem. Soc. Jpn., 61, 3539-3547 (1988); Inorg. Chem., 32, 291-296(2993); Tetrahedron Lett., 36(10), 1567-1570(1995); Liebigs Ann. Chem., 399-359 (1977); Inorganica Chimica Acta, 203, 107-114(1993); and the like, for example. Typically, the compounds can be produced by the following methods, for example.

That is, the condensed body of Formula (20) or hydrobromate thereof is obtained by making dipyromethane compounds of General Formula (17) and pyrrole compounds of General Formulae (18) to (19) react, under the existence of hydrobromic acid, in solvent such as halogenated solvent such as methylene chloride, a alcohol-based solvent such as ethanol, or the like.

[Chemical Formula 12]

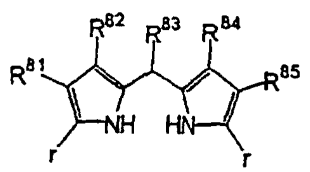 (17)

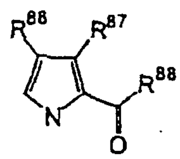 (18)

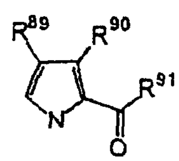 (19)

[In the formulae, $R^{81}$, $R^{82}$, $R^{84}$, $R^{85}$, $R^{86}$, $R^{87}$, $R^{89}$ and $R^{90}$ each mean the same as $R^1$ to $R^8$ of Formula (1) respectively, $R^{83}$, $R^{88}$ and $R^{91}$ each mean the same as the substituents in the methine groups, which are $X^1$ to $X^4$ of Formula (1), respectively, and r represents a hydrogen atom or carboxyl group.]

[Chemical Formula 13]

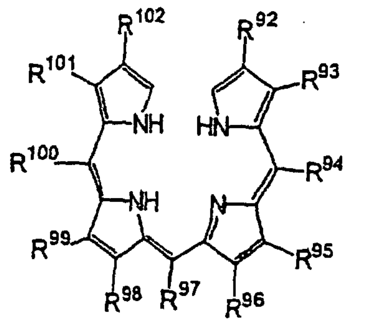

(20)

[In the formula, $R^{92}$, $R^{93}$, $R^{95}$, $R^{96}$, $R^{98}$, $R^{99}$, $R^{101}$ and $R^{102}$ each mean the same as $R^1$ to $R^8$ of Formula (1) respectively, and $R^{94}$, $R^{97}$ and $R^{100}$ each mean the same as the substituents in the methine groups, which are $X^1$ to $X^4$ of Formula (1), respectively.]

Next, dihalogenated compounds of General Formula (21) is obtained by halogenating the condensed body shown by General Formula (20) with a halogenating agent such as bromine, iodine, N-bromosuccinimide, N-iodosuccinimide, etc. in solvent such as an organic acid such as acetic acid, methylene chloride, trifluoroacetic acid, etc., a halogenated solvent, or an alcohol-based solvent such as ethanol.

[Chemical Formula 14]

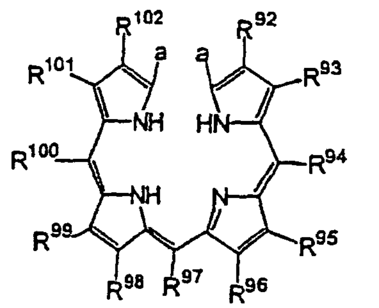

(21)

[In the formula, $R^{92}$ to $R^{102}$ represent the same groups as $R^{92}$ to $R^{102}$ in Formula (20), respectively, and a represents a halogen atom.]

Next, monoazaporphyrin-based compounds whose n is 0, and one of whose $X^1$ to $X^4$ is nitrogen in General Formula (1) can be obtained by making the dihalogenated compounds react with an azide salt such as sodium azide; with or without a metallic or metalloidal compound such as an inorganic salt of sulfate, nitrate, halogenated salt, etc. of metal or metalloid, or an organic metallic salt of acetate, acetylacetonato salt, etc., a coordinating compound such as pyridine, etc. capable of coordinating with metal, an ionic compound such as sodium chloride, sodium fluoroborate, etc., whose anions are capable of coordinating with metal, an oxidizing agent such as air, etc., a neutralizer such as N-ethyldiisopropylamine, triethanolamine, etc., or a phase-transfer catalyst such as benzo-18-crown-6-ether, etc. existed; in an alcohol-based solvent such as methanol or ethanol, a halogenated solvent such as methylene chloride, or an amide-based solvent such as N,N-dimethylformamide.

Also, metal-free monoazaporphyrin compounds can be obtained by making monoazaporphyrin compounds which have been made metal complexes react with an acid such as an organic acid of trifluoroacetic acid or the like in a solvent such as chloroform, etc., or by making a Grignard reagent such as methylmagnesiumbromide react therewith, and treating them with an acid such as hydrochloric acid or sulfuric acid afterward.

Also, diazaporphyrin-based compounds whose n is 0, and two of whose $X^1$ to $X^4$ are nitrogen are not particularly restricted, and they can be produced according to the methods described in J. Chem. Soc. (C), 22-29(1996); J. Biochem., 121, 654-660(1997); Z. Physiol. Chem, 214, 145(1933); Die Chemie des Pyrrols, Band II, Halfte 2, pp. 411-414, Akademische Verlagesellschuft, Leipzig(1940); and the like, for example. Typically, they can be produced by the following reaction including three stages.

To begin with, at the first stage, dipyromethene compounds shown by General Formulae (24) and (25) are obtained by halogenating dipyromethane compounds shown by General Formulae (22)and (23) with a halogenating agent such as bromine, iodine, N-bromosuccinimide, N-iodosuccinimide, etc. in a carboxylic acid-based solvent such as acetic acid, or a halogenated hydrocarbon-based solvent such as methylene chloride.

[Chemical Formula 15]

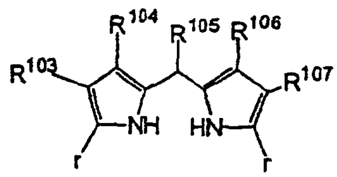
(22)
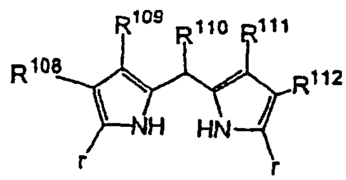
(23)

[In the formulae, $R^{103}$, $R^{104}$, $R^{106}$, $R^{107}$, $R^{108}$, $R^{109}$, $R^{111}$ and $R^{112}$ mean the same as $R^1$ to $R^8$ of Formula (1) respectively, $R^{113}$ and $R^{118}$ mean the same as the substituents in the methine groups of Formula (1) respectively, and r represents a hydrogen atom or carboxyl group.]

[Chemical Formula 16]

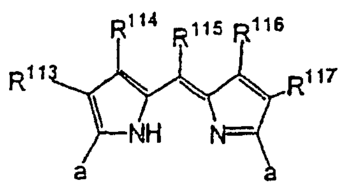
(24)
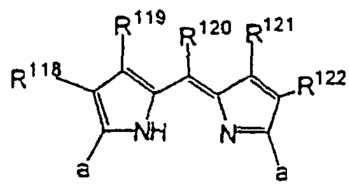
(25)

[In the formulae, $R^{113}$ to $R^{122}$ represent the same groups as $R^{103}$ to $R^{112}$ of Formulae (22) and (23), and a represents a halogen atom.]

Then, at the second stage, dipyromethene metal complexes shown by General Formula (26) are obtained by making the dipyromethene compounds of General Formulae (24) and (25) react, using an inorganic salt of sulfate, nitrate, halogenated salt, etc. of metal or metalloid, or metal or metalloid of an organic metallic salt such as acetate, acetylacetonato salt, etc., with or without an oxidizing agent such as air existed, in organic solvents such as an alcohol-based solvent such as ethanol and/or an amide solvent such as dimethylformamide.

[Chemical Formula 17]

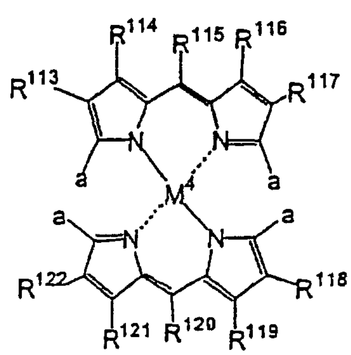
(26)

[In the formula, $R^{113}$ to $R^{122}$ and a each represent the same groups as $R^{113}$ to $R^{122}$ and a of Formulae (24) and (25), and $M^4$ means the same as M of Formula (1).]

Subsequently, at the third stage, diazaporphyrin compounds whose n is 0, and two of whose $X^1$ to $X^4$ are nitrogen in Formula (1) can be obtained by making the dipyromethene metal complexes (26) react with an azide salt such as sodium azide in organic solvents of an alcohol-based solvent such as ethanol and/or an amide solvent such as dimethylformamide.

Hereupon, the above diazaporphyrin compounds can also be obtained by making the dipyromethene compounds of General Formulae (24) and (25) obtained at the first stage react with an azide salt such as sodium azide, using an inorganic salt such as sulfate, nitrate, halogenated salt, etc. of metal or metalloid, or an organic metallic salt such as acetate, acetylacetonato salt, etc., or the like, with or without an oxidizing agent such as air existed, in organic solvents of an alcohol-based solvent such as ethanol and/or an amide solvent such as dimethylformamide.

Also, metal-free diazaporphyrin compounds can be obtained by making diazaporphyrin compounds of metal complexes react with an acid such as an organic acid of trifluoroacetic acid in a solvent such as chloroform, etc., or by making a Grignard reagent such as methylmagnesiumbromide react with diazaporphyrin compounds of metal complexes, and treating them with an acid such as hydrochloric acid or sulfuric acid afterward.

Further, triazaporphyrin-based compounds whose n is 0, and three of whose $X^1$ to $X^4$ are nitrogen are not particularly restricted, but they can be produced according to the methods described in Can. J. Chem. Vol. 71, 742-753 (1996) and the like, for example. Typically, they can be produced by the following reactions.

It is also possible to obtain triazaporphyrin compounds whose n is 0, and three of whose $X^1$ to $X^4$ are nitrogen in General Formula (1), by heating compounds shown by the above-described General Formulae (13) to (16) to react with at least one kind of unsaturated ketone compounds of General Formulae (27) and (28) and with a halogenated metal and/or a metal derivative, with or without a solvent existing.

[Chemical Formula 18]

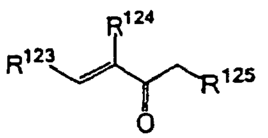 (27) 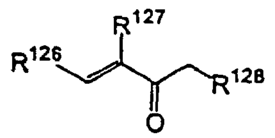 (28)

[In the formulae, $R^{123}$, $R^{124}$, $R^{126}$ and $R^{127}$ each mean the same as $R^1$ to $R^8$ of Formula (1) respectively, $R^{125}$ and $R^{128}$ mean the same as the substituents in the methine groups of Formula (1) respectively, and r represents a hydrogen atom or carboxyl group.]

Further, as another method, triazaporphyrinmagnesium complex compounds whose n is 0, and three of whose $X^1$ to $X^4$ are nitrogen, containing substituted methine groups can be obtained by using at least one kind of compounds shown by the above-described General Formulae (13) to (16), making a Grignard reagent of General Formula (29) written below work with a solvent such as ether existed; and further, heating the conpound with an amine such as quinoline existed.

[Chemical Formula 19]

$$R'—CH_2MgX' \qquad (29)$$

[In the formula, R' means the same as a substituent which substitutes a methine group of Formula (1), and X' means a halogen atom.]

Also, metal-free triazaporphyrin compounds can be obtained by making triazaporphyrin compounds of metal complexes react with an acid such as an organic acid of trifluoroacetic acid in a solvent such as chloroform, etc., or by making a Grignard reagent such as methylmagnesiumbromide react with triazaporphyrin compounds of metal complexes, and treating them with an acid such as hydrochloric acid or sulfuric acid afterward.

Further, porphyrin compounds whose n is 0, and all of whose $X^1$ to $X^4$ are substituted or unsubstituted methine groups are not particularly restricted, and can be produced according to the methods described in J. Org. Chem. Vol. 58(25), 7245-7257(1993) and the like, for example. Typically, those compounds can be produced by the following reactions.

Metal-free porphyrin compounds whose n is 0, and all of whose $X^1$ to $X^4$ are substituted or unsubstituted methine groups in General Formula (1) can be obtained by using at least one kind of pyrrole compounds shown by General Formulae (30) to (33) written below and at least one kind of aldehyde compounds shown by General Formulae (34) to (37) written below, and making them react with heat with an acid such as propionic acid existed in an solvent or not in an solvent.

[Chemical Formula 20]

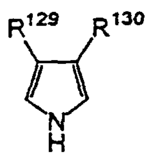 (30) 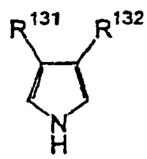 (31) 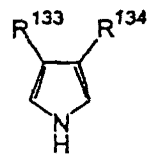 (32) 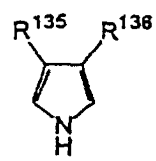 (33)

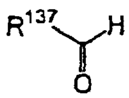 (34) 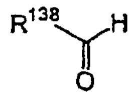 (35) 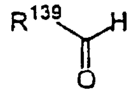 (36) 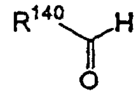 (37)

[In the formulae, $R^{129}$ to $R^{136}$ each mean the same as $R^1$ to $R^8$ of Formula (1) respectively, and $R^{137}$ to $R^{140}$ each mean the same as the substituents substituting the methine groups, which are $X^1$ to $X^4$ of Formula (1).]

Further, as another method, metal-free porphyrin compounds whose n is 0, and all of whose $X^1$ to $X^4$ are substituted or unsubstituted methine groups in General Formula (1) can be obtained by using dipyromethanedialdehyde compounds of Formula (38) written below and dipyromethane compounds of Formula (39) written below, and making them react with heat with an acid such as propionic acid existed, in an solvent or not in an solvent.

[Chemical Formula 21]

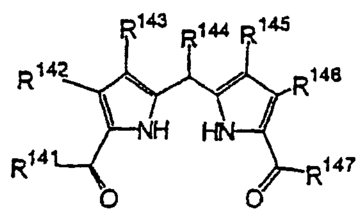 (38) 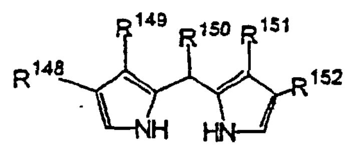 (39)

[In the formulae, $R^{142}$, $R^{143}$, $R^{145}$, $R^{146}$, $R^{148}$, $R^{149}$, $R^{151}$ and $R^{152}$ each mean the same as $R^1$ to $R^8$ of Formula (1) respectively, and $R^{141}$ and $R^{147}$ mean the same as the substituants in the methine groups, which are $X^1$ to $X^4$ of Formula (1), respectively.]

As regards azaporphyrin-based compounds shown by General Formula (1) of the present invention, whose n is 1 can be obtained by making compounds shown by both General Formulae (40) and (41) written below, which are obtained by the above-mentioned production methods, or compounds shown only by General Formula (40) react with heat in some cases, with an organic metallic salt such as acetylacetonato salt, acetate, trifluoroacetate, etc. of a trivalent or tetravalent metal atom or a hydrate thereof, with an inorganic metallic salt such as halide, sulfate, nitrate, perchlorate, chlorate, hypochlorite, etc. of a metal atom, or a hydrate thereof, or with an disubstituted amide salt such as dimethylamide salt or diethylamide salt, etc., in a solvent of an alcohol such as pentanol, hexanol, etc. or of an aromatic solvent such as benzene, toluene, xylene, 1-chloronaphthalene, 1,2-dichlorobenzene, 1,2,4-trichlorobenzene, etc.

[Chemical Formula 22]

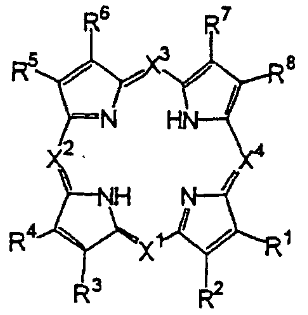
(40)

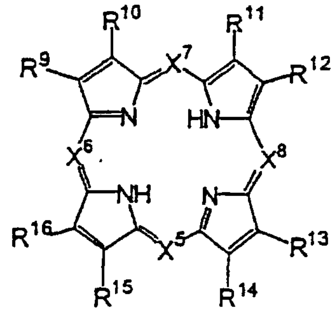
(41)

[In the formulae, $R^1$ to $R^{16}$ and $X^1$ to $X^4$ represent the same groups as $R^1$ to $R^{16}$ and $X^1$ to $X^4$ of Formula (1) respectively.]

Alternatively, instead of General Formula (40) the above compound can be obtained by using compounds shown by General formula (42) written below, which are lithium salts, or substituting the compounds with which oxygen-containing hydrocarbon compounds such as dimethoxyethane coordinate for the compounds of General Formula (42); or by using compounds shown by General Formula (43) written below, which are lithium salts, instead of General Formula (41), or substituting the compounds with which oxygen-containing hydrocarbon compounds such as dimethoxyethane coordinate for the compounds of General Formula (43); and making them similarly react.

[Chemical Formula 23]

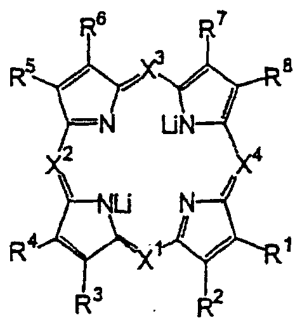
(42)

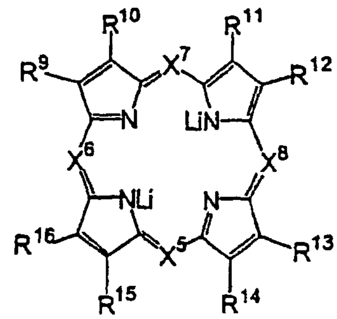
(43)

[In the formulae, $R^1$ to $R^{16}$ and $X^1$ to $X^8$ represent the same groups as $R^1$ to $R^{16}$ and $X^1$ to $X^8$ of Formula (1) respectively.]

Further, compounds of General Formula (45) written below whose central metals are tetravalent metals, which are the compounds of the present invention, can be obtained by making an oxidizing agent such as dichlorodicyanobenzoquinone, chloranil, etc. work on compounds of General Formula (44) written below whose central metals are trivalent metals and hydrogen atoms, which are the compounds of the present invention, and by making them react with heat in some cases, in a halogenated solvent such as dichloromethane, chloroform, dichloroethane or trichloroethane.

[Chemical Formula 24]

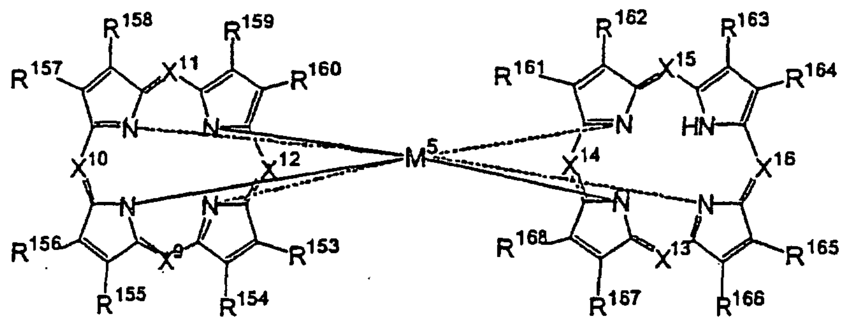

(44)

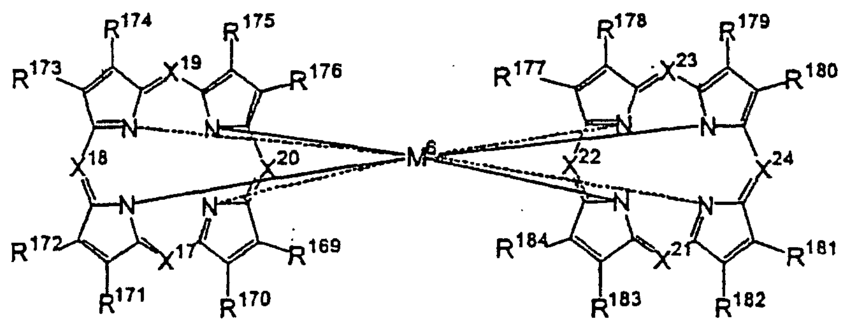

(45)

[In the formulae, $R^{153}$ to $R^{184}$ represent the same groups as $R^1$ to $R^{16}$ of Formula (2) respectively, $M^5$ represents a trivalent metal atom, $M^6$ represents a tetravalent metal atom, and $X^9$ to $X^{24}$ mean the same as $X^1$ to $X^8$ of Formula (1) respectively.]

Further, compounds of General Formula (47) written below, which are the compounds of the present invention, can be obtained by making compounds of General Formula (46) written below react with heat in some cases, with lithium compounds of the above-mentioned General Formula (42) or (43), using a silver compound such as trifluoro silver acetate, etc. as a reaction auxiliary agent, in.an aromatic solvent such as benzene, toluene, xylene, 1-chloronaphthalene, 1,2-dichlorobenzene, 1,2,4-trichlorobenzene, etc.

[Chemical Formula 25]

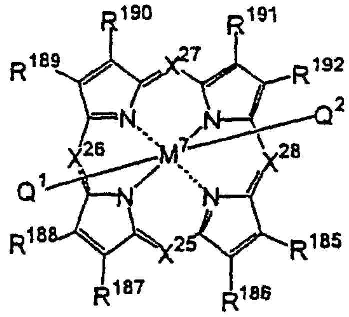

(46)

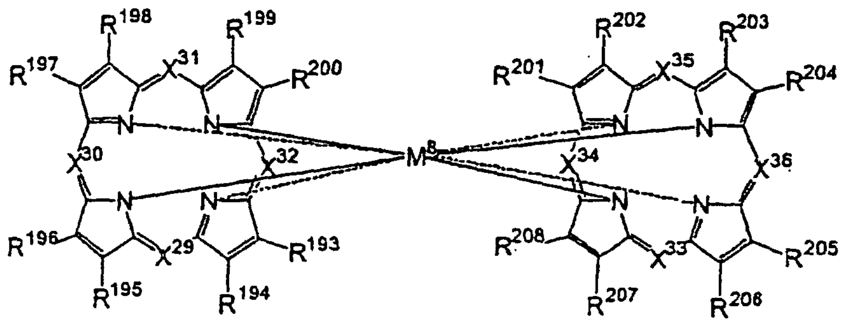

(47)

[In the formulae, $R^{185}$ to $R^{208}$ represent the same groups as $R^1$ to $R^{16}$ of Formula (1) respectively, $M^7$ and $M^8$ represent tetravalent metal atoms, $Q^1$ and $Q^2$ represent halogen atoms such as fluorine atom, chlorine atom, bromine atom and iodine atom, and $X^9$ to $X^{24}$ mean the same as $X^1$ to $X^8$ of Formula (1).]

Further, regarding ones among $R^1$ to $R^{16}$ in which arbitrarily selected substituents are hydrogen atoms, compounds of General Formula (1) in which hydrogen atoms are substituted can be obtained by substituting the selected hydrogen atoms for arbitrary substituents, according to a prescribed synthesizing method such as nitration, halogenation, formylation, amination, carboxylation, hydroxylation, acylation, elimination reaction, etc., for example, and using a prescribed synthesizing method such as reduction, oxidation, isomerization, transition, etc., if necessary.

It should be noted that substituents and the like are shown according to General Formula (1); General Formulae (2) to (4) are included in General Formula (1), so that corresponding substituents and the like can obviously be changed. Dye in the recording layer constituting the optical recording medium of the present invention is substantially made of one or more kinds of azaannulene compounds, particularly the compounds in General Formula (1) to (4), and further, may be mixed with other dye compounds than the above, having the absorption maximum between 290nm and 690nm in wavelength and high refractive index between 300nm to 900nm in wavelength, if necessary. Specifically, cyanine-based compound, squarylium-based compound, naphthoquinone-based compound, anthraquinone-based compound, tetrapyraporphyrazine-based compound, indophenol-based compound, pyrylium-based compound, thiopyrylium-based compound, azulenium-based compound, triphenylmethane-based compound, xanthene-based compound, indanthrene-based compound, indigo-based compound, thioindigo-based compound, merocyanine-based compound, thiazine-based compound, acridine-based compound, oxazine-based compound, dipyromethene-based compound, oxazole-based compound, and the like can be mentioned, and a plurality of the compounds may be mixed together. The mixture ratio of these compounds is between 0.1 mass % and 30 mass % or so.

When the recording layer is deposited, compounds such as quenchers, compound pyrolysis accelerators, ultraviolet absorbers, adhesives, endoergic or endoergic degrading compounds, or compounds of solubility-improving agents can be applied to compounds shown by General Formula (1) as substituents, so as to be efficiect in recording, reproduction and erasure, or so as not to impair recording, reproduction or erasure, and preferably to be less than 3000 in molecular weight.

As specific examples of the quenchers, metal complexes such as: acetylacetonato-based; bisdithiol-based such as bisdithio-"-diketone-based and bisphenyldithiol-based; thiocatechonal-based; salicylaldehyde oxime-based; and thiobisphenolate-based are favorable. In addition, amine-based metal complexes are also favorable.

The compound pyrolysis accelerators are not particularly limited as long as acceleration in pyrolysis of compounds is confirmed by thermogravimetric analysis (TG analysis), etc., and metallic compounds such as metal-based anti-knocking agents, metallocene compounds and acetylacetonato-based metal complexes can be mentioned, for example. As examples of the metal-based anti-knocking agents, lead-based compounds such as tetraethyl lead, etc., and Mn-based compounds such as cymantren[$Mn(C_5H_5)$ $(CO)_3$], etc. can be mentioned, and as examples of the metallocene compounds, ironbiscyclopentadienyl complex (ferrocene) and biscyclopentadienyl complexes of Ti, V, Mn, Cr, Co, Ni, Mo, Ru, Rh, Zr, Lu, Ta, W, Os, Ir, Sc and Y can be mentioned. Partivularly, ferrocene, ruthenocene, osmocene, nickelocene, titanocene and derivatives thereof have the favourable effectiveness of acceleration in pyrolysis.

In addition, other than metallocene, organic acid metallic compounds such as iron formate, iron oxalate, iron laurate, iron naphthenate, iron stearate, iron acetate, etc.; chelate iron complexes such as acetylacetonato iron complex, phenanthroline iron complex, bispyridine iron complex, ethylenediamine iron complex, ethylenediaminetetraacetic acid iron complex, diethylenetriamine iron complex, diethyleneglycoldimethylether iron complex, diphosphino iron complex, dimethylglyoxymato iron complex, etc.; iron complexes such as carbonyl iron complex, cyano iron complex, ammine iron complex, etc.; halogenated irons such as ferrous chloride, ferric chloride, ferrous bromide, ferric bromide, etc.; inorganic iron salts such as iron nitrate, iron sulfate, etc.; and further, iron oxide, etc. can be mentioned as iron-based metallic compounds. Hereupon, pyrolysis accelerators capable of being dissolved in organic solvents and of heat, humidity and light -resisting are preferable.

As regards the endoergic or endoergic degrading compounds, compounds described in Japanese published patent application No. H10-291366 or compounds having substituents, etc. described in the application can be mentioned.

As regards each of the above-mentioned quenchers, compound pyrolysis accelerators, and endoergic or endoergic degrading compounds, one kind or a mixture of two kinds or more may be used, as need arises.

Alternatively, compounds having quenching ability, compound pyrolysis accelerating ability, ultraviolet-absorbing ability and adhesive ability can be applied as substituents to the azaannulene compounds described in the present invention, particularly the compounds shown by General Formula (1).

Specifically, a compound residue having quenching ability, compound pyrolysis accelerating ability, ultraviolet-absorbing ability, adhesive ability, and endoergic or endoergic degrading ability may bond with an azaannulene compound residue of General Formula (1) described in the present invention by at least one single bond, double bond or triple bond so that one molecule forms. Preferably, a substituent shown by General Formula (48), which is each substituent of an azaannulene ring of General Formula (1),

[Chemical Formula 26]

$$\mathbf{-(L^{n})-(J^{n})} \qquad \mathbf{(48)}$$

[In the formula, $L^n$ represents a portion connected to an azaannulene compound of Formula (1), that is, a single bond, or an atom chain of 1 to 20 in carbon number made by and joining at least one kind selected from methylene group, methine group, amino group, imino group, oxygen atom and sulfur atom which may be substituted, and $J^n$ represents a compound residue containing a quencher, a compound pyrolysis accelerater, an ultraviolet absorber, adhesive ability, and endoergic or endoergic degrading ability, which corresponds to $R^1$ to $R^{16}$.]
or a substituent shown by General Formula (49), which is a substituent made by bonding each substituent of an azaannulene ring of General Formula (1) with another substituent

[Chemical Formula 27]

$$\mathbf{-(L^{m1})-(J^{m})-(L^{m2})-} \qquad \mathbf{(49)}$$

[In the formula, $L^{m1}$ and $L^{m2}$ are next to each other, and also each represent a portion connected to an azaporphyrin-based compound of Formula (2), that is, a single bond or an atom chain of 1 to 20 in carbon number made by joining at least one kind selected from methylene group, methine group, amino group, imino group, oxygen atom and sulfur atom which may be substituted, and $J^m$ represents a compound residue containing a quencher, a compound pyrolysis accelerater, an ultraviolet absorber, adhesive ability, and endoergic or endoergic degrading ability, which corresponds to $R^1$ to $R^{22}$.]
can be mentioned.

As favorable examples of the atom chains used for $L^n$, $L^{m1}$ and $L^{m2}$, single bond, methylene group, imino group, thia group, $-C(=O)-OCH_2-$, $-C(=O)-OCH(CH_3)-$, $-OCH_2-$, $-OCH(CH_3)-$, $-CH_2OCH_2-$, $-CH_2OCH(CH_3)-$, $-CH(CH_3)OCH(CH_3)-$, $-O-C(=O)-$, $-CH=CH-$, $-CH=N-$, $-C(=O)-$, $-CH=CH-C(=O)O-$, $-C(C=O)CH_2CH_2C(=O)-O-$, the groups made

by substituting these groups by the above-mentioned substituents, and the like can be mentioned.

As favorable examples of $J^n$ and $J^m$, metallocene residues such as ferrocene residue, cobaltcene residue, nickelocene residue, ruthenocene residue, osmocene residue and titanocene residue can be mentioned.

As favorable framework examples of General Formula (48), the following metal complex residues can be mentioned.

[Chemical Formula 28]

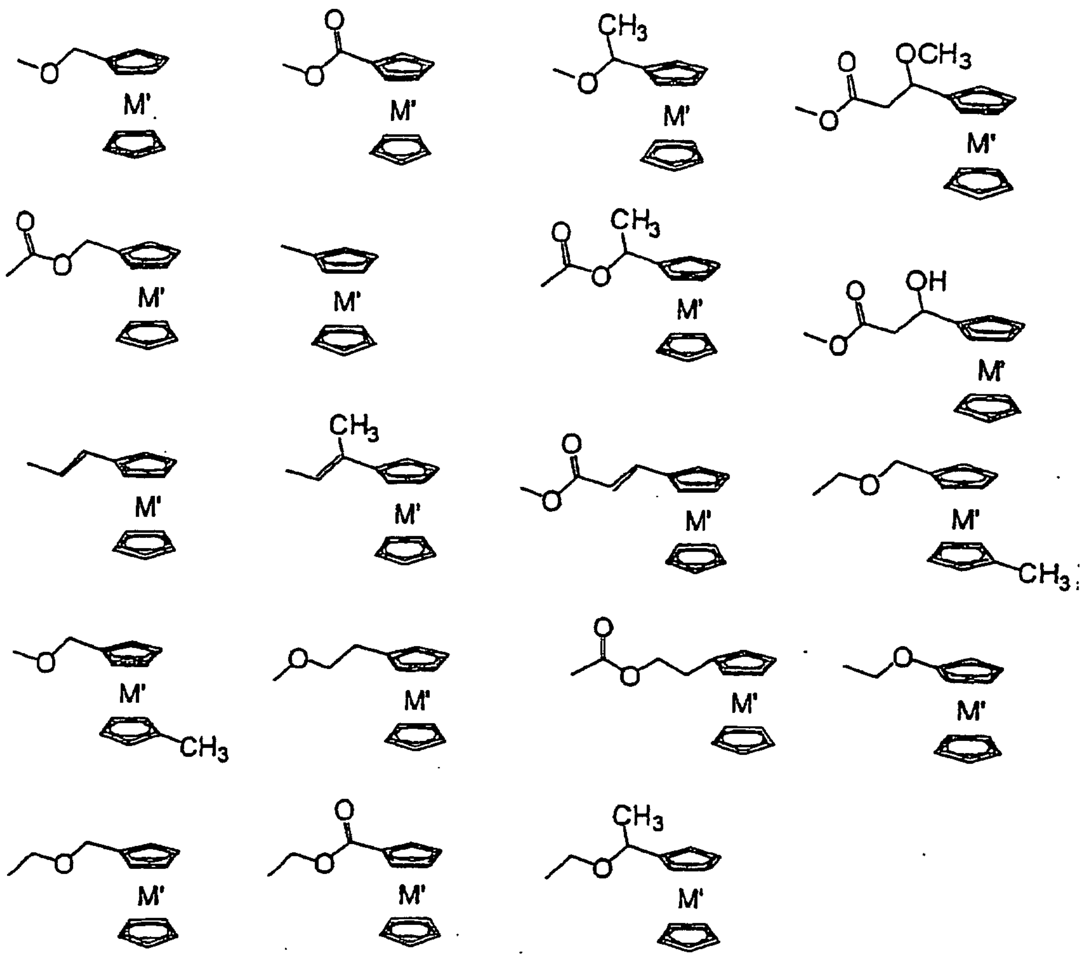

(M' represents Fe, Ru, Co, Ni, Os or M"$Z'_2$ (M" represents Ti, Zr, Hf, Nb, Mo and V, and Z' represents CO, F, Cl, Br, I, or alkyl groups, alkoxy groups, aryl groups, aryloxy groups, aralkyl groups and aralkyloxy groups of 1 to 10 in carbon number containing substituents similar to the above-described $R^1$ to $R^{16}$.).)

Further, as favorable framework examples of General Formula (49), the following metal complex residues can be mentioned.

[Chemical Formula 29]

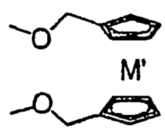
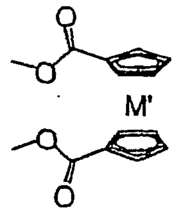
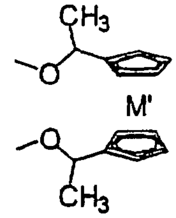
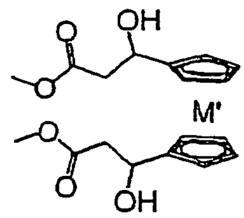
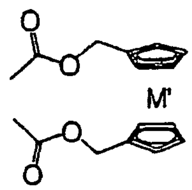
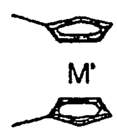
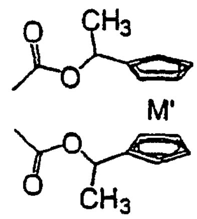
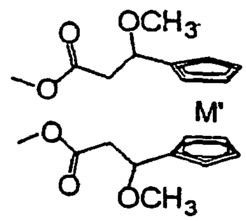
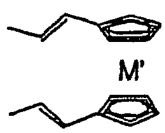
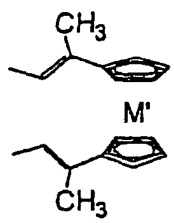
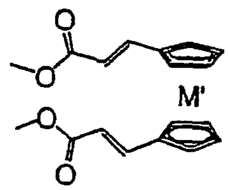
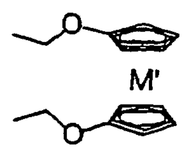
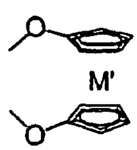
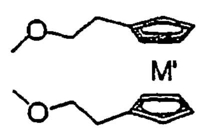
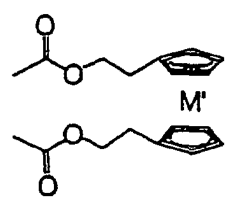
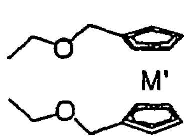
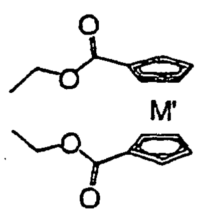
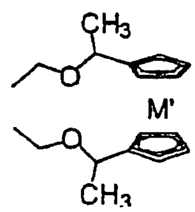

(M' represents Fe, Ru, Co, Ni, Os or M"$Z'_2$ (M" represents Ti, Zr, Hf, Nb, Mo and V, and Z' represents CO, F, Cl, Br, I, or alkyl groups, alkoxy groups, aryl groups, aryloxy groups, aralkyl groups and aralkyloxy groups of 1 to 10 in carbon number containing substituents similar to the above-described $R^1$ to $R^{16}$.).)

As regards the above-mentioned compound groups, the refractive index n≧1.9 can be realized in the vicinity of wavelength λ = 400nm, for example. As regards phthalocyanine-based, azaporphyrin-based or porphyrin-based dye in particular, usually there is a soret band in the range of an ultraviolet ray of 400nm or less, and there is an absorption band including a definit maximum value represented by a Q band or the like within 400nm from this soret band on the long wavelength side. The absorption coefficient k and the refractive index n at the foot of this soret band are adjusted so that the aforementioned conditions are satisfied at the recording wavelength λ.

Various kinds of substituent modification may be performed on a parent nucleus of a base molecule of an organic dye selected as described above, thereby optimizing a light-absorbing spectrum and improving workability such as resolvability of dye. These materials can be deposited usually by dissolving or dispersing them in an appropriate solvent, and coating and drying them using a spin coat method, spray method and the like. Also, in order to execute high density recording as much as possible, a vacuum evaporation method or the like is applied with respect to recording (land and groove recording) on both betwen grooves (land portion) and within grooves (groove portion) of guide grooves

formed in a substrate or light-transmissive layer, due to the necessity to uniformly control the thickness of a dye film for both the grooves and lands. It is preferable that the thickness of a recording layer be within the range of 20 to 200nm, more preferably in the range of 20 to 120nm. In order to restrain thermal interference and make recording density high, it is desirable to retain the high refractive index of the organic dye recording film and make the film thin.

As shown in the above described FIGS. 1 and 2, a reflective layer can be provided at a portion adjacent to the recording layer according to the optical recording medium of the present invention. As materials uesd for the reflective layer, metals such as gold, silver, aluminum, platinum and copper, and alloys containing those metals can be mentioned. In the case where blue-violet laser light of 390 to 430nm in wavelength is used, silver, aluminum and alloys containing them are desirable in terms of cost and optical characteristics, and in particular alloy-based material composed of highly durable silver and Ti, Pd, Cu, and the like are desirable. The thickness of the reflective layer is usually within 20 to 120nm, preferably within 10 to 80nm. Further, instead of the above-described metal reflective layer a dielectric reflective film in which a low refractive index dielectric film and a high refractive index dielectric film are laminated alternately can be formed. For example, in the case where the reflectance of the disc is set relatively low, simple structures such as a two-layer laminated film consisting of a one-quarter wavelength film of $SiO_2$ (n = 1.46) and a one-quarter wavelength film of $N_4$ (n = 2.0)can be employed. It is also possible to adopt film structure of a disc, in which no metal thin layer is used. As a method for forming the reflective layer, a vacuum evaporation method, sputtering method, ion beam sputtering method or the like can be used.

As regards the structure shown in FIG. 1, a protective film 4 is formed by spin coating organic materials such as ultraviolet curing resin and heat-hardening resin on the reflective layer 3. Further, as shown in FIG. 1, it is also possible to stick a dummy substrate on the protective film in the same manner as conventional DVDs.

Further, regarding the structure shown in FIG. 3, a reflective layer 2 and a recording layer 3 are sequentially formed on a substrate 1 where guide grooves etc. are formed, and after coating the recording layer 3 with ultraviolet curing resin, a light-transmissive layer 8 is formed by hardening the resin with UV irradiation. Alternatively, it is also possible to separately form the light-transmissive layer 8 beforehand in a film shape with an uniform thickness, and then stick the film through an adhesion layer such as ultraviolet curing resin or pressure-sensitive adhesive.

Forming a transparent protective layer between a substrate and a recording layer is efficient with respect to restraining deformation of the substrate, which is caused by heat generated at the time of recording. Further, in the case where the protective layer is formed on a recording layer 3 through a light-transmissive layer 8 and adhesive as shown in FIG. 3, forming a transparent protective film 4 between organic dye and those layers is also efficient in order to restrain the above-described deformation of a substrate and to avoid dissolution of the organic dye into ultraviolet curing resin. This transparent protective layer 4 can be formed of a material of a substance or amalgam of an oxide, nitride, sulfide or fluoride of metal (for example Mg, Al, Ti, Zn, Ga, Zr, In, Sn, Sb, Ba, Hf, Ta, Sc, Y or rare-earth element) or metalloid (Si, Ge).

The vacuum evaporation method, the sputtering method, the ion beam sputtering method, etc. can be used for the formation of these transparent protective films. Further, regarding an optical recording medium of this structure, a polycarbonate sheet of 10 to 177 μm in thickness made by an injection molding or a cast method, where guide grooves are formed by thermal transfer using a stamper, is used as a light-transmissive layer, for example. A recording layer made of organic dye and a reflective layer may be deposited in this order on the sheet, and further, a substrate may be stuck to them.

Also, by forming the above-described transparent protective layers on both sides adjacent to a recording layer, deformation of a substrate, reflective layer, protective film and light-transmissive layer, caused by heat generated at the time of recording, can be restrained more completely, and repetitively rewriting characteristics can be improved.

In order to retain the initial reflectances and signal modulation degrees conforming to each of the standards of CD, DVD, DVR or the like, the thicknesses of the above-described recording film, reflective film and transparent protective film are optimized by using materials, which have appropriate optical constants in the recording laser wavelength, for the recording film, reflective film and transparent protective film and by calculating the reflectance of a multilayer film structure considering the effectiveness of optical multiple reflection.

The optical recording medium according to the present invention has a structure in which at least one kind of thin film is laminated, as described above, so that it is important to set the thickness of each layer such that by actively utilizing multiple interference of light, the initial reflectance is within the range defined by each standard, and the detected modulation degree of the information signal becomes the maximum. Therefore, we are to describe this multiple interference effect of light, particularly the reflectance calculation method; and effective Fresnel coefficient method.

When $r_1$ and $r_2$ are the Fresnel coefficients in media $n_0$ and $n_1$, and media $n_1$ and $n_2$ in FIG. 4 respectively; if the incident angle of the laser beam is given θ, the amplitude reflectance of a single-tier film is given by

[Formula 1]

$$r = r_1 + t_1 r_2 t_1' e^{-2i\delta_1} + t_1 r_2 (r_1' r_2) t_1' e^{-4i\delta_1} + t_1 r_2 (r_1' r_2)^2 t_1' e^{-6i\delta_1} + \cdots \quad (1)$$

Herein,

[Formula 2]

$$\delta_1 = \frac{2\pi}{\lambda} n_1 d \cos\theta_1 \quad (2)$$

is provided, and the phase difference between a reflecting wave and a passing wave next to each other is $2\delta_1$. Stokes' law says according to the Fresnel coefficient in the forward direction and the Fresnel coefficient (shown with a prime) in the backward direction, the relationship of

[Formula 3]

$$t_1' = t_1, \qquad r_1' = -r_1, \qquad t_1 t_1' + r_1^2 = 1 \quad (3)$$

is established. Therefore,

[Formula 4]

$$r = \frac{r_1 + r_2 e^{-2i\delta_1}}{1 + r_1 r_2 e^{-2i\delta_1}} \quad (4)$$

can be shown.

In order to obtain the reflectance of a multi-tier film, multiple interference is calculated as described above using the Fresnel coefficients on two interfaces of the front and back in the final layer L, and regarding the interface as a hypothetical boundary, and making $R_L$ at the time the effective Fresnel coefficient, calculations are executed one after another toward upper layers. Specifically,

[Formula 5]

$$\tilde{R}_L = r_{L+1} \quad (5)$$

is given, and according to the above-described calculation method in which the final layer is a single-layer film, the complex reflectance in the final layer is

[Formula 6]

$$\tilde{R}_{L-1} = \frac{r_L + \tilde{R}_L e^{-2i\delta_L}}{1 + r_L \tilde{R}_L e^{-2i\delta_L}} \quad (6)$$

With respect to the other layers calculation can similarly be performed, and regarding a j layer

[Formula 7]

$$\tilde{R}_{j-1} = \frac{r_j + \tilde{R}_j e^{-2i\delta_j}}{1 + r_j \tilde{R}_j e^{-2i\delta_j}} \quad (7)$$

is calculated. So that by calculating from the final layer to the first layer in order, the reflectance in a multi-tier film can be calculated.

For example, regarding an optical recording medium shown in FIG. 3 in which a polycarbonate substitute 1, a silver reflective film 2 of 15nm in thickness, an organic dye recording film 3 of (n, k) = (1.95, 0.15) (the film thickness is a variable parameter), an $SiO_2$ protective film 4 of 30nm in thickness and a light-transmissive layer 8 of polycarbonate have been formed in order, a calculation example of the reflectance when recording and reproduction are executed from the light-transmissive layer side is shown in FIG. 5. For example, if the thickness of the organic dye recording film 3 is 80nm, when the initial reflectance before recording is 15% and refractive index of the organic dye film after recording is n=1.7, the reflectance thereof is 8%, so that the thickness of an organic dye film of a low reflectance type medium structure, suitable for High-to-Low recording of modulation degree = (initial reflectance - reflectance after recording) / initial reflectance = 47% is thus ditermined. Although in the case of the high reflectance type, the thickness of the silver reflective film becomes greater and in the case where Low-to-High recording is performed, the film structure is different, optimization is possible by the similar calculation method.

In the present invention, the explanation has been given with respect to the rewritable type; however the present invention can be applied to the write-once type optical recording media capable of recording only once, because unless erasure is executed, the recording and reproducing method and the structure thereof are not different from those of the write-once type media. Therefore, high compatibility can be retained with the conventional media.

Hereinafter, the present invention will be described referring to embodiments, however the present invention is not limited to those embodiments.

Embodiment 1

This embodiment is an example of a DVD using blue laser of wavelength λ= 405nm.

A polycarbonate substrate the dimensions of which are 0.6mm in thickness and 120mm in outer diameter has been made from a stamper with grooves in the shape of 0.6μm in pitch, 50nm in groove depth and 0.28μm in groove width by an injection molding method. The film structure of this example is the same as that shown in FIG. 1. Tetraazaporphyrin dye <tetara-t-butyl-5,10,15,20-tetraazaporphyrinoxovanadium(IV)> shown as recording layer 2 by General Formula (A) has been deposited by a vacuum evaporation method on grooves on the substrate so that the film thicness becomes 60nm. The refractive index and the absorption coefficient of the recording layer 2 were n = 1.8 and k = 0.05 at 405nm, respectively. Subsequently, an optical recording medium of the same outer shape as the DVD has been made by depositing a silver reflective layer 3 of 100nm in thickness on this recording layer by a sputterinq method, then depositing UV curing resin [SD17] (produced by DAINIPPON-INK AND CHEMICALS, INCORPORRATED) by a spin coating method on the reflective layer 3 in the thickness of approximately 3μm as a protective film 4, and applying UV adhesive thereover so that a dummy substrate of 0.6mm in thickness (made of polycarbonate) is stuck. The initial reflectance of the above disc was 23%.

A simply repetitive signal corresponding to the pit length of 0.5 μm was recorded on grooves of the recording medium through the polycarbonate substrate under the condition of 405nm in wavelength, NA = 0.65, linear velocity = 3.5m/s and recording power = 8.5mW, by an optical disc evaluation apparatus with blue-violet laser produced by Pulstec Industrial, Co., Ltd. When the recorded portion was reproduced at a reproducing power of 0.5mW, C/N = 59dB was obtained. FIG. 6 shows the RF signal output of this recording pattern.

After the recording, when the track was erased with continuous (DC) light of an erasing power of 3.7mW, the amount of the signal which remained after erasing was C/N = 43dB, and an erasure ratio 15dB was obtained. FIG. 7 shows the RF signal output at this time. The remainder, which has not been erased, is slightly observed. Further, when re-recording was executed on the same track on the same condition as the above-described recording, C/N = 56dB was obtained. FIG. 8 shows the RF signal output at this time. After the recording and erasure was repeated 20 times on the same track, an evaluation of the rewriting characteristics was executed and the same C/N value was obtained.

[Chemical Formula 30]

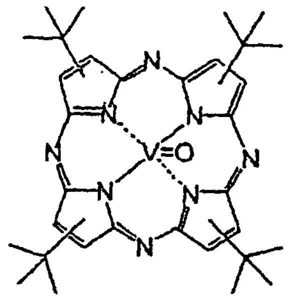

(A)

Embodiment 2

This embodiment is also an example of a DVD using blue laser of wavelength λ= 405nm.

The same substrate, organic dye recording film, silver reflective film and protective film were used. The film structure of this example is shown in FIG. 2. The difference between this example and Embodiment 1 is that $SiO_2$ of 30nm in film thickness is deposited by a sputtering method between the substrate 1 and the recording film 3 and between the recording film 3 and the reflective film 5 as a transparent protective layer 5 and as a transparent protective layer 6, respectively. The initial reflectance of the disc was 12%, which virtually corresponds to the calculated value.

A simple repetitive signal corresponding to the pit length of 0.5μm was recorded on the same condition as Embodiment 1.

When the recorded portion was reproduced at a reproducing power of 0.5mW, the C/N ratio = 59dB was confirmed. FIG. 9 shows the RF signal output concerning this recording pattern.

After the recording, when the track was erased with continuous (DC) light of an erasing power of 3.7mW, the amount of the signal which remained after erasing was C/N = 19dB, and an erasure ratio 32dB was obtained. FIG. 10 shows the RF signal output at this time, and it is understand that erasure was almost completely done. Further, when recording was again executed on the same track on the same condition as the above-described recording, C/N = 51dB was obtained. FIG. 11 shows the RF signal output concerning this recording pattern. When the recording and erasure was repeated 20 times on the same track and an evaluation of the rewriting characteristics was executed, signal deterioration almost did not occur with C/N kept at 51dB. As is obvious from FIG. 12, signal deterioration can hardly be observed. By holding the recording film between hard dielectric materials ($SiO_2$ in this example), it is considered that deformation occurred only in the organic dye recording film, effects on the substrate and the reflective film was restrained and repetitive rewriting performance was improved. Deformation traces on the dye layer side, which were detected when observing by SEM an exfoliated interface between the $SiO_2$ dielectric layer on the substrate side and the dye layer after the recording, after the erasure and after the rerecording, are shown in FIGS. 21A to 21C, respectively. Also, a SEM observation image of the interface on the $SiO_2$ dielectric layer side after the recording is shown in FIG. 21D. It is notable that there is hardly observed any deformation trace left on the surface of the $SiO_2$ dielectric layer adjacent to the dye layer, and a dome-shaped cavity only corresponding to the recorded portion in the dye layer was detected. Furthermore, it is directly observed that the dorm-shaped deformation trace was planarized by erasing using laser. In addition, there was no change happened on the surface of the $SiO_2$ dielectric layer on the substrate side after erasure and after rerecording.

Embodiment 3

This embodiment is an example of a DVR (an optical disc in which recording and reproduction are performed through a light-transmissive layer of 10 to 177 μm in thickness) using blue laser of wavelength λ = 405nm.

An example of a film structure in FIG. 3 concerning a recording medium capable of favorably recording and reproducing in an optical system of wavelength 405nm and NA = 0.85 is shown. Here note that guide grooves with a track pitch of 0.64 μm are formed in a polycarbonate substrate 1 and the width of the guide grooves is set to 50% so that recording can be done both on lands and grooves. Specifically, the track pitch is virtually 0.32 μm. Also, the depth of each groove is 40nm. A silver alloy reflective film 2 of 12nm in thickness was deposited thereon by a sputtering method, and diazaporphyrin dye <2,8,12,18-tetraethyl-3,7,13,17-tetramethyl-5,15-diazaporphyrin copper(II)> shown by General Formula (B) written below is used to form an organic dye film 3 by a vacuum evaporation method.

[Chemical Formula 31]

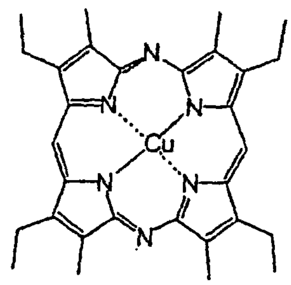

(B)

The organic dye film was 75nm in thickness, and the optical constant thereof was refractive index n = 1.9 and k = 0.15. As a transparent protective layer 7, $SiO_2$ of 30nm in film thickness was deposited by a sputtering method. The purpose of forming this film is to enhence the hardness of the surface and to improve repetitive recording characteristics, however here it may be noted to be used for protecting a recording film. As described above, a light-transmissive layer has a thickness of 100 μm. This layer is made by sticking a polycarbonate sheet with pressure-sensitive adhesive (PSA), and the thickness including the above all was set to 100 μm.

The initial reflectance of an optical disc made in this manner was 14%, which is close to the calculated design value. The linear velocity was 5.72m/s for recording, the reproduction light power was 0.3mW and the recording pattern was a single carrier wave of 0.35 μm in mark length. Also, for recording a single mark, seven pulse lines having the same width were made to enter with the pulse/space ratio being 50%, the peak power was 6.0mW, and the medium's characteristics were evaluated by measuring C/N with RBW = 30kHz by a spectrum analyzer. In the case of the above-described optical recording medium, a value of 45dB was obtained as a result after the above-mentioned recording and reproduction experiment were executed. FIG. 13 shows the RF signal output concerning this recording pattern.

After the recording, when the track was erased twice with continuous (DC) light of an erasing power of 3.0mW, the amount of the signal which remained after erasing was C/N = 10dB, and an erasure ratio 32dB was obtained. FIG. 14 shows the RF signal output at that time. Further, when rerecording was executed on the same track on the same condition as the above-described recording, a C/N value of 43dB was obtained. FIG. 15 shows the RF signal output at that time. This recording and erasure was repeated 10 times on the same track and the rewriting characteristics were evaluated, and C/N of 43dB was obtained without fail.

Also, the C/N value of the disc at the recording by a single carrier wave of 0.173 μm in recording mark length was 42dB, and the C/N value at the recording by a single carrier wave of 0.173 μm in recording mark length was 51dB. Further, when a random pattern recording of a (1, 7) sign of 0.38 μm in the shortest mark length was executed, such an eye pattern as shown in FIG. 16 was obtained.

Embodiment 4

This embodiment is also an example of a DVR (an optical disc in which recording and reproduction are performed through a light-transmissive layer of 10 to 177 μ m in thickness) using blue laser of wavelength λ= 405nm.

The same polycarbonate substrate as used in Embodiment 3 was used. The film structure in this example is shown in FIG. 17: polycarbonate substrate (1) / dielectric film 1 (9) / dielectric film 2 (10) / organic dye recording film (3) / transparent protective layer (7) / light-transmissive layer (8).

$Si_3N_4$ (n = 2.0) of 60nm in film thickness and $SiO_2$ (n = 1.46) of 60nm in film thickness were stacked in order on the substrate 1 by a reactive sputtering method in which nitrogen gas and oxygen gas are appropriately mixed into argon sputter operation gas respectively and a silicon target was used as a target. As regards these films, film thicknesses thereof are decided so that an organic dye recording layer is protected and deformation of recorded marks is prevented from acting on the substrate side, and so that the disc's initial reflectance conforms to the standard (15% to 25% in the case of the DVR-Blue) as a film structure including the later mentioned recording layer and transparent protective layer.

Further, monoazaporphyrin dye <2,3,7,8,13,17-hexaethyl-12,18-dimethyl-5-azaporphyrin copper(II)> shown by General Formula (C) written below was deposited as a recording layer such that its film thickness would be 50nm by a vacuum evaporation method. The refractive index and the absorption coefficient of the recording layer were n = 2.1 and k = 0.1 at 400nm. Then, $SiO_2$ transparent protective layer of 30nm in thicknes was deposited on this recording layer by a sputtering method. The following is the same as Embodiment 3.

[Chemical Formula 32]

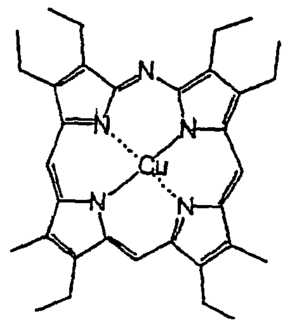

(C)

As regards the optical disc produced in this manner, the same value as the design value by calculation, which is the reflectance of approximately 20% with a light source of 405nm, was obtained by causing multiple reflection without having a metal reflective film.

The linear velocity was 5.72m/s for recording, the reproducing light power was 0.3mW and the recording pattern was a single carrier wave of 0.35 μm in mark length. Also, for recording a single mark, seven pulse lines having the same width were made to enter with the pulse/space ratio being 50%, the peak power was 5.0mW, and the medium's characteristics were evaluated by measuring C/N with RBW = 30kHz by a spectrum analyzer. In the case of the above-described optical recording medium, a value of 48dB was obtained as a result after the above-described recording and reproduction experiment was executed. After the recording, when the track was erased with continuous (DC) light of an erasure power of 3.0mW, the amount of the signal which remained after erasing was C/N = 25dB, and an erasure ratio 23dB was obtained. Further, when rerecording was executed on the same track on the same condition as the above-described recording, a C/N value of 48dB was obtained. After the recording and erasure was performed 10 times on the same track, an evaluation of the rewriting characteristics was executed, and although change of 1dB or less in the C/N value was slightly noticed in the first three attempts, it was possible to retain C/N of 48dB in the end.

Embodiment 5

This embodiment is an example of a DVD using red laser of wavelength λ= 658nm.

The recording medium obtained in Embodiment 1 was used. However, regarding a recording film, tetraazaporphyrin dye was deposited by a spin coating method using ethylcyclohexane solution (20g/l) on grooves of the substrate such that the film thickness thereof would be 90nm. As regards the guide groove of the substrate, the track pitch was 0.74 μm, the width was 0.33 μm and the depth was 150nm. The refractive index and the absorption coefficient of the recording layer were n = 2.1 and k = 0.05, respectively. Subsequently, an optical recording medium of the same outer shape as the DVD has been made by depositing a $SiO_2$ transparent protective layer of 30nm in thickness on this recording layer by a sputtering method, further depositing a silver reflective layer of 100nm in thickness by a sputtering method, then depositing by a spin coating method UV curing resin <Trade Name SD17> (produced by DAINIPPON INK AND CHEMICALS, INCORPORATED) as a protective film on this reflective layer such that the thickness thereof becomes approximately 3 μm, and applying UV adhesive to stick a dummy substrate of 0.6mm in thickness (made of polycarbonate) thereto. On this occasion, the initial reflectance of the disc was 47%. A simply repetitive signal corresponding to the pit length of 0.8 μm was recorded on grooves through the polycarbonate substrate on the condition of 658nm in wavelength, NA = 0.60, linear velocity = 3.5m/s and recording power = 9mW, by an optical disc evaluation apparatus with red laser produced by Pulstec Industrial, Co., Ltd. When the recorded portion was reproduced at a reproducing power of 0.5mW, C/N = 58dB was obtained.

After the recording, when the track was erased with continuous (DC) light of an erasure power of 4mW, the amount of the signal which remained after erasing was C/N = 30dB, and an erasure ratio 28dB was obtained. Further, when rerecording was executed on the same track on the same condition as the above-described recording, C/N = 55dB was obtained. After the recording and erasure was repeated 20 times on the same track, an evaluation of the rewriting characteristics was executed, and signal deterioration could hardly be observed.

Embodiment 6

This embodiment is an example of a CD using infrared laser of wavelength λ= 780nm.

A $SiO_2$ transparent protective layer of 30nm in thickness was deposited by a sputtering method on a substrate

with guide grooves, each of whose track pitch is 0.74 μm, width is 0.33 μm and depth is 170nm, and then phthalocyanine dye was deposited by a spin coating method using ethylcyclohexane solution (20g/l) on the grooves such that the film thickness thereof would be 100nm. The refractive index and the absorption coefficient of the recording layer were n = 2.2 and k = 0.1, respectively. Further, a silver reflective layer of 100nm in thickness was deposited by a sputtering method, and then UV curing resin <SD17> (produced by DAINIPPON INK AND CHEMICALS, INCORPORATED) as a protective film of 3 μm was deposited by the spin coating method on the reflective layer. On this occasion, the initial reflectance of the disc was 68%. A simply repetitive signal corresponding to the pit length = 1.2 μm was recorded on grooves through the polycarbonate substrate on the condition of 781nm in wavelength, NA = 0.50, linear velocity = 2.4m/s and recording power = 10.5mW, by an optical disc evaluation apparatus with red laser produced by Pulstec Industrial, Co., Ltd. When the recorded portion was reproduced at a reproducing power of 0.7mW, C/N = 57dB was obtained. FIG. 18 shows the RF signal output at that time.

After the recording, when the track was erased with continuous (DC) light of an erasing power of 3mW, the amount of the signal which remained after erasing was C/N = 33dB, and an erasure ratio 24dB was obtained. FIG. 19 shows the RF signal output at that time. Further, when rerecording was executed on the same track on the same condition as the above-described recording, C/N = 54dB was obtained. FIG. 20 shows the RF signal output at that time. After the recording and erasure was repeated 20 times on the same track, an evaluation of the rewriting characteristics was executed, and signal deterioration could hardly be observed.

As is obvious from the above explanation, according to the present invention, laser light of the same wavelength can be used with respect to recording, reproduction and erasure, so that a rewritable optical information recording medium can be provided by a simple recording and reproducing apparatus in which one laser light source, particularly a small laser diode light in weight is mounted. The conventional CD-RW drive and DVD-RW drive can be used in particular as recording and reproducing apparatuses of optical recording media of the present invention without any change. Further, only by adding erasing functions, the present invention can be applied to the CD-R drive and DVD-R drive. Complicated signal detection such as polarization optical system is not at all needed. Further, recording, reproducing and erasing on different laser wavelengths can be performed, so that the present invention can be applied to a mixed drive of CD and DVD.

The optical recording medium of the present invention is a recording medium including the recording layer which is made of a thin organic dye film uniformly deposited and changes according to laser irradiation, so that the noise level is sufficiently low, and the light modulation degree (contrast), namely the C/N value is high. As regards azaannulene compounds used in the optical recording medium of the present invention, particularly azaporphyrin groupes and porphyrin groupes such as phthalocyanine-based, naphthalocyanine-based and mono and tetra -azaporphyrin-based, and metal complexes thereof; light-absorbing spectra can be adjusted in accordance with the laser wavelengths used, so that it is possible to provide optical recording media suitable for recording and reproducing apparatuses using semiconductor lasers of a variety of wavelengths. Particularly, an optical recording medium which is applied to short wavelength lasers such as ultraviolet and blue-violet lasers can be provided to realize high recording density.

Also, by utilizing optical multiple reflection caused by using a dielectric protective film, a reflective film, the reflectances before and after a recording can be easily set, and also a recording method can be freely selected. Both land and groove recording and in-groove recording can be performed by using substrates with appropriate guide grooves. Further, both substrate reading and surface reading are possible. Accordingly, it is possible to provide optical recording media which are perfectly compatible with existing CDs and DVDs, next-generation optical discs (so-called DVR-Blue and DVD-Blue) and the like, involving the high and low reflectance types, or the High-to-Low and Low-to-High recordings.

Furthermore, an optical recording medium can be provided, in which the film structure is simplified, uniform characteristics and repeatability are obtained, and light resistance and weather resistance characteristics are high, reliability can be obtained, and the production cost is reduced to be inexpensive.

## Claims

1. A rewritable optical information recording medium, comprising at least one light-absorbing organic compound film which is substantially composed of only at least one kind of light-absorbing organic compound (including metal complexes thereof) as a recording film, wherein recording and erasure of information are executed by a reversible physical change of the compound film substance caused by laser light irradiation.

2. A rewritable optical information recording medium according to claim 1, wherein said physical change is a change in shape.

3. A rewritable optical information recording medium according to claim 1, wherein data recording is performed by a physical change locally caused by the irradiation of recording laser light, data reproduction is performed by detecting change in intensity of returned light of reproducing laser light having less power than said recording laser light, and data erasure is performed by applying at least once continuous light or pulse light having more laser power than said reproducing laser light and less power than said recording laser light.

4. A rewritable optical information recording medium according to claim 1, wherein said light-absorbing organic compound absorbs at least one kind of light having a wavelength selected from 350nm to 850nm in wavelength.

5. A rewritable optical information recording medium according to claim 1, wherein said light-absorbing organic compound is an organic dye compound of less than 3000 in molecular weight.

6. A rewritable optical information recording medium according to claim 4, wherein said organic dye compound is selected from at least one kind of azaannulene compounds (including metal complexes thereof).

7. A rewritable optical information recording medium according to claim 6, wherein the wavelengths of laser light used for recording, reproduction and erasure are in the range of 350nm to 450nm, and said organic dye compound is an azaannulene compound shown by the following General Formula (1).

[Chemical Formula 1]

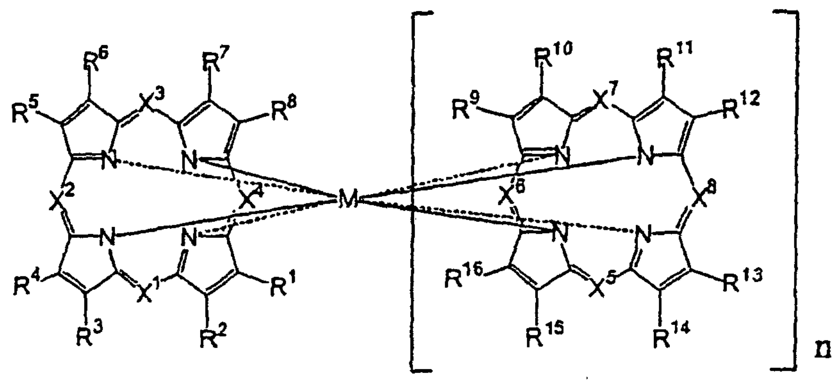

(1)

[In the formula, $R^1$ to $R^{16}$ each show individually a hydrogen atom, a halogen atom, a nitro group, a cyano group, a substituted or unsubstituted hydrocarbon radical, a substituted or unsubstituted hydroxyl group, a substituted or unsubstituted amino group, or a substituted or unsubstituted mercapto group; $X^1$ to $X^8$ each show individually a nitrogen atom, or a substituted or unsubstituted methine group; substituents in $R^1$ to $R^{16}$ and in methine groups may bond to each other through a connecting radical; and there may be contained oxygen atoms, substituted or unsubstituted sulfur atoms and substituted or unsubstituted nitrogen atoms between carbon atoms in substituted or unsubstituted hydrocarbon radicals, in hydrocarbon-substituted hydroxyl groups, in hydrocarbon-substituted mercapto groups and/or in hydrocarbon-substituted amino groups. Further, n represents 0 or 1; when n is 0, M represents a bivalent metal atom which may have ligands, or a trivalent or tetravalent metal or metalloid atom which has a substituent and/or ligand, and when n is 1, M represents a trivalent metal atom and one hydrogen atom, or a tetravalent metal atom.]

8. A rewritable optical information recording medium according to claim 7, wherein the wavelengths of laser light used for recording, reproduction and erasure are in the range of 350nm to 450nm, and said organic dye compound is a tetraazaporphyrin compound shown by the following General Formula (2).

[Chemical Formula 2]

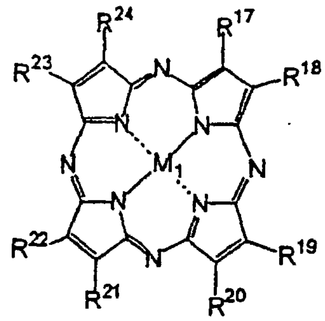

(2)

[In the formula, $R^{17}$ to $R^{24}$ each show individually a hydrogen atom, a halogen atom, a nitro group, a cyano group, a substituted or unsubstituted hydrocarbon radical, a substituted or unsubstituted hydroxy group, a substituted or unsubstituted amino group, or a substituted or unsubstituted mercapto group; substituents in $R^{17}$ to $R^{24}$ may bond to a substituent on a tetraazaporphyrin ring to form aliphatic rings through connecting radicals; and there may be contained oxygen atoms, sulfur atoms and substituted or unsubstituted nitrogen atoms between carbon atoms in substituted or unsubstituted hydrocarbon radicals, in hydrocarbon-substituted hydroxyl groups, in hydrocarbon-substituted mercapto groups and/or in hydrocarbon-substituted amino groups. $M^1$ represents a bivalent metal atom which may have a ligand, or a trivalent or tetravalent metal or metalloid atom which has a substituent and/or ligand.]

**9.** A rewritable optical information recording medium according to claim 6, wherein the wavelengths of laser light used for recording, reproduction and erasure are in the range of 600nm to 700nm, and said organic dye compound is an azaannulene compound shown by the following General Formula (3).

[Chemical Formula 3]

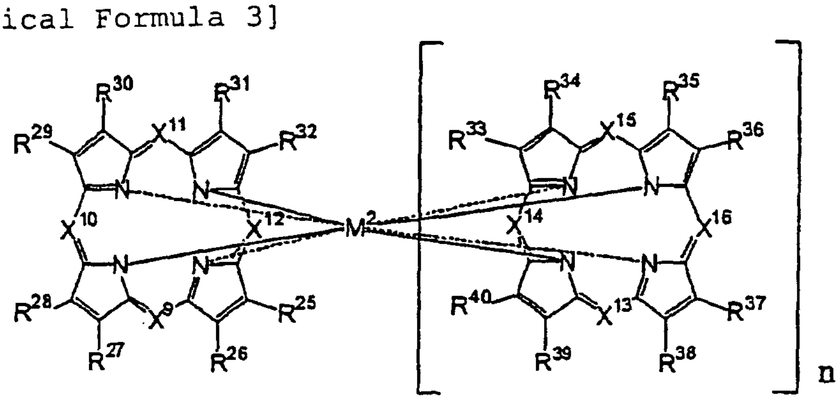

(3)

[In the formula, $R^{25}$ to $R^{40}$ each show individually a hydrogen atom, a halogen atom, a nitro group, a cyano group, a substituted or unsubstituted hydrocarbon radical, a substituted or unsubstituted hydroxy group, a substituted or unsubstituted amino group, or a substituted or unsubstituted mercapto group; $X^9$ to $X^{16}$ each show individually a nitrogen atom, or a substituted or unsubstituted methine group containing one of the groups or atoms shown by $R^1$ to $R^{16}$; substituents in $R^{25}$ to $R^{40}$ and in methine groups may bond to each other to form aliphatic rings through connecting radicals; and there may be contained oxygen atoms, substituted or unsubstituted sulfur atoms and substituted or unsubstituted nitrogen atoms between carbon atoms in substituted or unsubstituted hydrocarbon radicals, in hydrocarbon-substituted hydroxyl groups, in hydrocarbon-substituted mercapto groups and/or in hydrocarbon-substituted amino groups. Further, n represents 0 or 1; when n is 0, $M^2$ represents a bivalent metal atom which may have ligands, or a trivalent or tetravalent metal or metalloid atom which has a substituent and/or ligand, and when n is 1, $M^2$ represents a trivalent metal atom and one hydrogen atom, or a tetravalent metal atom.]

**10.** A rewritable optical information recording medium according to claim 6, wherein the wavelengths of laser light used for recording, reproduction and erasure are in the range of 600nm to 700nm, and said organic dye compound is a tetraazaporphyrin compound shown by General Formula (2).

**11.** A rewritable optical information recording medium according to claim 6, wherein the wavelengths of laser light used for recording, reproduction and erasure are in the range of 750nm to 850nm, and said organic dye compound is a phthalocyanine compound shown by the following General Formula (4).

[Chemical Formula 4]

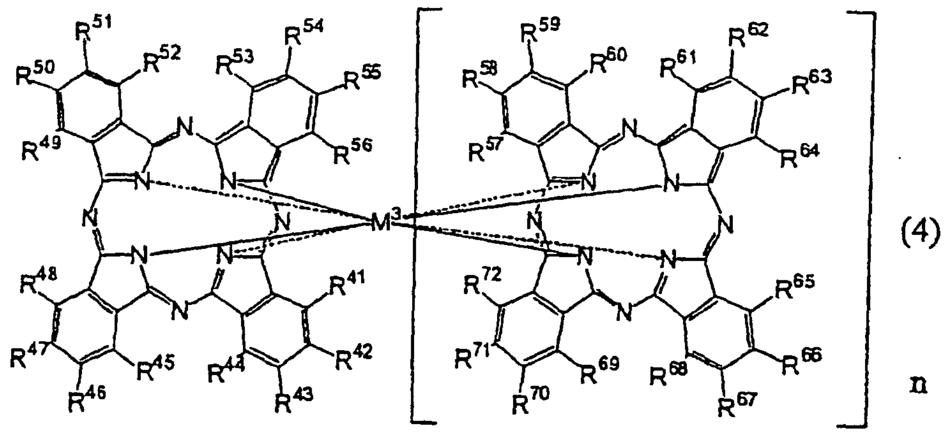

(4)

[In the formula, $R^{41}$ to $R^{72}$ each show individually a hydrogen atom, a halogen atom, a nitro group, a cyano group, a substituted or unsubstituted hydrocarbon radical, a substituted or unsubstituted hydroxy group, a substituted or unsubstituted amino group, or a substituted or unsubstituted mercapto group; substituents in $R^{41}$ to $R^{72}$ and in methine groups may bond to each other through connecting radicals; and there may be contained oxygen atoms, sulfur atoms and substituted or unsubstituted nitrogen atoms between carbon atoms in substituted or unsubstituted hydrocarbon radicals, in hydrocarbon-substituted hydroxyl groups, in hydrocarbon-substituted mercapto groups and/or in hydrocarbon-substituted amino groups. n represents 0 or 1; when n is 0, $M^3$ represents a bivalent metal atom which may have ligands, or a trivalent or tetravalent metal or metalloid atom which has a substituent and/or ligand, and when n is 1, $M^3$ represents a trivalent metal atom and one hydrogen atom, or a tetravalent metal atom.]

**12.** A rewritable optical information recording medium according to claim 1 further comprising: a transparent protective layer between said light-absorbing organic compound recording film and a substrate, or adjacently on the side or on the both sides of said light-absorbing organic compound recording film.

**13.** A rewritable optical information recording medium according to claim 12, wherein said transparent protective layer is composed of at least one kind selected from inorganic sulfide, inorganic oxide and inorganic nitride.

**14.** A recording and reproduing method, wherein a rewritable optical information recording medium including at least one light-absorbing organic compound film substantially composed of only at least one kind of light-absorbing organic compounds as a recording film is used, and the recording and erasure of information are performed by a reversible physical change of said light-absorbing organic compound film substance caused by laser light irradiation.

**15.** A recording and reproduing method according to claim 14, wherein with respect to a rewritable optical information recording medium including at least one light-absorbing organic compound film substantially composed of only at least one kind of light-absorbing organic compounds, data recording is performed by locally causing a physical change in said organic dye film substance with the irradiation of recording laser light, data reproduction is performed by detecting change in intensity of returned light of reproducing laser light having less power than said recording laser light, and data erasure is performed by applying at least once continuous light or pulse light having laser power more than said reproducing laser light and less than said recording laser light to reverse said physical change.

**16.** A recording and reproduing method according to claim 14, wherein said physical change is a change in shape.

**17.** A recording and reproducing apparatus, comprising a rewritable optical information recording medium which has

at least one light-absorbing organic compound film as a recording film substantially composed of only at least one kind of light-absorbing organic compounds, wherein the recording and erasure of information are performed by a reversible physical change of said light-absorbing organic compound film substance caused by laser light irradiation.

FIG. 1

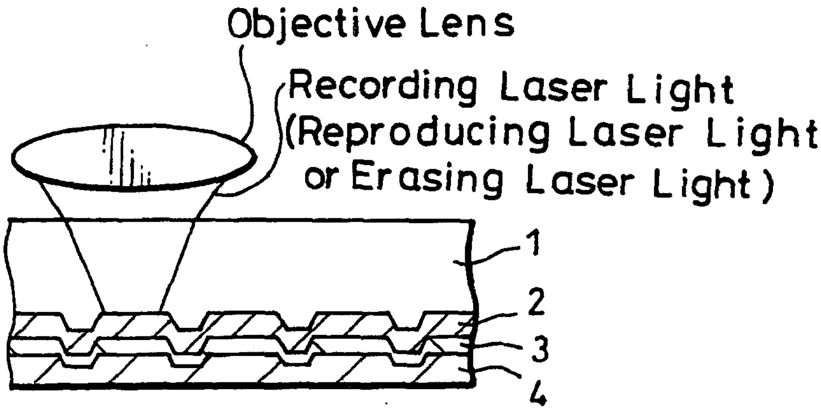
Objective Lens
Recording Laser Light
(Reproducing Laser Light
or Erasing Laser Light)
1
2
3
4

FIG. 2

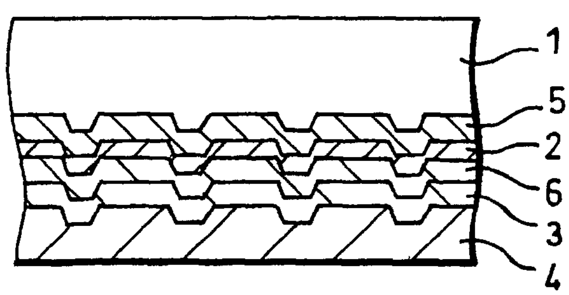
1
5
2
6
3
4

FIG. 3

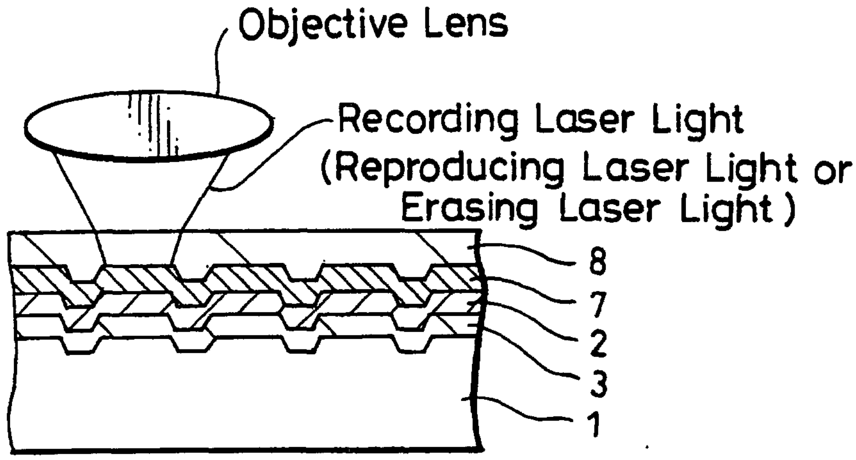
Objective Lens
Recording Laser Light
(Reproducing Laser Light or
Erasing Laser Light)
8
7
2
3
1

FIG. 4

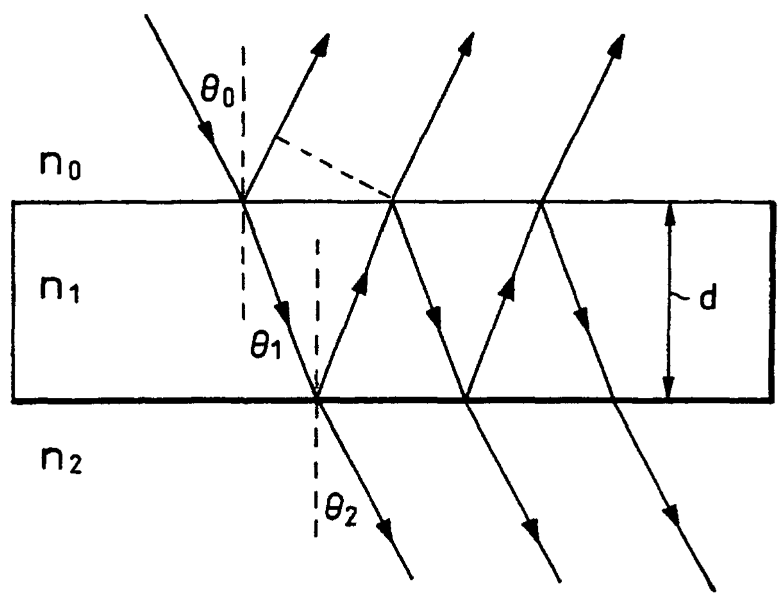
$\theta_0$
$n_0$
$n_1$
$\theta_1$
d
$n_2$
$\theta_2$

FIG. 5

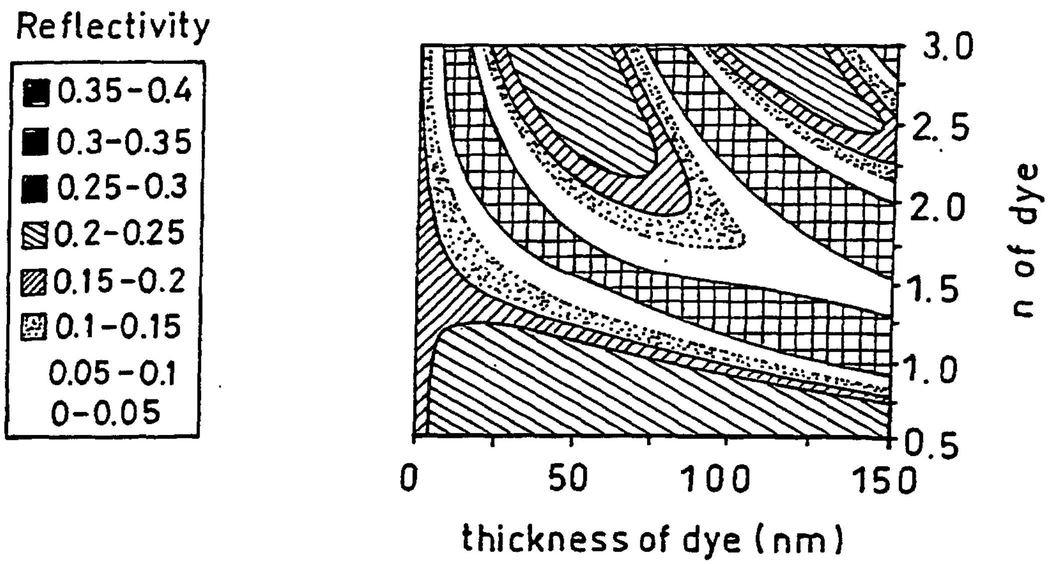
Reflectivity
0.35-0.4
0.3-0.35
0.25-0.3
0.2-0.25
0.15-0.2
0.1-0.15
0.05-0.1
0-0.05
3.0
2.5
2.0
1.5
1.0
0.5
n of dye
0
50
100
150
thickness of dye (nm)

FIG. 6

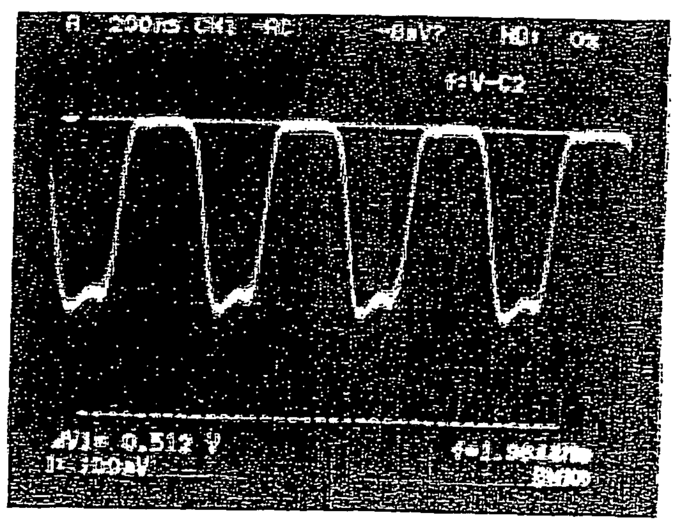

FIG. 7

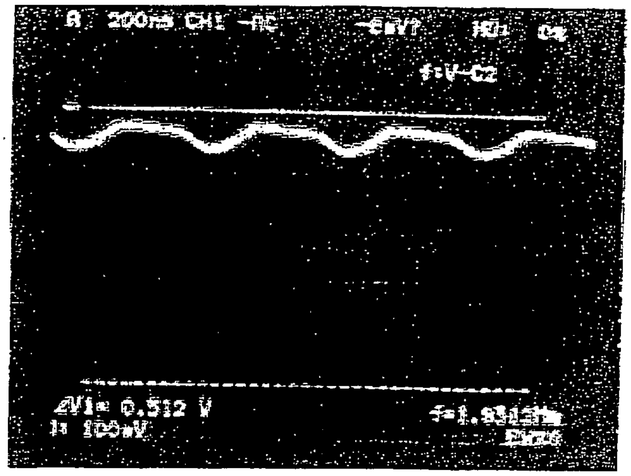


FIG. 8

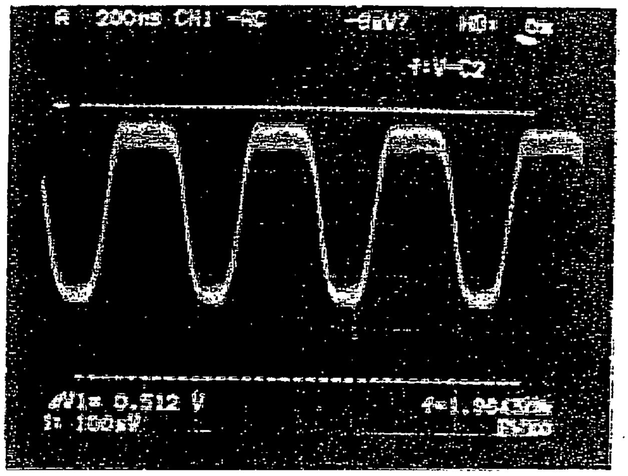


FIG. 9

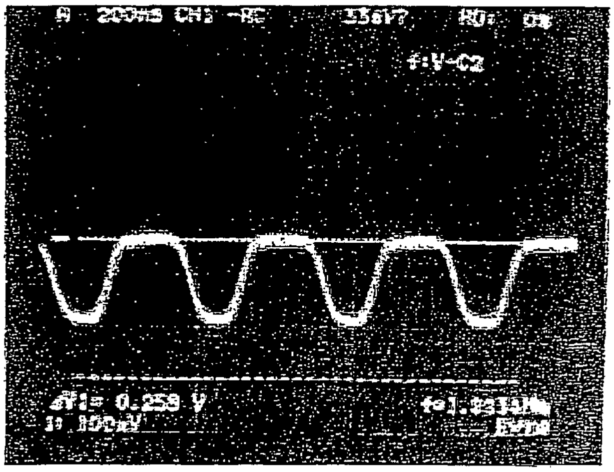

FIG. 10

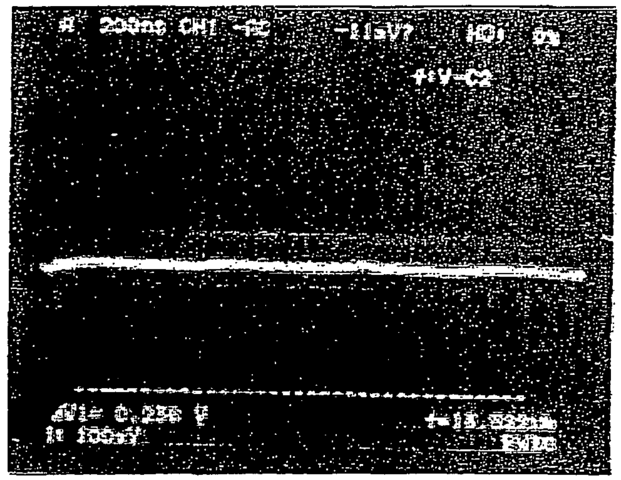

FIG. 11

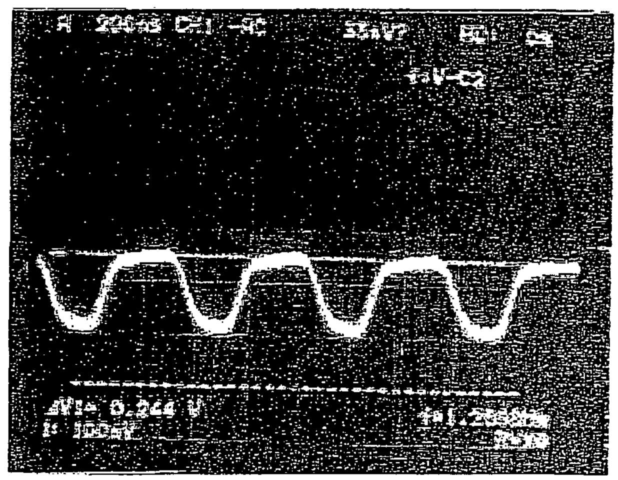

FIG. 12

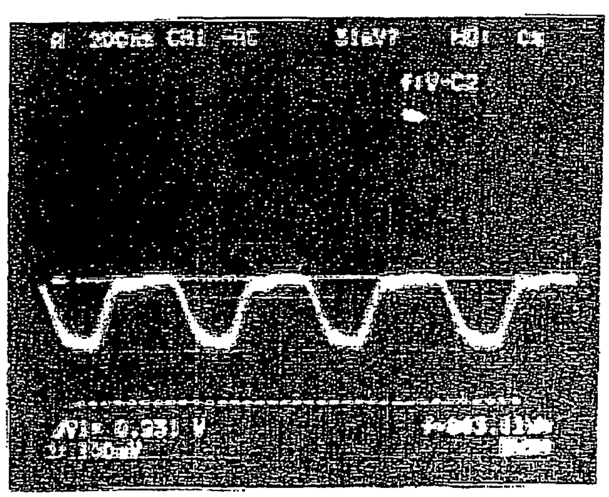

FIG. 13

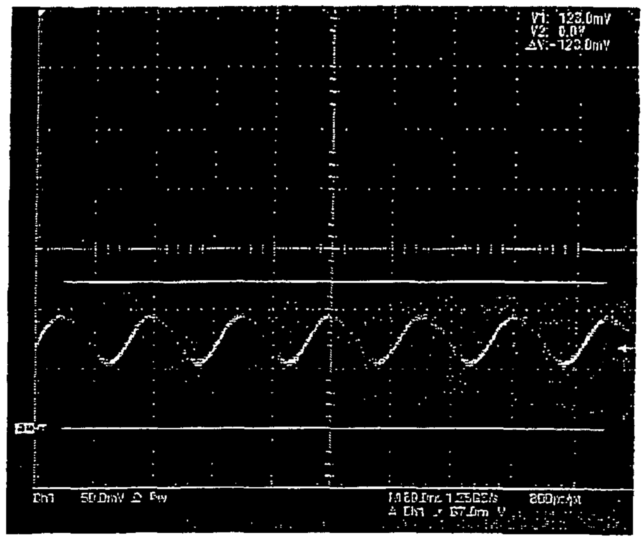


FIG. 14

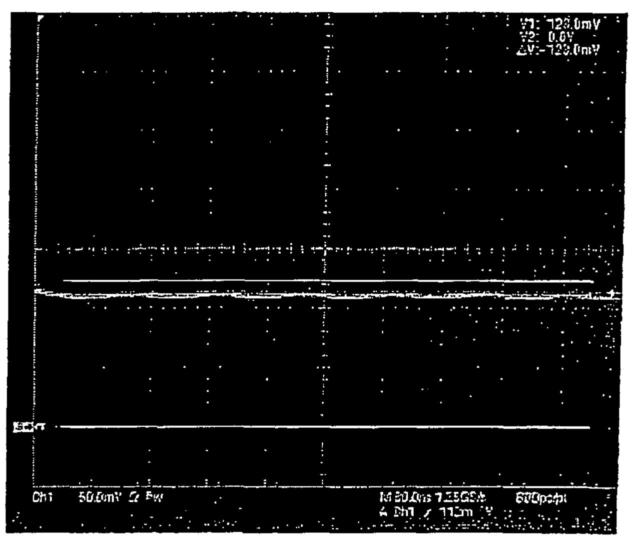

FIG. 15

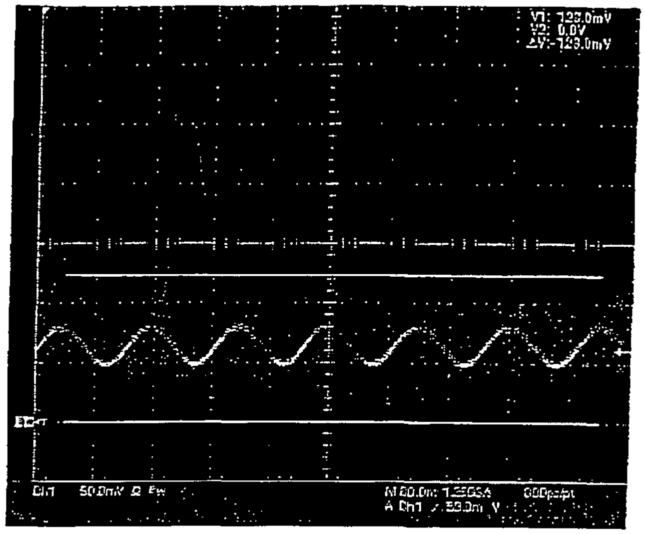

FIG. 16

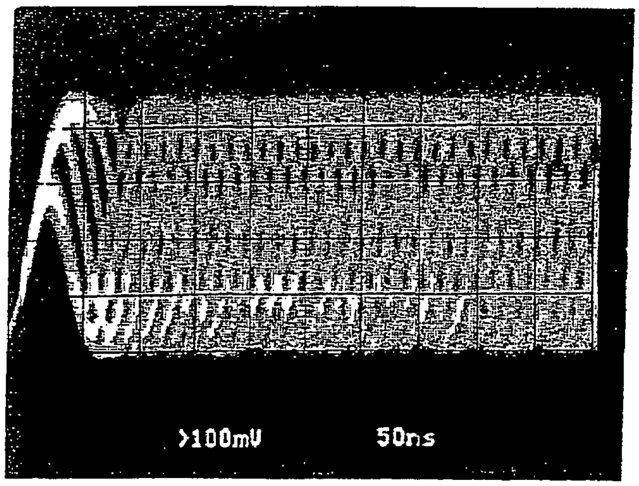


FIG. 17

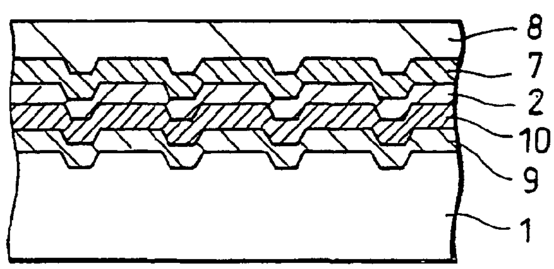

FIG. 18

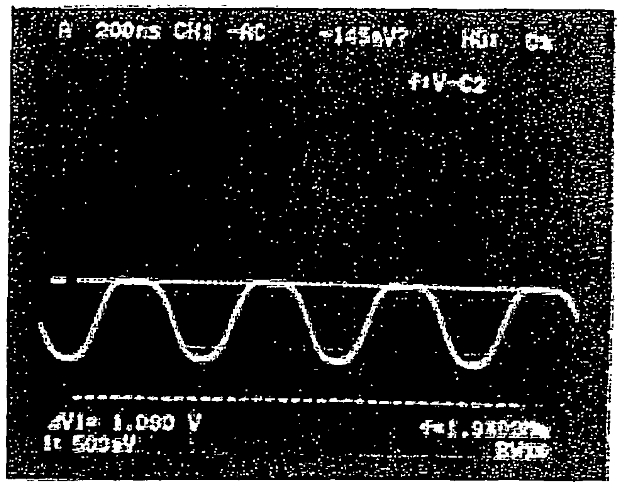


FIG. 19

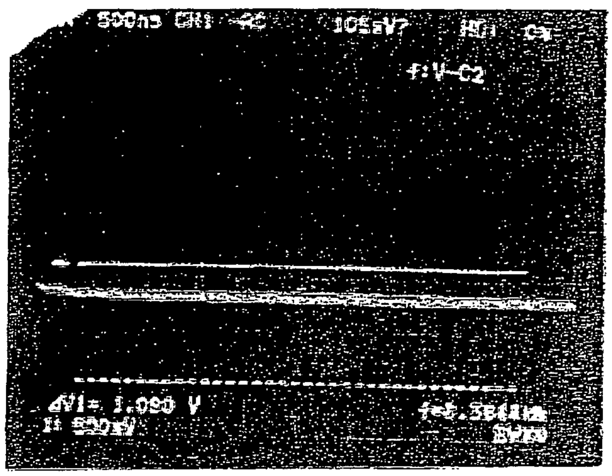


FIG. 20

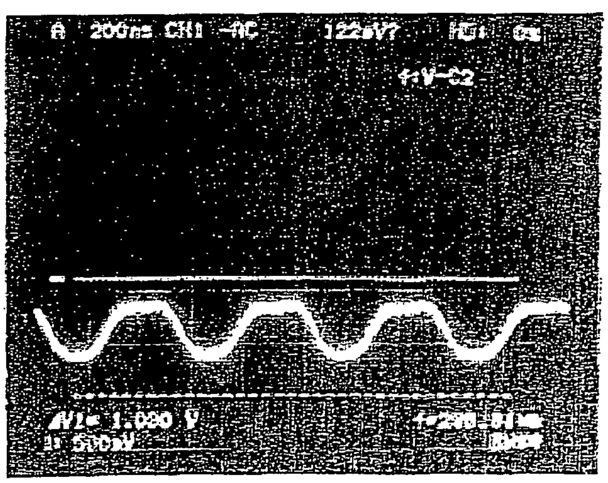

FIG. 21A

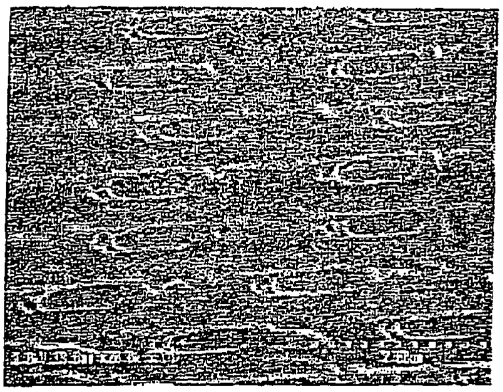

FIG. 21B

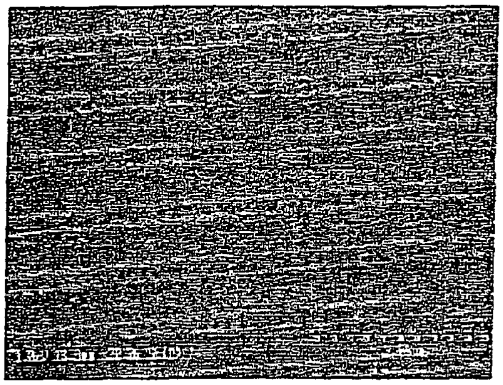

FIG. 21C

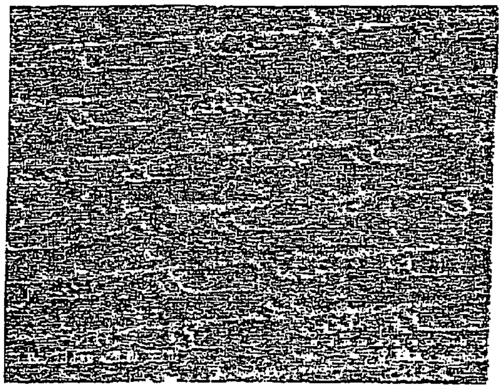

FIG. 21D

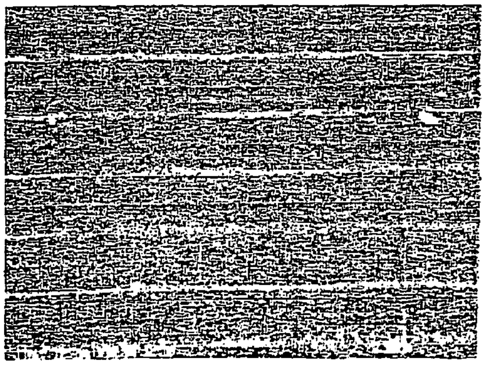

DESCRIPTION OF NUMERALS

1 ... SUBSTRATE

2 ... RECORDING LAYER

3 ... REFLECTIVE LAYER

4 ... PROTECTIVE FILM

5, 6, 7 ... TRANSPARENT PROTECTIVE LAYERS

8 ... LIGHT-TRANSMISSIVE LAYER

## INTERNATIONAL SEARCH REPORT

International application No.
PCT/IB03/00502

A. CLASSIFICATION OF SUBJECT MATTER
Int.Cl$^7$ B41M5/26, G11B7/24, 7/044, 7/0055

According to International Patent Classification (IPC) or to both national classification and IPC

B. FIELDS SEARCHED

Minimum documentation searched (classification system followed by classification symbols)
Int.Cl$^7$ B41M5/26, G11B7/24, 7/004, 7/0055

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)
CA(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br><br>Y | JP 10-95169 A (SONY CORP.),<br>14 April, 1998 (14.04.98),<br>Full text; all drawings<br>(Family: none) | 1,2,4,6,11,<br>12,14,17<br>13 |
| X<br><br>Y | EP 376327 A2 (SONY CORP.),<br>04 July, 1990 (04.07.90),<br>Full text; all drawings<br>& JP 2-179791 A | 1,2,4,6,11,<br>12,14,17<br>13 |
| A | JP 7-61142 A (SONY CORP.),<br>07 March, 1995 (07.03.95),<br>Full text; all drawings<br>(Family: none) | 1,2,4 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 June, 2003 (13.06.03) | 22 July, 2003 (22.07.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

## INTERNATIONAL SEARCH REPORT

International application No.
PCT/IB03/00502

C (Continuation). DOCUMENTS CONSIDERED TO BE RELEVANT

| Category* | Citation of document, with indication, where appropriate, of the relevant passages | Relevant to claim No. |
|---|---|---|
| P,X | EP 1189218 A2 (MITSUI CHEMICALS INC.), 20 March, 2002 (20.03.02), Full text; all drawings & JP 2002-166654 A & US 2002/58119 A1 | 1-17 |
| P,A | JP 2002-363437 A (MITSUI CHEMICALS INC.), 18 December, 2002 (18.12.02), Full text; all drawings (Family: none) | 1-17 |
| Y | WO 95/26381 A1 (THE SECRETARY OF STATE FOR DEFENCE; Defense Research Agency), 05 October, 1995 (05.10.95), Full text; all drawings & JP 9-511001 A1 & US 5792860 A | 1-6,11 |
| X<br><br>A | JP 2-204088 A (Hitachi, Ltd.), 14 August, 1990 (14.08.90), Full text; all drawings (Family: none) | 1,2,4-6,<br>11-14,16,17<br>3,7-10,15 |
| X<br><br>A | JP 2-121133 A (TDK Corp.), 09 May, 1990 (09.05.90), Claims; page 4, upper left column, line 5 to page 5, upper right column, line 4; page 6, upper left column, lines 16 to 17 (Family: none) | 1,2,4-6,<br>11-14,16,17<br>3,7-10,15 |
| Y | JP 63-201926 A (Teijin Ltd.), 22 August, 1988 (22.08.88), Claims; page 4, upper left column, line 5 to page 5, upper right column, line 4; page 6, upper left column, lines 16 to 17 (Family: none) | 1,2,4-6 |
| X | JP 3-124491 A (Teijin Ltd.), 28 May, 1991 (28.05.91), Full text (Family: none) | 1-4,6,11,<br>14-17 |
| X | JP 4-25494 A (Mitsui Petrochemical Industries, Ltd.), 29 January, 1992 (29.01.92), Full text (Family: none) | 1,2,4,6,11 |
| X | JP 6-122276 A (SONY CORP.), 06 May, 1994 (06.05.94), Full text; all drawings (Family: none) | 1,2,4,5 |
| X | JP 5-112077 A (Ricoh Co., Ltd.), 07 May, 1993 (07.05.93), Full text; all drawings (Family: none) | 1,2,4 |

Form PCT/ISA/210 (continuation of second sheet) (July 1998)

**INTERNATIONAL SEARCH REPORT**

International application No.
PCT/IB03/00502

C (Continuation). DOCUMENTS CONSIDERED TO BE RELEVANT

| Category* | Citation of document, with indication, where appropriate, of the relevant passages | Relevant to claim No. |
|---|---|---|
| X | JP 4-83242 A (Sharp Corp.), 17 March, 1992 (17.03.92), Full text; all drawings (Family: none) | 1,2,4,5 |
| X | JP 7-254153 A (Toshiba Corp.), 03 October, 1995 (03.10.95), Full text; all drawings (Family: none) | 1,2,4,5,14 |
| X<br>Y | JP 9-226249 A (Ricoh Co., Ltd.), 02 September, 1997 (02.09.97), Full text; all drawings (Family: none) | 1-6,9-16<br>17 |
| E,Y | JP 2003-59103 A (MITSUI CHEMICALS INC.), 28 February, 2003 (28.02.03), Chemical formula 2 (Family: none) | 1-8,12-17 |
| P,Y | JP 2002-337452 A (Ricoh Co., Ltd.), 27 November, 2002 (27.11.02), Par. Nos. [0026] to [0030] (Family: none) | 1-8,12-17 |
| X<br>Y | JP 11-11020 A (Ricoh Co., Ltd.), 19 January, 1999 (19.01.99), Full text; all drawings (Family: none) | 1-6,12-16<br>17 |
| Y | JP 11-334207 A (Mitsubishi Chemical Corp.), 07 December, 1999 (07.12.99), Full text; all drawings (Family: none) | 1-8,12-17 |
| X<br>Y | WO 01/97218 A1 (Mitsubishi Chemical Corp.), 20 December, 2001 (20.12.01), Full text; all drawings & JP 2002-74741 A & EP 1293974 A1 | 17<br>12-16 |
| X<br>Y | EP 1039448 A2 (Matsushita Electric Industrial Co., Ltd.), 27 September, 2000 (27.09.00), Full text; all drawings & JP 2001-209970 A | 17<br>12-16 |
| A | WO 01/47719 A1 (MITSUI CHEMICALS INC.), 05 July, 2001 (05.07.01), Page 105(1-1); page 109(2-1) & JP 2002-86925 A & EP 1247665 A1 | 1-10 |

Form PCT/ISA/210 (continuation of second sheet) (July 1998)

**INTERNATIONAL SEARCH REPORT**

International application No.
PCT/IB03/00502

**Box I Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II Observations where unity of invention is lacking (Continuation of item 3 of first sheet)**

This International Searching Authority found multiple inventions in this international application, as follows:

(See extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.
☒ No protest accompanied the payment of additional search fees.

Form PCT/ISA/210 (continuation of first sheet (1)) (July 1998)

**INTERNATIONAL SEARCH REPORT**

International application No.
PCT/IB03/00502

Continuation of Box No.II of continuation of first sheet(1)

A feature common to all the claims 1-17 is a constitution in claim 1. Our search has found that this constitution is disclosed in Document 1; JP 10-95169 A (Sony Corp.) 1998. 04. 14, and therefore it is not evidently novel. Consequently the common feature (constitution in claim 1) is not a special technical feature within the meaning of PCT Rule 13.2, second sentence, since the constitution in claim 1 makes no contribution over the prior art.

Therefore, there exists no feature common to all the claims.

There exist no other common features to be considered to be a special technical feature within the meaning of PCT Rule 13.2, second sentence among claims 1-13, 14-16, 17, therefore no technical relationship within the meaning of PCT Rule 13 cannot be found among those different inventions.

A common feature is similarly described in Document 1 also in claims 1-13 and makes no contribution over the prior art, consequently, the common feature (constitution in claim 1) is not a special technical feature within the meaning of PCT Rule 13.2, second sentence.

.No payment of any additional fee is invited because claims 1, 2, 4, 6 are mentioned in Document 1.

Accordingly, invention group of claims (1, 2, 4, 6), invention group of 3, 5, (7, 8), invention group of (9, 10), invention group of 11, (12, 13), 14-16, 17 do not fulfill the requirement of unity of invention.

Regarding a recording medium in claims 1-13, what identifies the constitution of a recording medium is a known dye or the like only, and others are features restricted by properties/functions such as "by a reversible physical change caused by laser irradiation on a compound film single element", "a rewritable type". A constitution that should exist in obtaining such properties/functions is not described in claims.

In addition, a device in claim 17 does not substantially involve a constituent feature as an information medium and is not considered to be different from a conventional recording device.

Form PCT/ISA/210 (extra sheet) (July 1998)